Europäisches Patentamt

European Patent Office

Office européen des brevets

(19)

(11) **EP 1 453 127 A2**

(12) **EUROPEAN PATENT APPLICATION**

(43) Date of publication:
**01.09.2004 Bulletin 2004/36**

(51) Int Cl.$^7$: **H01M 8/02**

(21) Application number: **04001694.1**

(22) Date of filing: **27.01.2004**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **30.01.2003 JP 2003022550**
**11.06.2003 JP 2003166411**
**03.07.2003 JP 2003190982**

(71) Applicant: **MATSUSHITA ELECTRIC INDUSTRIAL CO., LTD.**
**Kadoma-shi, Osaka 571-8501 (JP)**

(72) Inventors:
• **Shibata, Soichi**
**Hirakata-shi, Osaka 573-1149 (JP)**
• **Harada, Mitsuru**
**Katano-shi, Osaka 576-0054 (JP)**

• **Omoya, Kazunori**
**Hirakata-shi, Osaka 573-0084 (JP)**
• **Urata, Takayuki**
**Kawabe-gun, Hyogo 666-0261 (JP)**
• **Hase, Nobuhiro**
**Mino-shi, Osaka 5620041 (JP)**
• **Kusakabe, Hiroki**
**Sakai-shi, Osaka 590-0113 (JP)**
• **Ohara, Hideo**
**Katano-shi, Osaka 576-0016 (JP)**
• **Ito, Koichi**
**Izumi-shi, Osaka 594-1118 (JP)**

(74) Representative: **Schirdewahn, Jürgen, Dr.**
**JUNG HML,**
**Schraudolphstrasse 3**
**80799 München (DE)**

(54) **Polymer electrolyte fuel cell; semifinished product thereof and a method of producing**

(57) The present invention is directed to a polymer electrolyte fuel cell including: a hydrogen ion conductive polymer electrolyte membrane; a pair of electrodes sandwiching the membrane; a pair of conductive separators each having a gas flow channel means, one of which supplies a fuel gas to one of the electrodes and the other supplies an oxidant gas to the other electrode; and gaskets, each of which is sandwiched between the conductive separator and the hydrogen ion conductive polymer electrolyte membrane to surround the periphery of the electrode and the gas flow channel means, wherein a gram of the conductive separator or the gasket, which is kept immersed in water of 80 to 100°C for 50 hours, leaches into the water not more than 300 μg of TOC, not more than 50 μg of ammonium ion, not more than 50 μg of chloride ion, not more than 20 μg of bromide ion and not more than 10 μg of sulfite ion.

F I G. 1

**Description**

BACKGROUND OF THE INVENTION

The invention concerns a fuel cell using a polymer electrolyte simultaneously generates electric power and heat by electrochemically reacting a fuel gas containing hydrogen and an oxidant gas containing oxygen such as air.

The fuel cell includes a polymer electrolyte membrane for selectively transporting hydrogen ions and a pair of electrodes arranged to sandwich the membrane. This is called an MEA (membrane-electrode assembly). Each of the electrodes includes a catalyst layer mainly composed of.carbon powder carrying thereon a platinum-group metal catalyst and a gas diffusion layer having both gas permeability and electron conductivity formed on the surface of the catalyst layer. The gas diffusion layer is made of a porous material such as carbon paper or a carbon cloth.

Next to the MEA, a conductive separator comprising a conductive carbon material such as graphite or a metallic material is arranged to mechanically secure the MEA and electrically connecting adjacent MEAs in series. In a part of the separator contacting the MEA, a gas flow channel or a gas flow channel means is formed to supply a reaction gas and carry generated gas or excessive gas to and from the electrode surface. The gas flow channel may be provided independently from the separator, but in general, a groove or groove means is formed on the surface of the separator to function as the gas flow channel or gas flow channel means.

In order to prevent the supplied reaction gas from leaking out of the battery or two reaction gases from mixing, a gasket is arranged to surround the periphery of the electrodes and the gas flow channel or gas flow channel means on the separator or manifold holes formed in the separator for passing the gases through. The gasket is arranged to be sandwiched between the separator and the MEA or between the separators sandwiching the MEA.

In general, 10 to 200 MEAs and separators are alternately stacked to form a cell stack. An end plate is arranged on each end of the cell stack with the intervention of a current collector plate and an insulating plate and they are secured with fastening rods at the both ends.

In a polymer electrolyte fuel cell comprising such a cell stack, the separator needs to have high electric conductivity, high hermeticity to the fuel gas and high corrosion resistance against oxidation-reduction reaction between hydrogen and oxygen, i.e., resistance to acids. For this reason, the separator has conventionally been made of a vitreous carbon plate which is cut to form a gas flow channel or a gas flow channel means on its surface. In an alternative technique for forming the separator, a conductive carbon material such as natural graphite or artificial graphite is mixed with a binder material, e.g., a thermoplastic resin such as polyethylene or polyvinyl alcohol or a thermosetting resin such as a phenol resin or an epoxy resin, and the mixture is molded into a separator by hot press molding, transfer molding or injection molding at a temperature where the resin is not graphitized (Japanese Laid-Open Patent Publication No. SH060-246568 or HEI9-505002).

According to the technique of forming the separator by cutting the vitreous carbon plate, however, the vitreous carbon plate itself is expensive and the cutting process is hard to conduct at low cost. Therefore, it is difficult to put the technique into practice.

On the other hand, according to the technique of forming the separator by molding the conductive carbon material with the thermoplastic or thermosetting resin added, the required conductivity and mechanical strength can be given to the separator by optimizing the kind and amount of resin used. Further, the molding methods such as hot press molding, transfer molding and injection molding are excellent in mass production because they allow high-speed production of the separator as compared with the cutting process. Moreover, if the thermosetting resin is used, the curing time can be reduced by adding a curing agent or an accelerator.

However, it has been known that the separator made of the conductive carbon material and the resin causes, when exposed to a high temperature vapor for a long time, leaching of impurities contained in the conductive carbon material, as well as functional groups or unreacted groups separated or decomposed from the resin.

For example, conductive carbon materials such as natural graphite, artificial graphite and Ketjen Black contain about 30 ppm of sulfide as impurities, which may possibly be leached out as sulfate ions or sulfite ions.

Further, a bisphenol-A type epoxy resin, which is one of the thermosetting resins usable as a binder, will have a chloro group at an unreacted position during its manufacture. Therefore, chloride ions are leached from the resin after curing. In a like manner, a brominated bisphenol-A type epoxy resin will leach bromide ions. Further, since an amine based compound is generally used as the curing agent or the accelerator required for promoting the mass production, ammonia or ammonium ions will be leached out of the resin after curing. If a thermoplastic fluorocarbon resin is used, fluoride ions are leached out. If a novolak phenol type resin is used, organic substances such as free phenol, formaldehyde, alcohol and unreacted additives to resin, and ions such as ammonium ions may be leached out during the operation of the fuel cell (Japanese Laid-Open Patent Publication No. 2002-8676).

The ions and the organic substances leached out of the separator deteriorate the catalytic performance of the platinum-group metal catalyst and ion conductivity of the polymer electrolyte membrane used in the fuel cell. Therefore, the leached-out components, even if the amount is small, accumulate during long-term operation, which will deteriorate the performance of the fuel cell.

Some separators contain a thermoplastic resin as the binder. However, for example, a polyvinyl chloride resin leaches chloride ions, which is inconvenient because they are adsorbed on the surface of the metallic catalyst.

Material for the gasket used in the polymer electrolyte fuel cell needs to have resistance against a cell operation temperature (60 to 100°C), elasticity that is closely correlated with sealing property, as well as formability. Other than these properties, resistance to acids is also required for at least a part of the gasket contacting the polymer electrolyte membrane which becomes highly acidic when it contains water. From this aspect, rubber material having excellent resistance to acids is used as the gasket. For example, silicone rubber, fluorocarbon rubber, polyisopropylene polymer type rubber (Japanese Laid-Open Patent Publication No. 2003-7313) and perfluorocarbon polymers are used.

However, if the fluorocarbon rubber, which has high hardness, is used to form the gasket, it needs to be compressed with high dimensional accuracy to give the required gas sealing property with stability. That is, the cell components such as the separator and the gas diffusion layer need to be formed with high dimensional accuracy, which leads to an increase in cost.

In contrast to this, a sealing material made of elastic ethylene-propylene-diene rubber (EPDM) is used as a gasket that can be formed with little concern for the dimensional accuracy. In addition, there may be adopted a technique of using butyl rubber, a styrene-butadiene copolymer, an ethylene-organic acid copolymer, natural rubber, butadiene rubber or the like (Japanese Laid-Open Patent Publication No. 2000-123145), or a technique of using an adhesive in place of the rubber-made sealing member (Japanese Laid-Open Patent Publication No. HEI 9-289029).

As the gasket, a sealing material configured into the gasket form as described above is often used. According to other techniques, a sealing material preliminarily configured into the gasket form is adhered to the separator or MEA by using and adhesive, or alternatively, the sealing material is directly formed on the separator. Moreover, there has been also proposed a gasket molded in the form of an O-ring and a gasket having a foamed sponge layer, which eliminates the concern for the dimensional accuracy (Japanese Laid-Open Patent Publication No. HEI 7-312223).

Thus, the conventional gaskets of various shapes have been fabricated by molding a single kind or different kinds of materials.

However, it has been known that the sealing material conventionally used as the gasket of the fuel cell causes, when exposed to a high temperature vapor for a long time, separation or decomposition of functional groups and unreacted groups from the polymer used as the material, and unreacted components and impurities from an additive used for molding the gasket. Thereby, these components are leached out.

For example, commonly used rubber is vulcanized to increase elasticity and leaches sulfur components as sulfite ions. Halide ions are also leached out. The fluorocarbon rubber leaches fluoride ions. From butyl rubber added with chlorine or bromine at the terminal group to increase the vulcanizing speed, chloride ions and bromide ions are separated due to hydrolysis. Further, a plasticizer added to enhance the elasticity or a flame retardant added to improve safety in case of ignition, contains halide ions and ammonia, which are leached out of the gasket. Moreover, such. additives and monomers that are not linked in rubbers or polymers, of small molecular weight are also leached out.

Thus, the ions and organic substances leached out of the separator and the gasket cause deterioration in the fuel cell performance as described below.

First, it has been pointed out that the fuel cell performance deteriorates due to an increase in conductivity of cooling water or generated water (Japanese Laid-Open Patent Publication No. 2002-8676).

Second, effective reaction areas of the platinum-group catalyst in the catalyst layer of the electrode in the fuel cell are reduced by ion species that form a complex together with platinum-group metal, such as halogen ions including chloride ions, or those having high adsorption property to the platinum-group metal surface such as ammonia and sulfite ions.

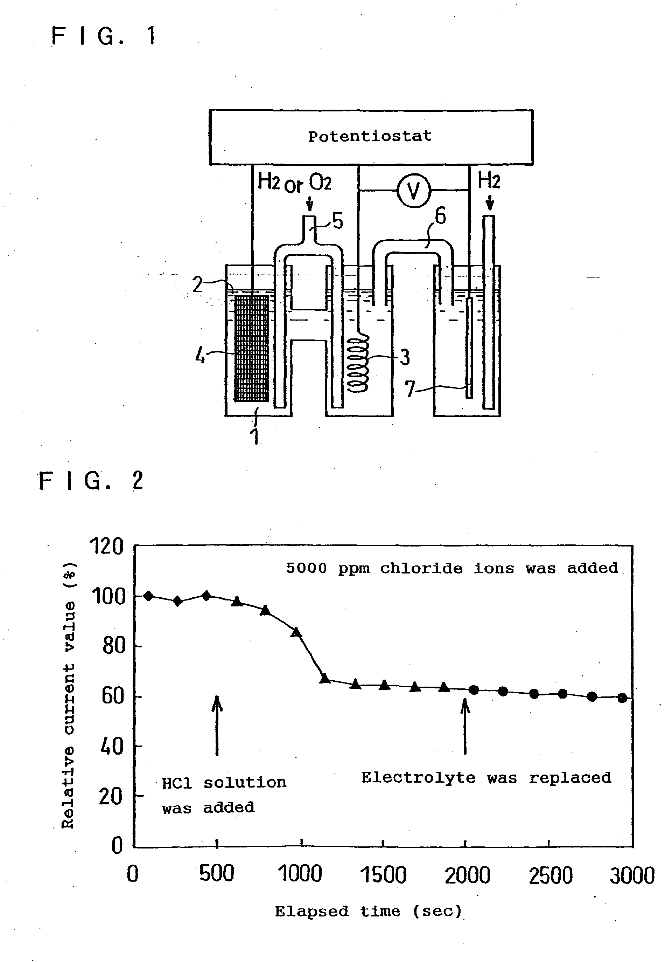

In order to ascertain the influence of the ion species leached out of the separator and the gasket on the platinum electrode, the inventors of the present invention carried out an oxidation-reduction reaction test using an apparatus shown in FIG. 1.

FIG. 1 is a schematic view illustrating a structure of an apparatus for the oxidation-reduction reaction test.

As an electrolyte 2 in a reaction bath 1, 500 ml of an aqueous solution of 1 N sulfuric acid was used. A platinum wire 3 of 1 mm diameter controlled to have an area of 1 cm$^2$ was used as a working electrode and a platinum mesh 4 in a size of 5 cm $\times$ 10 cm was used as a counter electrode. Further, an RHE (reversible hydrogen electrode) 7 was used as a reference electrode. A fuel supplier 5 for supplying an oxygen gas or hydrogen gas was arranged in the vicinity of the platinum wire 3 and the platinum mesh 4. Reference numeral 6 denotes a salt bridge.

From the fuel supplier 5, oxygen gas was supplied and bubbled near the working electrode for oxygen reduction. In the same manner, hydrogen gas was supplied and bubbled near the working electrode for hydrogen oxidation. After bubbling the desired gas for 30 minutes or longer, a spontaneous potential was determined at a point where a potential of the working electrode was stabilized. After being stabilized, the potential of the working electrode was controlled by a potentiostat to +100 mV for the oxidation and -300 mV for the reduction with respect to the spontaneous potential and then a current value after 3 hours was measured.

Then, a solution containing ion species that may possibly be leached out of the separator and the gasket was added in the reaction bath 1 and a current value after 3 hours was measured. Then, the electrolyte was replaced with an aqueous solution of 1 N sulfuric acid and a current value after 3 hours was measured. The solution added in this test contained hydrogen sulfide, sulfurous acid, hydrogen fluoride, hydrogen chloride, hydrogen bromide and ammonium sulfate. Their concentrations in the electrolytic solution were varied among 100, 500, 1000 and 5000 ppm.

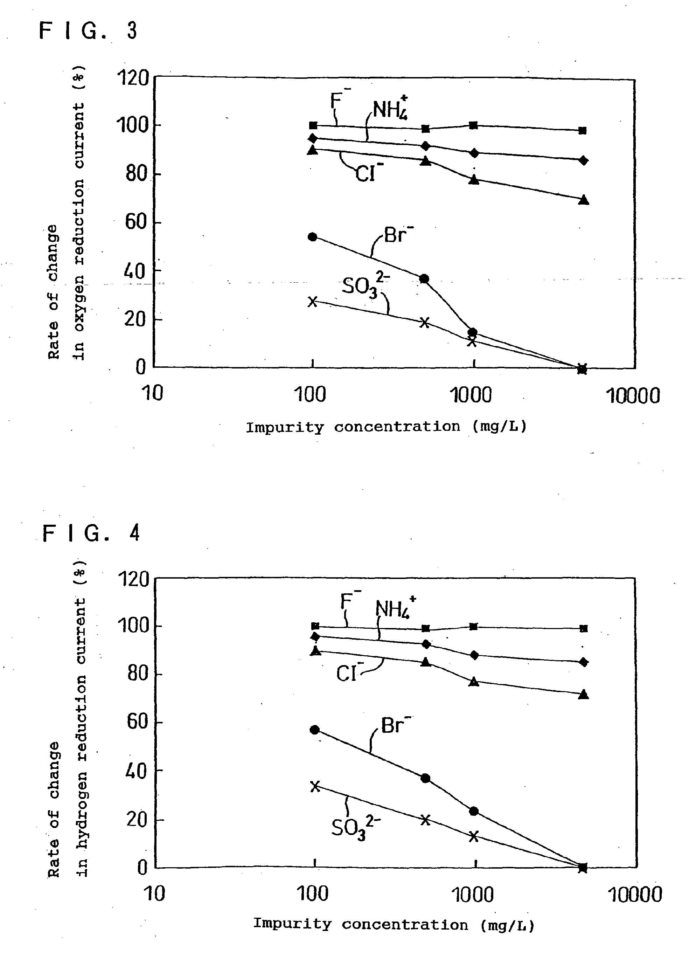

FIG. 2 shows a variation in oxygen reducing current with time in the experiment where 5000 ppm of chloride ions where added, in which an initial current value is regarded as 100 %. The figure indicates that the addition of hydrochloric acid (HCl) after 500 seconds from the initiation of the experiment caused a decrease in current value by 40 %, i.e., the current value reduced to -0.12 mA/cm$^2$ (black triangle in the figure) from the initial value of -0.2 mA/cm$^2$ (black diamond in the figure). Then, the electrolyte was replaced after 2,000 seconds from the addition of the hydrochloric acid, but no changes were observed in the current value (black circle in the figure).

The results indicate that, at the oxygen reducing potential, the chloride ions are adsorbed on the platinum surface to block an active site where the oxygen reduction occurs, reducing the effective reaction area of the platinum surface.

FIG. 3 shows a relationship between the oxygen reducing current value and impurity concentration in the electrolyte, in which the oxygen reducing current value in an impurity-free electrolyte is regarded as 100 %. FIG. 3 indicates that the addition of sulfite ions, chloride ions, bromide ions and ammonium ions as the impurities to the electrolyte caused a decrease in current value with an increase in addition amount of the impurities. It is also indicated that the addition of fluoride ions did not change the current value.

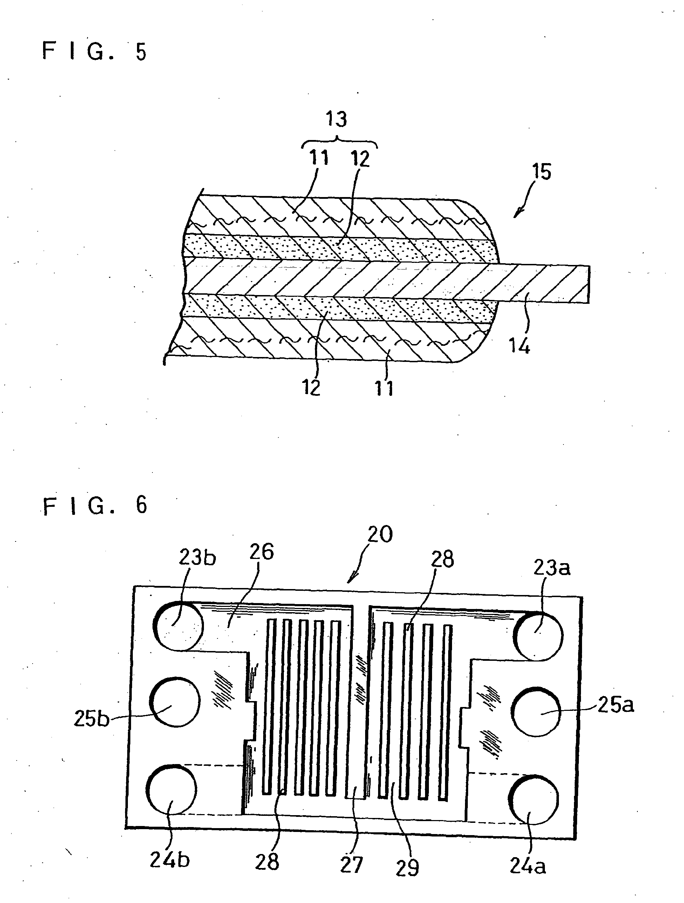

FIG. 4 shows a relationship between a hydrogen oxidizing current value and impurity concentration in the electrolyte, in which a hydrogen oxidizing current value in an impurity-free electrolyte is regarded as 100 %. As is the case of the oxygen reduction, it is found that the addition of sulfite ions, chloride ions, bromide ions and ammonium ions as the impurities to the electrolyte caused a decrease in current value with an increase in addition amount of the impurities. It is also indicated that the addition of fluoride ions did not change the current value.

These results show that, among the ion species leached out of the separator and the gasket, sulfite ions chloride ions, bromide ions and ammonium ions cause the reduction in effective reaction area of the platinum surface both in the anode and cathode reactions.

Third, the organic substances are adsorbed into the pores of the catalyst layer, on the surface of the polymer electrolyte membrane or to the functional group of the polymer electrolyte, and thereby to reduce the mobility of reaction gases and generated water in the catalyst layer.

In order to avoid the deterioration in fuel cell performance as described above, Japanese Laid-Open Patent Publication No. 2002-8676 proposes the use of a separator that has been subjected to cleaning in hot water of 90°C for 500 hours until the hot water shows electric conductivity of 50 µS/cm or lower.

However, even if the electric conductivity of the water for cleaning the separator or the gasket is determined, it is impossible to evaluate the amounts of the leached organic substances that are not electrolytic. Further, water having the electric conductivity of 50 µS/cm contains ion species of several ppm, but as described above, the influence on the fuel cell performance varies depending on the kind of ion species leached. In the case where only the ion species that do not affect the fuel cell performance are leached, the fuel cell performance will not deteriorate even if the conductivity of the cleaning water is 50 µS/cm or higher. To the contrary, even if the conductivity is 50 µS/cm or lower, the ion species that greatly deteriorate the fuel cell performance may possibly be leached in the cleaning water.

Therefore, to ensure long-term reliability of the fuel cell, controlling the conductivity of the water for cleaning the separator or the gasket is insufficient and the amounts of each component leached out of the separator or the gasket need to be controlled.

BRIEF SUMMARY OF THE INVENTION

The present invention relates to a polymer electrolyte fuel cell for use in portable power sources, electric vehicle power sources, domestic cogeneration systems and the like, particularly to a separator and a gasket in the fuel cell.

The invention concerns the fuel cell itself, a semifinished product of the fuel cell and a method for producing a specific embodiment of the fuel cell.

General object of the invention is to provide a fuel cell having long-term reliability. A more specific object of the present invention is to reduce deterioration of the performance of the fuel cells caused by components leaching out during use of the fuel cell as discussed above. In order to reduce the amount of the components allowed to leach out into the fuel cell, particularly the separator and/or the gasket or materials thereof are selected by special choice or preparation. Further, specifically or alternatively a material is provided capable of trapping the components that deteriorate the fuel cell performance, which material is added to the separator, the gasket or materials thereof.

This objects are attained by claims 1 and 29. A semifinished product of a polymer electrolyte fuel cell attaining the above objects is defined in claim 15. A specific method of producing a fuel cell is defined in claim 34.

According to the present invention, among the components to be leached out of the conductive separator or the gasket, the amounts of particular ones that cause deterioration in performance of the fuel cell are controlled. It is desirable that the material of the conductive separator or the sealing material for forming the gasket does not contain such components in amounts over the predetermined values. However, in reality, such materials are few in number. Therefore, in practice, it is effective even more to clean the conductive separator, the gasket or the materials thereof to reduce the particular components below the predetermined values.

More specifically, it is preferred that the conductive separator or the gasket or the material(s) of which they consist has (have) been subjected to:

(1) immersion in water kept at 80°C or higher or an aqueous solution having pH of -0.3 or higher for 10 hours or longer;
(2) immersion in water kept at 80°C or higher while bubbling therein a gas containing carbon dioxide for 10 hours or longer;
(3) ultrasonic cleaning in water kept at 80°C or higher or an aqueous solution having pH of -0.3 or higher for an hour or longer; or
(4) exposure to a gas having a temperature of 80°C or higher and a relative humidity of 100% for 10 hours or longer.

The above-mentioned treatments may be carried out to the separator and the gasket integrated in one piece.

The spontaneous potential signifies a potential difference of a cathode or an anode relative to a reversible hydrogen electrode in a stable state where no potential is applied to both of the cathode and the anode.

The conductive separator may have been functioned as an anode for electrolysis. The electrolysis is carried out in water or an aqueous solution having pH of -0.3 or higher in a hydrogen atmosphere for 0.5 hours or longer while applying to the anode a potential of +0.05 to +0.2 V relative to a spontaneous potential.

The conductive separator may have been functioned as a cathode for electrolysis. The electrolysis is carried out in water or an aqueous solution having pH of -0.3 or higher for 0.5 hours or longer while applying to the cathode a potential of -0.1 V or lower relative to a spontaneous potential.

The conductive separator preferably comprises a conductive carbon material and a binder resin.

Where 1 g of the conductive carbon material is kept immersed in water of 80 to 100°C for 50 hours, it is prefered that not more than 300 µg of TOC, not more than 50 µg of ammonium ions, not more than 50 µg of chloride ions, not more than 20 µg of bromide ions and not more than 10 µg of sulfite ions are leached into the water.

The conductive carbon material has preferably been subjected to:

(1) sintering in an inert gas atmosphere or a vacuum atmosphere of $10^{-1}$ Pa or lower at a temperature of 500°C or higher;
(2) immersion in water kept at 80°C or higher or an aqueous solution having pH of -0.3 or higher for 10 hours or longer;
(3) immersion in water kept at 80°C or higher while bubbling therein a gas containing carbon dioxide for 10 hours or longer;
(4) ultrasonic cleaning in water kept at 80°C or higher or an aqueous solution having pH of -0.3 or higher for an hour or longer; or
(5) exposure to a gas having a temperature of 80°C or higher and a relative humidity of 100% for 10 hours or longer.

Where 1 g of the resin is kept immersed in water of 80 to 100°C for 50 hours, it is preferred that not more than 300 µg of TOC, not more than 50 µg of ammonium ions, not more than 50 µg of chloride ions, not more than 20 µg of bromide ions and not more than 10 µg of sulfite ions are leached into the water.

It is preferred that the gasket and the conductive separator are integrated in one piece.

The conductive separator preferably comprises the conductive carbon material and the binder resin, and further contains a trapping agent capable of trapping at least either an anion or a cation.

The gasket preferably comprises a trapping agent capable of trapping at least either an anion or a cation.

The trapping agent preferably comprises an organic ion exchanger, an inorganic ion exchanger, an organic adsorbent or an inorganic adsorbent and has a particle size distribution in which particles having a particle diameter of 0.1 to 10 µm account for 50 % or higher on the numeric basis.

The conductive separator preferably contains 1 to 10 parts by weight of the trapping agent with respect to 100 parts by weight of the binder resin.

The trapping agent may form a coating film on the surface of the conductive separator.

The coating film preferably has a thickness of 1 to 50 µm.

The present invention further relates to a method for manufacturing the above-described polymer electrolyte fuel cell, comprising the steps of mixing a conductive carbon material, a binder resin and a trapping agent capable of trapping at least either an anion or a cation and molding the obtained mixture into a conductive separator by compression molding, injection molding or transfer molding.

While the novel features of the invention are set forth particularly in the appended claims, the invention, both as to organization and content, will be better understood and appreciated, along with other objects and features thereof, from the following detailed description taken in conjunction with the drawings.

BRIEF DESCRIPTION OF THE SEVERAL VIEWS OF THE DRAWING

FIG. 1 is a schematic view illustrating a structure of an apparatus for an oxidation-reduction reaction test.

FIG. 2 is a graph illustrating the influence of chloride ion on an oxygen reducing current on a platinum electrode.

FIG. 3 is a graph illustrating the influence of various kinds of ions on an oxygen reducing current on a platinum electrode.

FIG. 4 a graph illustrating the influence of various kinds of ions on a hydrogen oxidizing current on a platinum electrode.

FIG. 5 is a vertical sectional view illustrating a structure of an MEA.

FIG. 6 is a front view showing a cathode-side separator.

FIG. 7 is a front view showing an anode-side separator.

FIG. 8 is a rear view showing a cathode-side separator.

FIG. 9 is a front view of the MEA observed from the anode side.

FIG. 10 is a graph illustrating leaching test results of chloride ions contained in a separator or a gasket.

FIG. 11 is a front view of another MEA observed from the anode side.

FIG. 12 is a front view showing another cathode-side separator.

FIG. 13 is a front view showing another anode-side separator.

FIG. 14 is a rear view showing another cathode-side separator.

FIG. 15 is a front view showing a cathode-side gasket.

FIG. 16 is a front view showing an anode-side gasket.

DETAILED DESCRIPTION OF THE INVENTION

Embodiment 1

A feature of a fuel cell according to this embodiment is to limit the amounts of specific impurities to be leached out of a conductive separator that deteriorate the fuel cell performance, and to remove the impurities, if contained in the separator, to a certain level.

Examples of the impurities leached out of the separator include sulfite ions, chloride ions, bromide ions, ammonium ions and TOC (total organic carbon). The TOC signifies a carbon amount in organic substances that exist in water, which may be referred to as organic carbon. Hereinafter, the TOC may be merely referred to as an organic substance.

The impurities are leached and accumulated little by little during long-term operation of the fuel cell, proceeding the deterioration of the fuel cell performance. However, in a conductive separator which has been subjected to a desired removal treatment, the contents of ions and organic substances are drastically reduced. Therefore, a fuel cell using the conductive separator maintains high fuel cell performance.

The conductive separator preferably comprises a conductive carbon material and a binder resin.

Examples of the conductive carbon material include graphites such as natural graphite, artificial graphite and expanded graphite, mesophase carbon, carbon blacks such as acetylene black and Ketjen Black, vitreous carbon, etc., which are not particularly limitative. In addition, as a conductive agent, may be added a fibrous carbon filler comprising carbon nanotubes or a metallic filler comprising silver, copper, aluminum, iron, nickel, lead, tin, titanium, zinc, tungsten, cobalt, molybdenum or alloys thereof.

Examples of the binder resin include thermoplastic resins such as polyethylene, polystyrene, polypropylene, polymethyl methacrylate, polyethylene terephthalate, polybutylene terephthalate, polyether sulfone, polycarbonate, polyoxymethylene, polyamide, polyimide, polyamide imide, polyvinyl alcohol, polyvinyl chloride, fluorocarbon resin, polyphenyl sulfone, polyether ether ketone, polyether ketone, polysulfone, polyalylate, polyether imide, polymethyl pentene, etc.

Examples of the binder resin further include thermosetting resins, for example: amino resins such as urea resin, melamine resin and guanamine resin; epoxy resins such as bisphenol type epoxy resin, novorak type epoxy resin, alycyclic type epoxy resin, biphenyl type epoxy resin, naphthalene type epoxy resin, glycidyl ester type epoxy resin, glycidyl amine type epoxy resin and halogenated bisphenol type epoxy resin; phenol resins such as resol type phenol resin and novorak type phenol resin; and polyimide resins. These may be used alone or in combination of two or more kinds.

Where the epoxy resin is used, an epoxy diluent may be added as appropriate. Examples thereof include styrene oxide, glycidyl ethers of alcohols such as butyl glycidyl ether, glycidyl esters of carboxylic acid or silanes such as glycidoxypropyl trimethoxysilane.

A curing agent or a curing catalyst may also be used. Examples thereof include amines, polyamines, amine adducts, amine salts, polyamides, imidazol derivatives, dicyandiamide, urea compounds, melamine derivatives, Lewis acid salts, ketimine, acid hydrazides, acid anhydrides, polythiols, sulfide derivatives, phenol resins, amino resins, etc.

Further, for the purpose of adjustment of physical properties of the separator such as strength and toughness, may be mixed as appropriate: rubbers such as polybutadiene, polychloroprene and polynitrile butadiene; thermoplastic resins such as polystyrene, polyvinyl acetate, polyvinyl butyral, polyacrylic acid ester, polyester methacrylate, polyvinyl chloride, celluloses, polyethers, polyesters, polyamides and polycarbonate; phenol resins; amino resins; urethane resins; silicone resins; polyester resins; or polyimide resins.

Moreover, a flame retardant for improving safety of the separator may optionally be added. Examples thereof include decabromodiphenyl ether, bromobisphenol S, TBBA derivatives, hexabromobenzene, pentabromotoluene, allyloxybromobenzene, dibromophenol, dibromocresol, tribromophenol, monoepoxy compounds, bromophenoxy ethanol, etc.

As discussed in the above, the ion species or the organic substances leached out of the separator cause the deterioration in performance of the electrodes or the polymer electrolyte, and hence degrade the fuel cell performance. Therefore, there is a need to ascertain a relationship between the amounts of the leached components and the actual fuel cell performance to specify allowable amounts of the components, based on which the leached amounts are controlled.

According to the present invention, when a specimen cut from the conductive separator is kept immersed completely in water of 80 to 100°C so as not to contact air for 50 hours, the amounts of specific components leached into water from 1 g of the conductive separator should be not more than 300 µg of TOC, not more than 50 µg of ammonium ions, not more than 50 µg of chloride ions, not more than 20 µg of bromide ions and not more than 10 µg of sulfite ions. If any of the above components are leached in an amount over the specified value, the performance of the fuel cell deteriorates. In a conductive separator in which any of the components are leached in an amount over the specified value in use, the fuel cell will suffer a decrease in voltage, for example, after 10,000 hour operation.

At present, the operating temperature of the fuel cell is as high as 60 to 90°C. Depending on the kind, the binder resin used in the separator can be resistant to a wide temperature range of about 150 to 400°C. Further, in some cases, soluble components in the resin such as separated organic substances are not leached out until the temperature reaches to a certain level. In view of these facts, a suitable temperature of water used for the leaching test of the separator specimen is 80 to 100°C, which is close to the upper limit of the operating temperature of the fuel cell.

After a while from the initiation of the leaching test, there are observed variations in leached amounts depending on the shapes of the specimens. However, after 50 hours have passed, the leached amounts are settled to a similar level irrespective of the surface areas and shapes of the specimens. Therefore, suitable testing time is 50 hours or longer. In view of mass production, the minimum testing time is preferred. Accordingly, the optimum testing time is 50 hours.

After the leaching test, the amounts of the components leached into water may be determined by various methods. The amounts of the ion components may be determined by ion chromatography, atomic absorption analysis, inductively coupled plasma mass spectrometry or inductively coupled plasma emission spectroscopy, and the TOC amount may be determined by TOC measurement systems. Their amounts may be determined by any method as long as concentrations of trace elements leached into water are measured.

More preferably, the amounts of the leached components are not more than 100 µg of TOC, not more than 1 µg of ammonium ions, not more than 1 µg of chloride ions, not more than 5 µg of bromide ions and not more than 10 µg of sulfite ions.

Next, explanation is given of how to prepare a separator causing less leaching of the ion species and the organic substances.

A first method is to extract the ion species and the organic substances by cleaning a separator molded from a mixture of a conductive carbon material and a resin. Chemical species carrying charges, such as ions, have high affinity for molecules of a medium having relatively large dipole moment and high electron donating/accepting properties, such as water molecules, and hence they easily generate solvated ions. Therefore, water is most suitably used as a medium for the cleaning. The water for the cleaning preferably has electric conductivity of 1 µS/cm or lower with a view to accelerating the ion extraction and preventing secondary pollution of the ,separator. If ultrapure water having electron conductivity of 0.1 µS/cm or lower is used, greater cleaning effect is expected.

The organic substances, which are another components leached from the separator, are generally neutral molecules having small dipole moment with the exceptions of organic acids such as acetic acid. Therefore, an organic solvent is suitably used for extracting the organic substances. However, most of the organic solvents are capable of dissolving the resin for forming the separator, which are not suitable as the medium for cleaning the separator in some cases. Therefore, for the extraction of the organic substances, water or an aqueous solution may be used as the cleaning medium in the same manner as the ion extraction. The organic substances such as free phenols, alcohols and formaldehyde, which will be leached out during the operation of the fuel cell, have high solubility in water. Therefore, the required cleaning effect is obtained even if water or an aqueous solution is used as the cleaning medium.

It is more preferred that the cleaning medium is used in a larger amount. However, it is at least necessary to use the cleaning medium in an amount enough to submerge the separator completely in the cleaning medium.

If the separator contains an amine based resin that causes leaching of ammonia, acid is added to the water to prepare an acid solution. Using the acid solution as the cleaning medium, the ammonium ions are extracted at higher speed due to neutralization, permitting enhancement of the cleaning effect.

The acid used herein needs to be free from ionic components that may deteriorate the performance of the fuel cell. Sulfuric acid and carbonic acid meet the requirement. However, if sulfuric acid of high concentration is used, halogen ions such as chloride and bromide ions and the organic substances may decrease in solubility to the cleaning medium, the separator may deteriorate in resistance, or safety during the cleaning operation may be impaired. Therefore, the cleaning medium preferably has pH of -0.3 or higher. More preferably, the pH is in the range of 0 to 4.

Since carbon dioxide is a gas supplied to an anode in the fuel cell, carbonic acid is less apt to leave the ion species that deteriorate the fuel cell performance. Therefore, it is preferred as the acid used for the cleaning. However, since the solubility of carbon dioxide in water is very low in a high temperature atmosphere of 80°C for accelerating the leaching, the carbonic acid concentration merely reaches the order of $10^{-4}$ mol/L. Therefore, the required equivalent for the neutralization cannot be obtained. For this reason, a gas containing carbon dioxide is bubbled in the cleaning medium, in which the separator is submerged, thereby supplying the required amount of carbonic acid.

If the temperature of the cleaning medium is lower than 80°C, it is difficult to reduce the amounts of the components to be leached out of the specimen below the specified values. Where the medium temperature is controlled at 80°C or higher, the components to be leached out during the operation of the fuel cell can effectively be extracted. More preferably, the medium temperature is 90°C or higher.

The immersing time of the separator is preferably 10 hours or longer because it is difficult to reduce the amounts of the components to be leached out of the specimen below the specified values by the immersion for less than 10 hours. More preferably, the immersion is carried out for 20 hours or longer.

If an ultrasonic cleaner is used, an impact is given to free components in the separator, thereby accelerating the leaching thereof. In this case, the cleaning time is preferably an hour or longer, which is shorter than the time required for the cleaning by immersing the separator in water. More preferably, the cleaning time when using an ultrasonic cleaner is 2 hours or longer.

It is also possible to clean the separator by exposing the separator to a gas of 100 % relative humidity. In this case, a cleaning effect similar to that obtained by the immersion in water is achieved. According to this technique, water condensed on the surface of the separator exhibits the cleaning effect. Since the water vapor is used, the cleaning can be performed in a temperature atmosphere of 100°C or higher. This technique is further advantageous in that the water vapor permeates into the inside of the pores of the conductive carbon material for forming the separator, permitting extraction of ions and organic substances.

When the separator is exposed to the gas of 100 % relative humidity, it is preferred for enhancing the cleaning effect to raise the atmospheric temperature during the cleaning close to the critical temperature up to which the resin contained in the separator is sustainable. For the same reason as the case of immersing the separator in water, the atmospheric temperature is preferably at least 80°C or higher. The cleaning time may be reduced when the gas temperature is high, but if the gas temperature is around 80°C, 10 hours or longer is required as is the case with the immersion in water.

As in the case of immersing the separator in water, the extraction of ammonium ions is effectively accelerated by using a gas containing an acidic substance for the cleaning. Suitable examples of the acidic substance include those which do not erode the resin used in the separator and do not deteriorate the fuel cell performance, unlike sulfurous acid and hydrogen chloride. For example, carbon dioxide, which is contained in a fuel gas for the fuel cell, is suitable.

The acidic substance concentration in the cleaning gas is preferably higher with a view to accelerating the extraction of ammonia. For example, $1 \times 10^{-3}$ mol/L or higher is preferred. The cleaning gas used herein may be either in a stationary state in sealed space or in a flowing state.

The separator may be cleaned by electrolysis, in which the separator is used as an electrode in an electrolytic solution.

In oxidation of a hydrogen gas, an electrode potential is controlled to plus relative to a spontaneous potential while supplying hydrogen by bubbling to the separator surface serving as the electrode. At this time, the reaction of the equation (1) occurs on the electrode surface, generating hydrogen ions.

$$H_2 \text{ (g)} \rightarrow 2H^+ + 2e^- \qquad (1)$$

The hydrogen ions generated in the reaction of the equation (1) accelerate the extraction of ammonium ions from the separator. However, if a potential which is higher than the spontaneous potential by over 0.2 V is applied to the electrode, the carbon material contained in the separator may possibly be oxidized by the reaction of the equation (2). Therefore, the electrode potential is preferably not more than +0.2 V relative to the spontaneous potential. However, if the electrode potential is less than +0.05 V from the spontaneous potential, the reaction speed is reduced and the current does not flow smoothly. Therefore, the electrode potential is preferably not less than +0.05 V, more preferably not less than 0.1 V relative to the spontaneous potential.

Further, if the electrolysis is carried out for less than 0.5 hours, soluble ion species and organic substances which are apt to be separated in the separator cannot be removed to a sufficient degree. Therefore, the electrolysis is preferably carried out for 0.5 hours or longer, more preferably an hour or longer.

$$C + 2H_2O \rightarrow CO_2 + 4H^+ + 4e^- \qquad (2)$$

The electrolytic solution used for the electrolysis should be free from the possibility of causing secondary pollution of the separator. With a view to eliminating the possibility of the secondary pollution, pure water is preferred. However, since the pure water is insulative, a huge quantity of electric power is required to pass electric current through. Accordingly, sulfuric acid may be added as a supporting solute to improve the electric conductivity of the electrolytic solution. However, if the sulfuric acid concentration is too high, halogen ions such as chloride and bromide ions and the organic substances decrease in solubility in the electrolytic solution. Therefore, the electrolytic solution preferably has pH of -0.3 or higher, more preferably 0 to 4.

On the other hand, in the reaction for generating hydrogen gas, the electrode potential is controlled to minus relative to the spontaneous potential. If the electrolytic solution is neutral, the reaction of the equation (3) occurs, whereas the reaction of the equation (4) occurs when the electrolytic solution is acidic. Thereby, hydroxide ions and hydrogen gas are generated.

$$2H_2O + 2e \rightarrow H_2 \text{ (g)} + 2OH^- \qquad (3)$$

$$2H^+ + 2e \rightarrow H_2 \text{ (g)} \qquad (4)$$

The hydroxide ions generated in the reaction of the equation (3) are substituted with halogen ions, which are apt to be separated, at the functional group of the resin contained in the separator, thereby accelerating the leaching of the halogen ions. Further, by the reaction of the equation (5), organic substances such as formaldehyde are decomposed and leached out.

$$2RCHO + OH^- \rightarrow RCH_2OH + RCOO^- \qquad (5)$$

Moreover, due to impact caused by the generation of the hydrogen gas from the separator surface, the leaching of separated organic substances is accelerated.

The reactions of the equations (3) and (4) are proceeded by controlling the potential of the separator serving as the electrode to minus relative to the spontaneous potential. However, in order to generate the required amount of gas for exhibiting the cleaning effect, the separator potential is preferably controlled to not more than -0.1 V, more preferably not more than -0.2 V relative to the spontaneous potential.

Owing to the electrolysis as described above, the soluble ion species and the organic substances which are apt to be separated from the separator are removed by reacting them with the hydrogen ions, hydroxide ions or hydrogen gas generated by the reactions caused on the separator surface. Thus, the electrolysis is effective for cleaning the separator.

If a conductive carbon material and a resin which cause less leaching of the above-described ion species and organic substances are used as the separator materials, a separator causing less leaching of the ion species and the organic substances is obtained without performing the cleaning.

In order to give high electric conductivity to the separator, it is necessary to increase the ratio of the conductive carbon material in the separator. In some cases, the ratio becomes as high as 50 to 95 wt%. Therefore, with a view to controlling the amounts of the components to be leached from the separator below the above-described specified values, it is also preferred that the amounts of components to be leached from the conductive carbon material be controlled below the specified values.

More specifically, the amounts of the components leached out of 1 g of the conductive carbon material are preferably not more than 300 $\mu$g of TOC, not more than 50 $\mu$g of ammonium ions, not more than 50 $\mu$g of chloride ions, not more than 20 $\mu$g of bromide ions and not more than 10 $\mu$g of sulfite ions.

Examples of the conductive carbon material of such high purity include, for example, carbon powder such as graphite powder which has been heat-treated in an inert gas atmosphere such as nitrogen or Ar, in an environment free from oxygen or under high vacuum at a temperature as high as 500°C or higher to volatilize ash content away.

Alternatively, the high purity conductive carbon material may also be obtained by cleaning a common conductive carbon material with use of water, an acidic solution or humidified carbon dioxide gas as is the case with the cleaning of the above-described separator.

On the other hand, if the ratio of the resin in the separator is increased, the separator increases in mechanical strength but decreases in electric conductivity. Therefore, the ratio of the resin in the separator is generally 50 wt% or lower. Further, the amounts of the components leached out of 1 g of the resin are preferably not more than 300 $\mu$g of TOC, not more than 50 $\mu$g of ammonium ions, not more than 50 $\mu$g of chloride ions, not more than 20 $\mu$g of bromide ions and not more than 10 $\mu$g of sulfite ions.

Examples of such resin include, for example, liquid crystal polymers, unsaturated polyester resins and fluorocarbon resins of high purity grade. Although these materials are relatively expensive and some of them have difficulty in receiving an additive for improving the productivity, they allow the fabrication of a high quality separator which causes less leaching.

Next, explanation is given of another technique for preparing a separator causing less leaching of the ion species and organic substances.

According to this technique, a trapping agent is added to the conductive separator comprising a conductive carbon material and a binder resin, or alternatively, a coating film comprising the trapping agent is formed on the surface of the conductive separator, thereby limiting the amounts of the leached ionic substances that cause the deterioration of the fuel cell performance. The trapping agent is an ion trapping material capable of trapping at least either an anion or a cation.

The trapping agent used herein preferably has a particle size distribution in which particles having a particle diameter of 0.1 to 10 $\mu$m account for 50 % or higher on the numeric basis. If this requirement is satisfied, the trapping agent increases in specific surface area and chance to contact with the ions leached. Therefore, by addition of a small amount of the trapping agent, the effect of trapping the ions is exhibited to a high degree. If the addition amount of the trapping agent is controlled to 1 to 10 parts by weight with respect to 100 parts by weight of the binder resin, the decrease in electric conductivity caused by the addition of the trapping agent is restrained to a negligible level.

If the trapping agent is applied to the separator surface to form a coating film comprising the trapping agent smaller than 1 $\mu$m in thickness, it is not effective because the leached components cannot be trapped sufficiently. On the other hand, if the coating film is thicker than 50 $\mu$m, the coating film becomes a resistance against electron movement between the gas diffusion layer and the separator,. causing deterioration in the fuel cell performance. Therefore, the coating film preferably has a thickness of 1 to 50 $\mu$m.

The trapping agent used in the present invention may be an organic ion exchanger, an inorganic ion exchanger, an organic adsorbent or an inorganic adsorbent. Examples of the organic ion exchanger include: an anion exchange resin comprising a base material such as a styrene or acrylic resin and an anion exchange group such as a quaternary ammonium group, a tertiary amine group, a 2-hydroxypropylamino group, a triethylamino group, a diethylaminoethyl group, an epichlorohydrine triethanolamine group or a p-aminobenzyl group; a cation exchange resin comprising a base material such as a styrene, methacrylate or acrylate resin and a cation exchange group such as sulfonic acid group, carboxylic acid group, a sulfoethyl group, a phosphomethyl group, a phenol group, a phosphate group, a carboxymethoxypropylamino group or a trimethylamino group; and an amphoteric exchange resin comprising a styrene resin as a base material and both of the cation and anion ion exchange groups.

Examples of the inorganic ion exchanger include: zeolites such as shabasite, mordenite and faujasite; antimony compounds such as lithium antimonite; lead phosphate hydroxide; synthesized aluminosilicate; and hydrotalcite.

Examples of the organic adsorbent include a styrenedivinylbenzene copolymer, polyester methacrylate, polyvinylpyrridine, etc. Examples of the inorganic adsorbent include silica gel, etc. These may be used alone or in combination of two or more kinds.

Embodiment 2

A feature of a fuel cell according to this embodiment.is to limit the amounts of specific impurities to be leached out of a gasket comprising a sealing material that deteriorate the fuel cell performance, and to remove the impurities, if contained in the gasket, to a certain level.

Examples of the impurities to be leached out of the separator include sulfide ions, sulfite ions, chloride ions, bromide ions, ammonium ions and TOC.

These impurities are leached and accumulated little by little during long-term operation of the fuel cell, proceeding the deterioration of the fuel cell performance. However, in a gasket which has been subjected to a desired removal treatment, the contents of ions and organic substances are drastically reduced. Therefore, a fuel cell using the gasket maintains high fuel cell performance.

Examples of the sealing material for forming the gasket include, for example: fluorocarbon rubber; silicone rubber; natural rubber; EPDM; butyl rubber; butyl chloride rubber; butyl bromide rubber; butadiene rubber; a styrene-butadiene copolymer; ethylene-vinyl acetate rubber; acrylic rubber; polyisopropylene; perfluorocarbon polymer; thermoplastic elastomers based on polystyrene, polyolefin, polyester and polyamide; adhesives made of latexes such as isoprene rubber and butadiene rubber; and adhesives made of liquid polybutadiene, polyisoprene, polychloroprene, silicone rubber, fluorocarbon rubber and acrylonitrile-butadiene rubber. However, they are not limitative. These materials may be used alone or in mixture or composite of two or more kinds.

With a view to improving the function of the gasket comprising any of the sealing materials listed above, additives such as a flame retardant and a plasticizer may be mixed as appropriate to give desired properties to the sealing material.

Examples of the flame retardant include chlorinated paraffin, perchlorocyclodecane, chlorendic acid, phosphate, phosphonate, phosphate chloride, diphosphate chloride, phosphate bromide, tetrabromophthalic anhydride, polydibromophenylene oxide, polytetrabromostyrene, hexabromocyclododecane, melamine phosphate, dimelamine phosphate, ammonium polyphosphate, etc. However, they are not particularly limitative.

Examples of the plasticizer include phthalate ester, dioctyl adipate, diisononyl adipate, trimellitic acid ester, pyromellitic acid ester, biphenyl tetracarboxylic acid ester, etc. However, they are not particularly limitative.

As discussed in the above, the ion species or the organic substances leached out of the gasket deteriorate the performance of the electrodes or the polymer electrolyte, and hence degrade the fuel cell performance. Therefore, in the following, a relationship between the amounts of the leached components and the actual fuel cell performance is ascertained so that allowable amounts of the leached components are specified.

First, the inventors of the present invention have studied a method which allows measurement of the components leached out of the gasket with efficiency and high reproducibility. As a result, found was a most suitable method of immersing a specimen of the gasket material in heated pure water having electric conductivity of 1 µS/cm or lower to extract soluble components and determining the concentrations thereof.

At present, the operating temperature of the fuel cell is as high as 60 to 90°C. Depending on the kind, the gasket material can be resistant to a wide temperature range of about 150 to 400°C. Further, in some cases, soluble components in the material such as separated organic substances are not leached out until the temperature reaches to a certain level. In view of these facts, to examine the amounts of the leached components in an actual use, a suitable temperature of pure water used for the leaching test is 80 to 100°C, which is close to the upper limit of the operating temperature of the fuel cell.

In this test, 10 specimens having the same weight were cut from a single gasket and five of them were pulverized, thereby preparing 10 kinds of specimen having different surface areas. These specimens were subjected to a leaching test to observe change in concentration of leached chloride ions with time, from the results of which the leaching time and the shape of the specimen were determined. The results indicate that the specimens showed variation in leaching speed at first, but after 50 hours and beyond, variation among the measurement values was reduced, that is, variation among leached amounts was reduced. Accordingly, suitable leaching test time is 50 hours or longer. In view of mass production, the minimum testing time is preferred. Therefore, the optimum testing time in the leaching test of the present invention is determined as 50 hours.

After the leaching test, the amounts of the components leached in the pure water can be determined in the same manner as Embodiment 1. That is, the amounts of the ion components may be determined by ion chromatography, atomic absorption analysis, inductively coupled plasma mass spectrometry or inductively coupled plasma emission spectroscopy, and the TOC amount may be determined by TOC measurement systems. Their amounts may be determined by any method as long as concentrations of trace elements leached into the water are measured.

In order to ascertain a relationship between the amounts of the leached components and the fuel cell performance, gaskets containing different amounts of the components to be leached were fabricated by varying the gasket material and treatment given to the molded gasket. Then, fuel cell stacks were formed using the gaskets, respectively, which were subjected to an operation test for 10,000 hours. The test results showed that it is necessary to set the upper limits to the amounts of the leached components to avoid the decrease in voltage caused by the leached components during long-term operation of the fuel cell.

More specifically, the amounts of the leached components should be not more than 300 µg of TOC, not more than 50 µg of ammonium ions, not more than 50 µg of chloride ions, not more than 20 µg of bromide ions and not more than 10 µg of sulfite ions.

A gasket that causes less leaching of the ion species and the organic substances may be obtained by cleaning a gasket alone or a gasket integrated with a separator by adhesion or direct molding, thereby extracting the ion species and organic substances therefrom. Chemical species carrying charges, such as ions, have high affinity for molecules of a medium having relatively large dipole moment and high electron donating/accepting properties, such as water molecules, and hence they easily generate solvated ions. Therefore, water is most suitably used as a medium for the cleaning. The water for the cleaning preferably has electric conductivity of 1 µS/cm or lower with a view to accelerating the ion extraction from the gasket and preventing secondary pollution of the gasket. If ultrapure water having electron conductivity of 0.1 µS/cm or lower is used, greater cleaning effect is expected.

If an amine-based material, which causes leaching of ammonia, is used as a material or an additive for the gasket, acid may be added to the pure water to prepare an acid solution. Using the acid solution as the cleaning medium, the ammonium ions are extracted at higher speed due to neutralization, permitting enhancement of the cleaning effect. The acid used herein needs to be free from ionic components that may deteriorate the performance of the fuel cell. Sulfuric acid or carbonic acid meets this requirement. However, if sulfuric acid of high concentration is used, halogen ions such as chloride and bromide ions and organic substances may decrease in solubility in the cleaning medium, the gasket may deteriorate in resistance, or safety during the cleaning operation may be impaired. Therefore, the cleaning medium preferably has pH of -0.3 or higher. Since carbon dioxide is a gas supplied to an anode in the fuel cell, carbonic acid is less apt to leave the ion species that deteriorate the fuel cell performance. Therefore, it is preferred as the acid used for the cleaning. However, since the solubility of carbon dioxide in water is very low in a high temperature atmosphere of 80°C for accelerating the leaching, the carbonic acid concentration merely reaches the order of $10^{-4}$ mol/L. Therefore, the required equivalent for the neutralization cannot be obtained. For this reason, a gas containing carbon dioxide is bubbled in the cleaning medium, in which the gasket is submerged, to supply the required carbonic acid.

It is also possible to clean the gasket by exposing the gasket to a gas of 100 % relative humidity. In this case, a cleaning effect similar to that obtained by the immersion in water is achieved. According to this technique, water condensed on the surface of the gasket exhibits the cleaning effect.. Since the water vapor is used, the cleaning can be performed in a temperature atmosphere of 100°C or higher. Further, it is preferred for obtaining greater cleaning effect to raise the atmospheric temperature during the cleaning close to the critical temperature up to which the resin contained in the gasket is sustainable. For the same reason mentioned for the pure water temperature in the above-described leaching test, the atmospheric temperature is preferably 80°C or higher.

The cleaning time may be reduced when the gas temperature is high, but if the gas temperature is 80°C, 10 hours or longer is required as is the case with the immersion in an aqueous solution. Further, as in the case of immersing the gasket in the cleaning medium, it was confirmed that the extraction of ammonium ions is accelerated by using a gas containing an acidic gas for the cleaning. As the acidic gas used herein, those which erode the material used as the gasket and those containing the species that deteriorate the fuel cell performance, such as sulfurous acid and hydrogen chloride, are not suitable. For example, carbon dioxide, which is contained in a fuel gas for the fuel cell, is suitable. Further, the acidic gas concentration in the cleaning gas is preferably higher with a view to accelerating the extraction of ammonia. The cleaning gas used herein may be either in a stationary state in sealed space or in a flowing state.

The organic substances, which are another components leached from the gasket, are generally neutral molecules having small dipole moment with the exceptions of organic acids such as acetic acid. Therefore, an organic solvent is suitably used for extracting the organic substances. However, most of the organic solvents are capable of dissolving the resin for forming the gasket, which are not suitable as the medium for cleaning the gasket in some cases. Therefore, for the extraction of the organic substances, pure water or an aqueous solution may be used as the cleaning medium in the same manner as the ion extraction. Among the organic substances leached out during the operation of the fuel cell, organic acids have high solubility in water. Therefore, even if pure water or an aqueous solution is used as the cleaning medium, the required cleaning effect is obtained.

It is more preferred that the cleaning medium for cleaning the gasket is used in a larger amount. However, it is at least necessary to use the cleaning medium in an amount enough to submerge the gasket completely in the cleaning medium. Further, the temperature of the cleaning medium is preferably raised to 80°C or higher for the same reason mentioned for the temperature of the pure water used in the above-described leaching test, because it allows the extraction of the components to be possibly leached out during the operation of the fuel cell. Moreover, if an ultrasonic cleaner is used, an impact is given to free components in the gasket, which is also effective in accelerating the leaching of the components and reducing the cleaning time.

As to the cleaning processes listed above, optimum cleaning time was determined in view of the results of the leaching tests performed before and after the cleaning.

If a material that causes less leaching of the ion species and organic substances is used to form the gasket, a gasket that causes less leaching of the ion species and the organic substances is obtained.

Examples 1-26 and Comparative Examples 1-45

(i) Method of fabricating membrane-electrode assembly (MEA)

A method of fabricating a membrane-electrode assembly used in Examples of the present invention is described with reference to FIG. 5, which is a vertical sectional view illustrating the structure of the MEA.

A MEA 15 includes a pair of electrodes 13, each of which includes a diffusion layer 11 and a catalyst layer 12 formed on a surface of the diffusion layer 11, and a polymer electrolyte membrane 14 sandwiched between the pair of electrodes 13. The diffusion layer 11 is made of carbon paper or a nonwoven carbon fabric.

First, 25 wt% of platinum particles having an average particle diameter of about 30 Å were supported on acetylene black powder to prepare catalyst powder for the electrodes. Then, a solution dispersing the catalyst powder in isopropyl alcohol was mixed with a solution dispersing perfluorocarbon sulfonic acid powder in ethyl alcohol to obtain a catalyst paste.

Carbon paper serving as a support for the electrode was made water-repellant. More specifically, a diffusion layer 11 made of a nonwoven carbon fabric having a size of 8 cm $\times$ 10 cm and a thickness of 360 $\mu$m (TGP-H-120 manufactured by TORAY INDUSTRIES, INC.) was impregnated with an aqueous dispersion containing a fluorocarbon resin (Neoflone ND1 manufactured by DAIKIN INDUSTRIES, LTD.), which was dried and then heated at 400°C for 30 minutes to give water-repellency.

The catalyst paste was applied to one of the surfaces of the diffusion layer 11 by screen printing to form a catalyst layer 12. At that time, part of the catalyst layer 12 was buried in the interstices of the diffusion layer 11.

In this manner, an electrode 13 including the catalyst layer 12 and the diffusion layer 11 was obtained. The contents of platinum and perfluorocarbon sulfonic acid in the electrode 13 were adjusted to 0.5 mg/cm$^2$ and 1.2 mg/cm$^2$, respectively.

Then, a pair of electrodes 13 were bonded by hot-press to the surfaces of a hydrogen ion conductive polymer electrolyte membrane 14 in a size of 10 cm $\times$ 20 cm, respectively, such that the catalyst layer 12 was in contact with the polymer electrolyte membrane 14. Thus, an MEA 15 was obtained. As the hydrogen ion conductive polymer electrolyte membrane 14, a thin film of perfluorocarbon sulfonic acid of 50 $\mu$m thick was used.

(ii) Molding of separator

Then, a conductive carbon material and a resin shown in Table 1 were weighed to have a desired composition ratio and mixed in a kneader, optionally with a curing agent or the like, and then the mixture was formed into a pellet of 3 mm in diameter $\times$ 5 mm by extrusion molding. Using a mold for forming the separator, this pellet was formed into a conductive separator by injection molding or compression molding under the following molding conditions. If a fused pellet did not have sufficient fluidity, the compression molding was adopted. If the fluidity was enough, the injection molding was adopted.

Table 1

| | Materials | TOC | $NH_4^+$ | $F^-$ | $Cl^-$ | $Br^-$ | $SO_3^{2-}$ |
|---|---|---|---|---|---|---|---|
| Conductive carbon material A | Artificial graphite A[*1] | 262 | 35 | 0 | 45 | 15 | 24 |
| Conductive carbon material B | Artificial graphite B[*2] | 180 | 15 | 0 | 8 | 2 | 3 |
| Conductive carbon material C | Natural graphite[*3] | 345 | 165 | 32 | 157 | 45 | 38 |
| Resin A | Phenol resin A[*4] | 1085 | 25 | 0 | 13 | 0 | 0 |

*1: Flake graphite, CP series, manufactured by Nippon Graphite Industries, Ltd.

*2: Highly purified graphite, ACB series, manufactured by Nippon Graphite Industries, Ltd.

*3: Flake natural graphite of Chinese origin

*4: Resol type phenol resin, manufactured by Dainippon Ink and Chemicals, Incorporated.

Table 1   (continued)

|  | Materials | TOC | $NH_4^+$ | $F^-$ | $Cl^-$ | $Br^-$ | $SO_3^{2-}$ |
|---|---|---|---|---|---|---|---|
| Resin B | Phenol resin B[*5] | 817 | 281 | 0 | 23 | 0 | 0 |
| Resin C | Epoxy resin[*6] | 120 | 35 | 0 | 325 | 0 | 0 |
| Resin D | Fluorocarbon resin[*7] | 85 | 18 | 218 | 7 | 0 | 0 |
| Resin E | Fluorocarbon resin[*7]+ Flame retardant[*8] | 93 | 17 | 219 | 6 | 162 | 0 |
| (unit: μg) | | | | | | | |

*5: Novorak type phenol resin, manufactured by Sumitomo Bakelite Company Limited Curing agent: hexamethylene tetramine, manufactured by Nippon Kasei Chemical (66 parts by weight curing agent was added to 100 parts by weight phenol resin)

*6: Cresol novorak type epoxy resin, manufactured by TOTO chemicals. Curing agent: polycarbodiimide resin, manufactured by Nisshinbo Industries, Inc. (66 parts by weight curing agent was added to 100 parts by weight epoxy resin)

*7: FEP resin, manufactured by DuPont Mitsui Fluorochemicals

*8: Dibromophenol, manufactured by MANAC Incorporated. (1.7 parts by weight flame retardant was added to 100 parts by weight resin)

[Molding conditions]

1) Injection molding

| Cylinder temperature | 90°C |
|---|---|
| Injection pressure | 180 MPa |
| Injection time | 10 sec. |
| Mold temperature | 180°C |
| Curing time | 60 sec. |

2) Compression molding

| Molding pressure | 190 MPa |
|---|---|
| Molding temperature | 180°C |
| Molding time | 300 sec. |

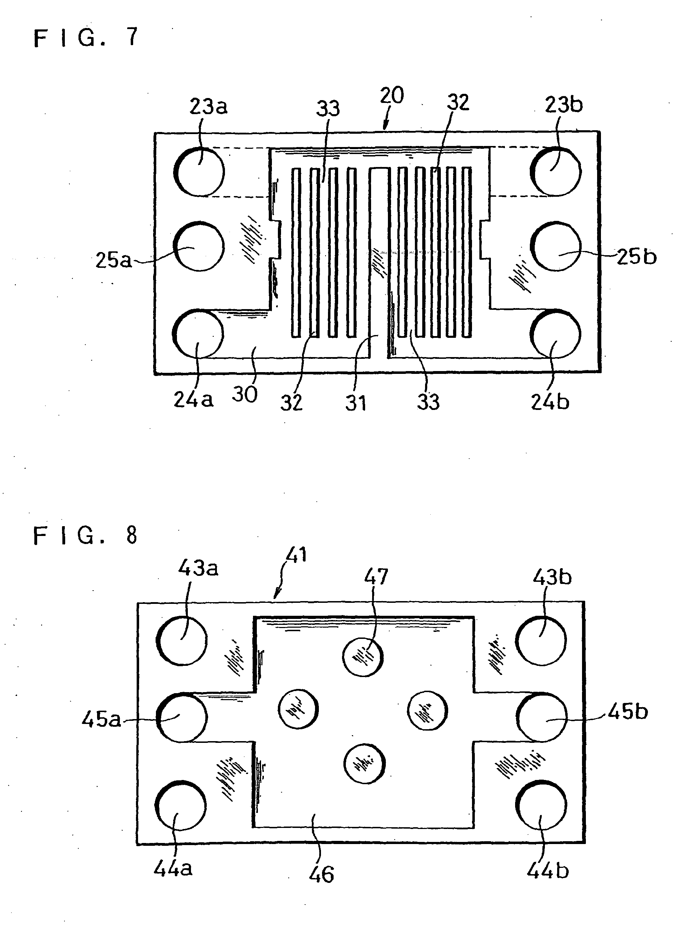

FIGs. 6 to 8 show the external views of the thus formed separators. FIG. 6 is a front view showing a cathode-side separator and FIG. 7 is a front view showing an anode-side separator.

A separator 20 was formed to serve as both a cathode-side separator and an anode-side separator and had a size of 10 cm × 20 cm and a thickness of 4 mm.

The separator 20 was provided with an oxidant gas inlet manifold hole 23a, a fuel gas inlet manifold hole 24a and a cooling water inlet manifold hole 25a on an end thereof and an oxidant gas outlet manifold hole 23b, a fuel gas outlet manifold hole 24b and a cooling water outlet manifold hole 25b on the other end.

On one of the surfaces of the separator 20 to be faced to the cathode, a groove 26 connecting the manifold holes 23a and 23b was formed with a rib 27 remaining at the center of the separator. Further, a plurality of parallel ribs 28 were formed in the groove 26 to provide a gas flow channel 29.

On the other surface of the separator 20 to be faced to the anode, a groove 30 connecting the manifold holes 24a and 24b was formed with a rib 31 remaining at the center of the separator, and in addition, a plurality of parallel ribs 32 were formed to provide a gas flow channel 33.

The separator 20 mentioned herein is inserted between unit cells. In the case where a plurality of unit cells are stacked, a separator, which is provided with a gas flow channel as shown in FIG. 6 only on a surface facing to the cathode, while the other surface being flat, is positioned at the cathode-side end of the cell stack. Further, at an anode-side end of the cell stack, is arranged a separator provided with a gas flow channel as shown in FIG. 7 only on a surface facing to the anode, while the other surface being flat.

The gas flow channel 29 is given by a concave part having a width of 2 mm and a depth of 1.5 mm and a convex part (rib 28) having a width of 1 mm and being flush with the separator surface at the top thereof.

FIG. 8 shows a rear surface of a cathode-side separator. In the same manner as the separator 20, a separator 41 has an oxidant gas inlet manifold hole 43a, a fuel gas inlet manifold hole 44a and a cooling water inlet manifold hole 45a on an end thereof, and an oxidant gas outlet manifold hole 43b, a fuel gas outlet manifold hole 44b and a cooling water outlet manifold hole 45b on the other end. These manifold holes are positioned and sized in the same manner as those of the separator 20.

On a surface of the separator 41, a cooling water flow channel 46 of 1.5 mm depth was formed to connect the manifold holes 45a and 45b, in which a plurality of columnar ribs 47 were formed. The top surfaces of the columnar ribs 47 were flush with the separator.

The separator 41 was used in pairs. A pair of separators 41 were bonded such that their surfaces on which the cooling water flow channels 46 had been formed were opposed to each other, thereby forming a cooling section between them to pass cooling water through. An oxidant gas flow channel was formed on the other surface of one of the separators 41, while a fuel gas flow channel was formed on the other surface of the other separator 41. The cooling water was introduced from the manifold hole 45a and split by the ' columnar ribs 47 to flow over the entire surface of the cooling water flow channel 46 toward the manifold hole 45b.

(ii) Leaching test for resin and conductive carbon material

Resins and conductive carbon materials shown in Table 1 were subjected to a leaching test. In this test, a test specimen of 1 g was weighed.

The resin was molded alone into a mass under the same conditions as the molding conditions for the separator and then cut into a strip of the desired weight.

The conductive carbon material of 1 g was weighed in a powder state.

Pure water having electric conductivity of 0.6 to 0.8 µS/cm prepared by distilling ion exchange water was heated to 90°C in advance, and then 50 g of which was weighed and sealed in a hermetic container made of heat-resistant glass together with a desired specimen. Then, the hermetic container was heated in a water bath controlled at 95°C. After 50 hours of heating, the hermetic container was taken out of the water bath and left stand for 30 minutes. Then, with an ion chromatography and a TOC measurement system, amounts of ion components and TOC in a supernatant were measured. Table 1 shows the results.

(iv) Cleaning of separator

The separator made of these materials was cleaned under the conditions described in Tables 2 to 6. A cleaning container for holding the separator had a width of 15 cm, a depth of 5 cm and a height of 30 cm. A cleaning medium was poured therein such that the separator was completely submerged in the cleaning medium. During the cleaning of the separator, the cleaning medium was kept at a certain temperature for a certain period by heating the medium with a heater placed outside the container.

Table 2

EP 1 453 127 A2

| | Examples | 1 | 2 | 3 | 4 | 5 | 6 | 7 | 8 | 9 | 10 | 11 | 12 | 13 | 14 | 15 |
|---|---|---|---|---|---|---|---|---|---|---|---|---|---|---|---|---|
| Materials (parts by weight) | Conductive carbon material A | 0 | 0 | 0 | 0 | 0 | 80 | 0 | 0 | 0 | 0 | 80 | 0 | 0 | 0 | 0 |
| | Conductive carbon material B | 80 | 80 | 80 | 80 | 80 | 0 | 80 | 80 | 80 | 80 | 0 | 80 | 80 | 80 | 80 |
| | Conductive carbon material C | 0 | 0 | 0 | 0 | 0 | 0 | 0 | 0 | 0 | 0 | 0 | 0 | 0 | 0 | 0 |
| | Resin A | 0 | 20 | 0 | 0 | 0 | 0 | 20 | 0 | 0 | 0 | 0 | 20 | 0 | 0 | 0 |
| | Resin B | 0 | 0 | 20 | 0 | 0 | 0 | 0 | 20 | 0 | 0 | 0 | 0 | 20 | 0 | 0 |
| | Resin C | 0 | 0 | 0 | 20 | 0 | 0 | 0 | 0 | 20 | 0 | 0 | 0 | 0 | 20 | 0 |
| | Resin D | 20 | 0 | 0 | 0 | 0 | 20 | 0 | 0 | 0 | 0 | 20 | 0 | 0 | 0 | 0 |
| | Resin E | 0 | 0 | 0 | 0 | 20 | 0 | 0 | 0 | 0 | 20 | 0 | 0 | 0 | 0 | 20 |
| Cleaning conditions | Cleaning | Not done | Done | Done | Done | Done | Done | Done | Done | Done | Done | Done | Done | Done | Done | Done |
| | Cleaning medium | - | Pure $H_2O$ | Pure $H_2O$ | Pure $H_2O$ | Pure $H_2O$ | Pure $H_2O$ | Pure $H_2O$ | Pure $H_2O$ | Pure $H_2O$ | Pure $H_2O$ | Pure $H_2O$ | Pure $H_2O$ | Pure $H_2O$ | Pure $H_2O$ | Pure $H_2O$ |
| | Gas bubbling | - | Not done | Not done | Not done | Not done | Not done | Not done | Not done | Not done | Not done | Not done | Not done | Not done | Not done | Not done |
| | Cleaning medium pH | - | 7 | 7 | 7 | 7 | 7 | 7 | 7 | 7 | 7 | 7 | 7 | 7 | 7 | 7 |
| | Medium temp. (°C) | - | 80 | 80 | 80 | 80 | 80 | 80 | 80 | 80 | 80 | 80 | 100 | 100 | 100 | 100 |
| | Cleaning time (hr) | - | 10 | 10 | 10 | 10 | 10 | 15 | 15 | 15 | 15 | 15 | 10 | 10 | 10 | 10 |

## Table 3

| | Examples | 16 | 17 | 18 | 19 | 20 | 21 | 22 | 23 | 24 | 25 | 26 |
|---|---|---|---|---|---|---|---|---|---|---|---|---|
| Materials (parts by weight) | Conductive carbon material A | 80 | 0 | 0 | 0 | 0 | 80 | 0 | 0 | 0 | 0 | 80 |
| | Conductive carbon material B | 0 | 80 | 80 | 80 | 80 | 0 | 80 | 80 | 80 | 80 | 0 |
| | Conductive carbon material C | 0 | 0 | 0 | 0 | 0 | 0 | 0 | 0 | 0 | 0 | 0 |
| | Resin A | 0 | 20 | 0 | 0 | 0 | 0 | 20 | 0 | 0 | 0 | 0 |
| | Resin B | 0 | 0 | 20 | 0 | 0 | 0 | 0 | 20 | 0 | 0 | 0 |
| | Resin C | 0 | 0 | 0 | 20 | 0 | 0 | 0 | 0 | 20 | 0 | 0 |
| | Resin D | 20 | 0 | 0 | 0 | 0 | 20 | 0 | 0 | 0 | 0 | 20 |
| | Resin E | 0 | 0 | 0 | 0 | 20 | 0 | 0 | 0 | 0 | 20 | 0 |
| Cleaning conditions | Cleaning | Done | Done | Done | Done | Done | Done | Done | Done | Done | Done | Done |
| | Cleaning medium | Pure $H_2O$ | $H_2SO_4$ | $H_2SO_4$ | $H_2SO_4$ | $H_2SO_4$ | $H_2SO_4$ | Pure $H_2O$ | Pure $H_2O$ | Pure $H_2O$ | Pure $H_2O$ | Pure $H_2O$ |
| | Gas bubbling | Not done | Not done | Not done | Not done | Not done | Not done | Done | Done | Done | Done | Done |
| | Cleaning medium pH | 7 | −0.3 | −0.3 | −0.3 | −0.3 | −0.3 | 4 | 4 | 4 | 4 | 4 |
| | Medium temp. (℃) | 100 | 80 | 80 | 80 | 80 | 80 | 80 | 80 | 80 | 80 | 80 |
| | Cleaning time (hr) | 10 | 10 | 10 | 10 | 10 | 10 | 10 | 10 | 10 | 10 | 10 |

Table 4

| Comparative Examples | | 1 | 2 | 3 | 4 | 5 | 6 | 7 | 8 | 9 | 10 | 11 | 12 | 13 | 14 | 15 |
|---|---|---|---|---|---|---|---|---|---|---|---|---|---|---|---|---|
| Materials (parts by weight) | Conductive carbon material A | 0 | 0 | 0 | 0 | 80 | 0 | 0 | 0 | 0 | 80 | 0 | 0 | 0 | 0 | 80 |
| | Conductive carbon material B | 80 | 80 | 80 | 80 | 0 | 80 | 80 | 80 | 80 | 0 | 80 | 80 | 80 | 80 | 0 |
| | Conductive carbon material C | 0 | 0 | 0 | 0 | 0 | 0 | 0 | 0 | 0 | 0 | 0 | 0 | 0 | 0 | 0 |
| | Resin A | 20 | 0 | 0 | 0 | 0 | 20 | 0 | 0 | 0 | 0 | 20 | 0 | 0 | 0 | 0 |
| | Resin B | 0 | 20 | 0 | 0 | 0 | 0 | 20 | 0 | 0 | 0 | 0 | 20 | 0 | 0 | 0 |
| | Resin C | 0 | 0 | 20 | 0 | 0 | 0 | 0 | 20 | 0 | 0 | 0 | 0 | 20 | 0 | 0 |
| | Resin D | 0 | 0 | 0 | 0 | 20 | 0 | 0 | 0 | 0 | 20 | 0 | 0 | 0 | 0 | 20 |
| | Resin E | 0 | 0 | 0 | 20 | 0 | 0 | 0 | 0 | 20 | 0 | 0 | 0 | 0 | 20 | 0 |
| Cleaning conditions | Cleaning | Not done | Not done | Not done | Not done | Not done | Done | Done | Done | Done | Done | Done | Done | Done | Done | Done |
| | Cleaning medium | – | – | – | – | – | Pure $H_2O$ | Pure $H_2O$ | Pure $H_2O$ | Pure $H_2O$ | Pure $H_2O$ | Pure $H_2O$ | Pure $H_2O$ | Pure $H_2O$ | Pure $H_2O$ | Pure $H_2O$ |
| | Gas bubbling | – | – | – | – | – | Not done | Not done | Not done | Not done | Not done | Not done | Not done | Not done | Not done | Not done |
| | Cleaning medium pH | – | – | – | – | – | 7 | 7 | 7 | 7 | 7 | 7 | 7 | 7 | 7 | 7 |
| | Medium temp. (°C) | – | – | – | – | – | 80 | 80 | 80 | 80 | 80 | 60 | 60 | 60 | 60 | 60 |
| | Cleaning time (hr) | – | – | – | – | – | 5 | 5 | 5 | 5 | 5 | 15 | 15 | 15 | 15 | 15 |

EP 1 453 127 A2

Table 5

| Comparative Examples | | 16 | 17 | 18 | 19 | 20 | 21 | 22 | 23 | 24 | 25 | 26 | 27 | 28 | 29 | 30 |
|---|---|---|---|---|---|---|---|---|---|---|---|---|---|---|---|---|
| Materials (parts by weight) | Conductive carbon material A | 0 | 0 | 0 | 0 | 80 | 0 | 0 | 0 | 0 | 80 | 0 | 0 | 0 | 0 | 80 |
| | Conductive carbon material B | 80 | 80 | 80 | 80 | 0 | 80 | 80 | 80 | 80 | 0 | 80 | 80 | 80 | 80 | 0 |
| | Conductive carbon material C | 0 | 0 | 0 | 0 | 0 | 0 | 0 | 0 | 0 | 0 | 0 | 0 | 0 | 0 | 0 |
| | Resin A | 20 | 0 | 0 | 0 | 0 | 20 | 0 | 0 | 0 | 0 | 20 | 0 | 0 | 0 | 0 |
| | Resin B | 0 | 20 | 0 | 0 | 0 | 0 | 20 | 0 | 0 | 0 | 0 | 20 | 0 | 0 | 0 |
| | Resin C | 0 | 0 | 20 | 0 | 0 | 0 | 0 | 20 | 0 | 0 | 0 | 0 | 20 | 0 | 0 |
| | Resin D | 0 | 0 | 0 | 0 | 20 | 0 | 0 | 0 | 0 | 20 | 0 | 0 | 0 | 0 | 20 |
| | Resin E | 0 | 0 | 0 | 20 | 0 | 0 | 0 | 0 | 20 | 0 | 0 | 0 | 0 | 20 | 0 |
| Cleaning conditions | Cleaning | Done | Done | Done | Done | Done | Done | Done | Done | Done | Done | Done | Done | Done | Done | Done |
| | Cleaning medium | Pure H$_2$O | Pure H$_2$O | Pure H$_2$O | Pure H$_2$O | Pure H$_2$O | H$_2$SO$_4$ | H$_2$SO$_4$ | H$_2$SO$_4$ | H$_2$SO$_4$ | H$_2$SO$_4$ | H$_2$SO$_4$ | H$_2$SO$_4$ | H$_2$SO$_4$ | H$_2$SO$_4$ | H$_2$SO$_4$ |
| | Gas bubbling | Not done | Not done | Not done | Not done | Not done | Not done | Not done | Not done | Not done | Not done | Not done | Not done | Not done | Not done | Not done |
| | Cleaning medium pH | 7 | 7 | 7 | 7 | 7 | -0.6 | -0.6 | -0.6 | -0.6 | -0.6 | -0.3 | -0.3 | -0.3 | -0.3 | -0.3 |
| | Medium temp. (°C) | 100 | 100 | 100 | 100 | 100 | 60 | 60 | 60 | 60 | 60 | 60 | 60 | 60 | 60 | 60 |
| | Cleaning time (hr) | 5 | 5 | 5 | 5 | 5 | 5 | 5 | 5 | 5 | 5 | 15 | 15 | 15 | 15 | 15 |

Table 6

| Comparative Examples | | 31 | 32 | 33 | 34 | 35 | 36 | 37 | 38 | 39 | 40 | 41 | 42 | 43 | 44 | 45 | 46 |
|---|---|---|---|---|---|---|---|---|---|---|---|---|---|---|---|---|---|
| Materials (parts by weight) | Conductive carbon material A | 0 | 0 | 0 | 0 | 80 | 0 | 0 | 0 | 0 | 80 | 0 | 0 | 0 | 0 | 80 | Vitreous carbon |
| | Conductive carbon material B | 80 | 80 | 80 | 80 | 0 | 80 | 80 | 80 | 80 | 0 | 80 | 80 | 80 | 80 | 0 | |
| | Conductive carbon material C | 0 | 0 | 0 | 0 | 0 | 0 | 0 | 0 | 0 | 0 | 0 | 0 | 0 | 0 | 0 | |
| | Resin A | 20 | 0 | 0 | 0 | 0 | 20 | 0 | 0 | 0 | 0 | 20 | 0 | 0 | 0 | 0 | |
| | Resin B | 0 | 20 | 0 | 0 | 0 | 0 | 20 | 0 | 0 | 0 | 0 | 20 | 0 | 0 | 0 | |
| | Resin C | 0 | 0 | 20 | 0 | 0 | 0 | 0 | 20 | 0 | 0 | 0 | 0 | 20 | 0 | 0 | |
| | Resin D | 0 | 0 | 0 | 0 | 20 | 0 | 0 | 0 | 0 | 20 | 0 | 0 | 0 | 0 | 20 | |
| | Resin E | 0 | 0 | 0 | 20 | 0 | 0 | 0 | 0 | 20 | 0 | 0 | 0 | 0 | 20 | 0 | |
| Cleaning conditions | Cleaning | Done | Done | Done | Done | Done | Done | Done | Done | Done | Done | Done | Done | Done | Done | Done | Not done |
| | Cleaning medium | $H_2SO_4$ | $H_2SO_4$ | $H_2SO_4$ | $H_2SO_4$ | $H_2SO_4$ | Pure $H_2O$ | Pure $H_2O$ | Pure $H_2O$ | Pure $H_2O$ | Pure $H_2O$ | Pure $H_2O$ | Pure $H_2O$ | Pure $H_2O$ | Pure $H_2O$ | Pure $H_2O$ | - |
| | Gas bubbling | Not done | Not done | Not done | Not done | Not done | Done | Done | Done | Done | Done | Done | Done | Done | Done | Done | - |
| | Cleaning medium pH | -0.3 | -0.3 | -0.3 | -0.3 | -0.3 | 4 | 4 | 4 | 4 | 4 | 4 | 4 | 4 | 4 | 4 | - |
| | Medium temp. (°C) | 100 | 100 | 100 | 100 | 100 | 60 | 60 | 60 | 60 | 60 | 100 | 100 | 100 | 100 | 100 | - |
| | Cleaning time (hr) | 5 | 5 | 5 | 5 | 5 | 15 | 15 | 15 | 15 | 15 | 5 | 5 | 5 | 5 | 5 | - |

The cleaning medium indicated as "pure $H_2O$" in Tables was pure water having electric conductivity of 1 μS/cm and "$H_2SO_4$" was diluted sulfuric acid having a concentration of 2 mol/L or 1 mol/L prepared by adding commercially available concentrated sulfuric acid of reagent grade to the pure water.

The gas bubbling was "done" by bubbling a carbon dioxide gas supplied from a liquefied carbon dioxide cylinder in the pure water during the cleaning.

As to the pH of the cleaning medium, the pure water had 7, the diluted sulfuric acid of 2 mol/L had -0.6, the diluted sulfuric acid of 1 mol/L had -0.3 and the pure water in which the carbon dioxide gas was bubbled had 4.

The solution temperature during the cleaning was adjusted to either of 60°C, 80°C and 100°C and the cleaning time was set to either of 5 hours, 10 hours and 15 hours.

(v) Leaching test for separator

The molded separator was then subjected to a leaching test. In this test, a specimen of 1 g was examined. The molded separator was cut into a strip of 1 g as the specimen.

Pure water having electric conductivity of 0.6 to 0.8 μS/cm prepared by distilling ion exchange water was heated to 90°C in advance, 50 g of which was weighed and sealed in a hermetic container made of heat-resistant glass together with a desired specimen. Then, the hermetic container was heated in a water bath controlled at 95°C. After 50 hours of heating, the hermetic container was taken out of the water bath and left stand for 30 minutes. Then, with an ion chromatography and a TOC measurement system, amounts of ion components and TOC in a supernatant were measured. Tables 7 to 9 show the leaching test results.

Table 7

| | Leaching test | | | | | | | Continuous power generation test (V) | | |
|---|---|---|---|---|---|---|---|---|---|---|
| | Electric conductivity (μS/cm) | TOC (μg) | $NH_4^+$ (μg) | $F^-$ (μg) | $Cl^-$ (μg) | $Br^-$ (μg) | $SO_4^{2-}$ (μg) | V1 | V2 | V3 |
| Ex. 1 | 831 | 155 | 13 | 48 | 5 | ND | ND | 69.2 | 62.3 | 6.9 |
| Ex. 2 | 13 | 287 | ND | ND | ND | ND | ND | 69.4 | 62.5 | 6.8 |
| Ex. 3 | 736 | 223 | 48 | ND | ND | ND | ND | 69.4 | 62.5 | 6.9 |
| Ex. 4 | 425 | 86 | ND | ND | 45 | ND | ND | 69.4 | 62.5 | 6.9 |
| Ex. 5 | 115 | 79 | ND | ND | ND | 19 | ND | 69.4 | 62.3 | 7.1 |
| Ex. 6 | 91 | 158 | ND | ND | ND | ND | 9 | 69.3 | 62.5 | 6.8 |
| Ex. 7 | 13 | 249 | ND | ND | ND | ND | ND | 69.2 | 62.5 | 6.8 |
| Ex. 8 | 540 | 178 | 35 | ND | ND | ND | ND | 69.4 | 62.3 | 7.1 |
| Ex. 9 | 278 | 86 | ND | ND | 29 | ND | ND | 69.3 | 62.4 | 6.8 |
| Ex. 10 | 72 | 79 | ND | ND | ND | 11 | ND | 69.4 | 62.2 | 7.1 |
| Ex. 11 | 47 | 158 | ND | ND | ND | ND | 4 | 69.3 | 62.3 | 7.0 |
| Ex. 12 | 13 | 268 | ND | ND | ND | ND | ND | 69.3 | 62.4 | 6.9 |
| Ex. 13 | 648 | 219 | 42 | ND | ND | ND | ND | 69.3 | 62.2 | 7.1 |
| Ex. 14 | 353 | 78 | ND | ND | 37 | ND | ND | 69.3 | 62.1 | 7.1 |
| Ex. 15 | 92 | 45 | ND | ND | ND | 15 | ND | 69.3 | 62.2 | 7.1 |
| Ex. 16 | 75 | 139 | ND | ND | ND | ND | 7 | 69.4 | 62.4 | 7.0 |
| Ex. 17 | 13 | 287 | ND | ND | ND | ND | ND | 69.3 | 62.2 | 7.1 |
| Ex. 18 | 555 | 223 | 36 | ND | ND | ND | ND | 69.4 | 62.5 | 6.9 |
| Ex. 19 | 424 | 86 | ND | ND | 45 | ND | ND | 69.3 | 62.3 | 7.0 |
| Ex. 20 | 114 | 79 | ND | ND | ND | 19 | ND | 69.4 | 62.5 | 6.9 |

Table 7   (continued)

| | Leaching test | | | | | | | Continuous power generation test (V) | | |
|---|---|---|---|---|---|---|---|---|---|---|
| | Electric conductivity (µS/cm) | TOC (µg) | $NH_4^+$ (µg) | $F^-$ (µg) | $Cl^-$ (µg) | $Br^-$ (µg) | $SO_\square^{2-}$ (µg) | V1 | V2 | V3 |
| Ex. 21 | 93 | 158 | ND | ND | ND | ND | 9 | 69.3 | 62.3 | 7.0 |
| Ex. 22 | 13 | 287 | ND | ND | ND | ND | ND | 69.4 | 62.5 | 6.9 |
| Ex. 23 | 527 | 223 | 34 | ND | ND | ND | ND | 69.4 | 62.4 | 7.0 |
| Ex. 24 | 424 | 86 | ND | ND | 45 | ND | ND | 69.3 | 62.3 | 7.0 |
| Ex. 25 | 114 | 79 | ND | ND | 0 | 19 | ND | 69.3 | 62.2 | 7.1 |
| Ex. 26 | 92 | 158 | ND | ND | ND | ND | 9 | 69.3 | 62.2 | 7.1 |
| ND: Not Detected | | | | | | | | | | |

Table 8

| | Leaching test | | | | | | | Continuous power generation test (V) | | |
|---|---|---|---|---|---|---|---|---|---|---|
| | Electric conductivity (µS/cm) | TOC (µg) | $NH_4^+$ (µg) | $F^-$ (µg) | $Cl^-$ (µg) | $Br^-$ (µg) | $SO_\square^{2-}$ (µg) | V1 | V2 | V3 |
| Com. Ex. 1 | 373 | 352 | 19 | ND | 8 | ND | ND | 69.4 | 47.9 | 21.5 |
| Com. Ex. 2 | 1129 | 298 | 69 | ND | 8 | ND | ND | 69.3 | 49.7 | 19.6 |
| Com. Ex. 3 | 940 | 159 | 19 | ND | 70 | ND | ND | 69.2 | 54.9 | 14.3 |
| Com. Ex. 4 | 1001 | 161 | 13 | 48 | 5 | 32 | ND | 69.3 | 50.7 | 18.6 |
| Com. Ex. 5 | 1370 | 225 | 23 | 48 | 25 | 8 | 18 | 69.3 | 47.0 | 22.3 |
| Com. Ex. 6 | 13 | 319 | ND | ND | ND | ND | ND | 69.3 | 56.1 | 13.2 |
| Com. Ex. 7 | 919 | 273 | 60 | ND | ND | ND | ND | 69.2 | 56.7 | 12.5 |
| Com. Ex. 8 | 665 | 102 | 8 | ND | 58 | ND | ND | 69.4 | 58.2 | 11.2 |
| Com. Ex. 9 | 502 | 114 | 5 | 23 | ND | 26 | ND | 69.3 | 56.4 | 12.9 |
| Com. Ex. 10 | 672 | 168 | 12 | 21 | 12 | ND | 13 | 69.3 | 55.1 | 14.2 |
| Com. Ex. 11 | 14 | 323 | ND | ND | ND | ND | ND | 69.3 | 51.8 | 17.5 |
| Com. Ex. 12 | 994 | 274 | 65 | ND | ND | ND | ND | 69.2 | 53.4 | 15.8 |
| Com. Ex. 13 | 806 | 105 | 13 | ND | 65 | ND | ND | 69.3 | 56.5 | 12.8 |

Table 8   (continued)

| | Leaching test | | | | | | | Continuous power generation test (V) | | |
|---|---|---|---|---|---|---|---|---|---|---|
| | Electric conductivity ($\mu$S/cm) | TOC ($\mu$g) | $NH_4^+$ ($\mu$g) | F⁻ ($\mu$g) | Cl⁻ ($\mu$g) | Br⁻ ($\mu$g) | $SO_4^{2-}$ ($\mu$g) | V1 | V2 | V3 |
| Com. Ex. 14 | 658 | 109 | 9 | 29 | ND | 30 | ND | 69.2 | 51.3 | 17.9 |
| Com. Ex. 15 | 985 | 172 | 18 | 32 | 19 | ND | 16 | 69.3 | 48.5 | 20.8 |
| Com. Ex. 16 | 13 | 307 | ND | ND | ND | ND | ND | 69.3 | 61.0 | 8.3 |
| Com. Ex. 17 | 875 | 268 | 57 | ND | ND | ND | ND | 69.2 | 59.0 | 10.2 |
| Com. Ex. 18 | 568 | 95 | 4 | ND | 54 | ND | ND | 69.3 | 59.6 | 9.7 |
| Com. Ex. 19 | 376 | 97 | 2 | 18 | ND | 22 | ND | 69.4 | 60.5 | 8.9 |
| Com. Ex. 20 | 473 | 155 | 8 | 14 | 7 | ND | 12 | 69.2 | 60.2 | 9.0 |
| Com. Ex. 21 | Test abandoned | | | | | | | | | |
| Com. Ex. 22 | | | | | | | | | | |
| Com. Ex. 23 | | | | | | | | | | |
| Com. Ex. 24 | | | | | | | | | | |
| Com. Ex. 25 | | | | | | | | | | |
| ND: Not Detected | | | | | | | | | | |

Table 9

| | Leaching test | | | | | | | Continuous power generation test (V) | | |
|---|---|---|---|---|---|---|---|---|---|---|
| | Electric conductivity ($\mu$S/cm) | TOC ($\mu$g) | $NH_4^+$ ($\mu$g) | F⁻ ($\mu$g) | Cl⁻ ($\mu$g) | Br⁻ ($\mu$g) | $SO_4^{2-}$ ($\mu$g) | V1 | V2 | V3 |
| Com. Ex. 26 | 13 | 323 | ND | ND | ND | ND | ND | 69.3 | 52.0 | 17.3 |
| Com. Ex. 27 | 888 | 274 | 58 | ND | ND | ND | ND | 69.2 | 56.2 | 13.0 |
| Com. Ex. 28 | 760 | 105 | 10 | ND | 65 | ND | ND | 69.3 | 56.4 | 12.9 |

Table 9   (continued)

| | Leaching test | | | | | | Continuous power generation test (V) | | |
|---|---|---|---|---|---|---|---|---|---|
| | Electric conductivity (µS/cm) | TOC (µg) | $NH_4^+$ (µg) | $F^-$ (µg) | $Cl^-$ (µg) | $Br^-$ (µg) | $SO_4^{2-}$ (µg) | V1 | V2 | V3 |
| Com. Ex. 29 | 598 | 109 | 4 | 30 | ND | 31 | ND | 69.4 | 51.7 | 17.7 |
| Com. Ex. 30 | 887 | 172 | 12 | 32 | 19 | ND | 15 | 69.3 | 48.8 | 20.5 |
| Com. Ex. 31 | 12 | 309 | ND | ND | ND | ND | ND | 69.3 | 61.2 | 8.1 |
| Com. Ex. 32 | 813 | 270 | 53 | ND | ND | ND | ND | 69.3 | 61.1 | 8.2 |
| Com. 33 Ex. 33 | 518 | 93 | ND | ND | 55 | ND | ND | 69.3 | 59.4 | 9.9 |
| Com. Ex. 34 | 364 | 97 | ND | 19 | ND | 23 | ND | 69.3 | 60.1 | 9.2 |
| Com. Ex. 35 | 388 | 154 | 2 | 13 | 8 | ND | 13 | 69.3 | 60.2 | 9.1 |
| Com. Ex. 36 | 13 | 321 | ND | ND | ND | ND | ND | 69.3 | 52.1 | 17.2 |
| Com. Ex. 37 | 942 | 276 | 62 | ND | ND | ND | ND | 69.2 | 54.9 | 14.3 |
| Com. Ex. 38 | 783 | 109 | 12 | ND | 65 | ND | ND | 69.4 | 56.4 | 13.0 |
| Com. Ex. 39 | 637 | 106 | 7 | 30 | ND | 31 | ND | 69.2 | 51.7 | 17.5 |
| Com. Ex. 40 | 933 | 173 | 15 | 32 | 19 | ND | 15 | 69.2 | 48.9 | 20.3 |
| Com. Ex. 41 | 12 | 312 | ND | ND | ND | ND | ND | 69.2 | 61.2 | 8.0 |
| Com. Ex. 42 | 845 | 270 | 55 | ND | ND | ND | ND | 69.4 | 60.2 | 9.2 |

Table 9   (continued)

| | Leaching test | | | | | | | Continuous power generation test (V) | | |
|---|---|---|---|---|---|---|---|---|---|---|
| | Electric conductivity ($\mu$S/cm) | TOC ($\mu$g) | $NH_4^+$ ($\mu$g) | F⁻ ($\mu$g) | Cl⁻ ($\mu$g) | Br⁻ ($\mu$g) | $SO_{\square}^{2-}$ ($\mu$g) | V1 | V2 | V3 |
| Com. Ex. 43 | 577 | 91 | 4 | ND | 55 | ND | ND | 69.2 | 56.0 | 13.2 |
| Com. Ex. 44 | 395 | 96 | 2 | 19 | ND | 23 | ND | 69.2 | 52.7 | 16.5 |
| Com. Ex. 45 | 435 | 159 | 5 | 13 | 8 | ND | 13 | 69.4 | 48.4 | 21.0 |
| Com. Ex. 46 | 12 | 56 | ND | ND | ND | ND | ND | 69.2 | 62.2 | 7.0 |
| ND: Not Detected | | | | | | | | | | |

(vi) Manufacture of polymer electrolyte fuel cell

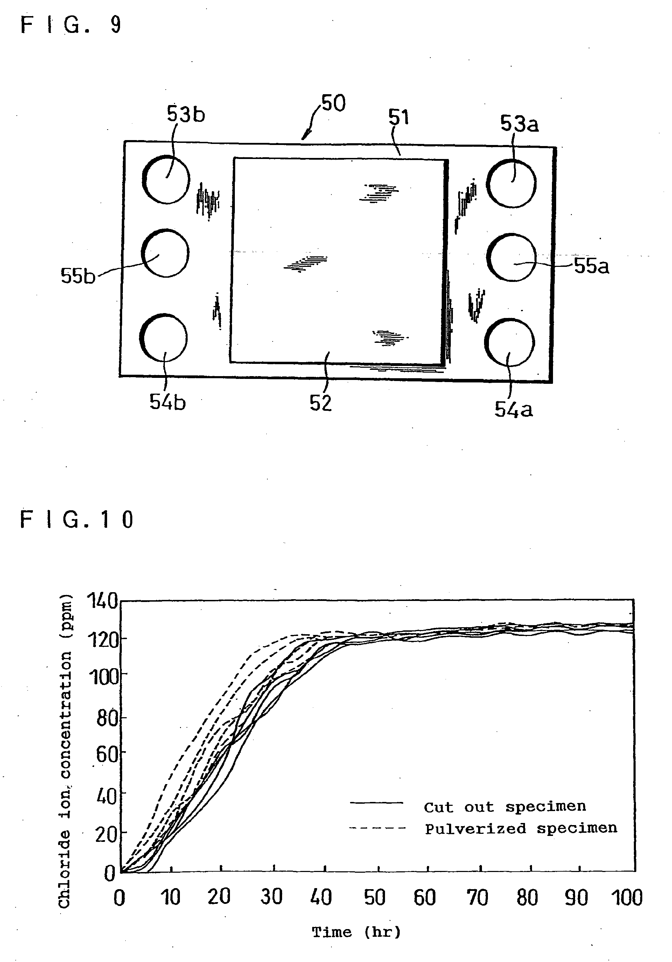

First, manifold holes for passing cooling water, a fuel gas and an oxidant gas were formed in the hydrogen ion conductive polymer electrolyte membrane of the MEA formed as shown in FIG. 5. FIG. 9 shows the structure of the MEA.

FIG. 9 is a front view of the MEA, in which the MEA 50 includes a polymer electrolyte membrane 51 and electrodes 52 sandwiching the membrane. The polymer electrolyte membrane 51 has an oxidant gas inlet manifold hole 53a, a fuel gas inlet manifold hole 54a and a cooling water inlet manifold hole 55a on an end thereof and an oxidant gas outlet manifold hole 53b, a fuel gas outlet manifold hole 54b and a cooling water outlet manifold hole 55b on the other end. These manifold holes are positioned and sized in the same manner as those of the separators 20 and 41 shown in FIGs. 6 to 8.

In the following examples, a stack of 100 cells was prepared by alternately stacking the MEAs 50 of FIG. 9 and the separators 20, in which a pair of separators 41 for providing a cooling section were inserted between every two cells. Then, a gasket provided with pairs of manifold holes for supplying and emitting the oxidant gas, fuel gas and cooling water was arranged to surround the electrode 52 between the polymer electrolyte membrane 51 and the conductive separator in every cell.

Then, on each end of the cell stack, an end plate was arranged with the intervention of a current collector plate made of stainless steel and an insulating plate made of an insulating material. Then, they were secured with fastening rods at the both ends. The fastening pressure at that time was 10 kgf/cm$^2$ per unit area of the separator.

(vii) Continuous power generation test

With the thus fabricated polymer electrolyte fuel cell kept at 85°C, a hydrogen gas heated and humidified to have a dew point at 83°C was supplied to the anode, while air heated and humidified to have a dew point at 78°C was supplied to the cathode. As a result, open-circuit voltage of about 96 V was obtained in a nonloaded state where no current was output.

This cell was subjected to a continuous power generation test under the conditions of fuel utilization ratio of 85%, oxygen utilization ratio of 50% and current density of 0.7 A/cm$^2$. Average voltage V1 after 24 hours of power generation and average voltage V2 after 10,000 hours of power generation were measured to calculate difference V3 between V1 and V2. Tables 7 to 9 show the results.

Comparative Example 46

A comparative separator free from the components to be leached, such as ions, was fabricated. This separator was prepared by cutting a gas flow channel on a 4 mm thick vitreous carbon plate of 10 cm $\times$ 20 cm.

In the same manner as the above, the separator was subjected to the leaching test. Then, the separator was used to fabricate a fuel cell under the above-mentioned conditions, which was subjected to the continuous power generation test. Table 9 shows the results.

[Results]

As to the separator of Comparative Example 46 made of a vitreous carbon plate containing no impurities, the amounts of the leached ions and TOC were below the measurement limit value. Further, the fuel cell using the separator showed a decrease of only 7.0 V in average voltage after 10,000 hour operation (V3 = 7.0 V). Accordingly, it was confirmed that deterioration in the fuel cell performance caused by other factors than the components leached from the separator is about 7.0 V.

In Example 1, high purity graphite and a fluorocarbon resin were used to form the separator, which showed less leaching of the organic substances and the ion species other than fluoride ions. The fuel cell using the separator showed a change in voltage of 6.9 V in the continuous power generation test, which was almost equal to the value obtained in Comparative Example 46 (7.0 V). The results indicated that the fuel cell performance does not deteriorate when the separator that is to leach the fluoride ions of about 50 $\mu$g in the leaching test is used.

In Comparative Examples 1 to 5, materials shown in Table 4 were used to form the separators, which were not subjected to the cleaning. Therefore, either of TOC, $NH_4^+$, $Cl^-$, $Br^-$ and $SO_3^{2-}$ was leached out in a large amount. As a result, the change in voltage (V3) was 14.3 to 22.3 V, which was two or three times higher than the value of Comparative Example 46. These results proved that the ions and the organic substances leached from the separator deteriorate the fuel cell performance independently. The separators of Examples 7-26 and Comparative Examples 6-45 were those of Comparative Examples 1-5 which were cleaned in a desired manner.

From a comparison of the separators of Examples 1, 2, 7, 12, 17 and 22, as well as those of Comparative Examples 1, 6, 11, 16, 21, 26, 31, 36 and 41 in terms of the amount of leached TOC, it was ascertained that the deterioration in the fuel cell performance occurred more remarkably than in Comparative Example 46 when the amount of leached TOC exceeded 300 $\mu$g.

From a comparison of the separators of Examples 1, 3, 8, 13, 18 and 23, as well as those of Comparative Examples 2, 7, 12, 17, 22, 27, 32, 37 and 42 in terms of the amount of leached $NH_4^+$, it was ascertained that the deterioration in the fuel cell performance occurred more remarkably than in Comparative Example 46 when the amount of leached $NH_4^+$ exceeded 50 $\mu$g.

From a comparison of the separators of Examples 1, 4, 9, 14, 19 and 24, as well as those of Comparative Examples 3, 8, 13, 18, 23, 28, 33, 38 and 43 in terms of the amount of leached $Cl^-$, it was ascertained that the deterioration in the fuel cell performance occurred more remarkably than in Comparative Example 46 when the amount of leached $Cl^-$ exceeded 50 $\mu$g.

From a comparison of the separators of Examples 1, 5, 10, 15, 20 and 25, as well as those of Comparative Examples 4, 9, 14, 19, 24, 29, 34, 39 and 44 in terms of the amount of leached $Br^-$, it was ascertained that the deterioration in the fuel cell performance occurred more remarkably than in Comparative Example 46 when the amount of leached $Br^-$ exceeded 20 $\mu$g.

From a comparison of the separators of Examples 1, 6, 11, 16, 21 and 26 as well as those of Comparative Examples 5, 10, 15, 20, 25, 30, 35, 40 and 45 in terms of the amount of leached $SO_3^{2-}$, it was ascertained that the deterioration in the fuel cell performance occurred more remarkably than in Comparative Example 46 when the amount of leached $SO_3^{2-}$ exceeded 10 $\mu$g.

From the above results, the allowable amounts of the leached ions and organic substances were determined. Further, the existence of the TOC did not affect the electric conductivity and the difference between voltages (V3). Since the electron conductivity of the water and the difference between voltages (V3) are less correlated with the fuel cell performance, it became clear that the electric conductivity of the water after the leaching test was not preferred as a criterion for judging the suitability of the separator.

From the results of Examples 2-26 and Comparative Examples 6-45, it was confirmed that the amounts of the leached components were controlled below the specified values by keeping the cleaning medium temperature at 80°C or higher and setting the cleaning time to 10 hours or longer.

Where sulfuric acid or carbonic acid was supplied to the pure water to reduce the pH, the effect of removing the ammonium ions was enhanced, whereas other components did not show any change in leached amount. However, in Comparative Examples 21-25, the separators varied in weight by 1 % or higher after being cleaned in the cleaning medium having pH of -0.6, i.e., chemical deterioration was caused in the separator material. Therefore, it was impossible to carry out the leaching test. In view of the above results, it was confirmed that the suitable pH range of the cleaning medium was -0.3 to 7.0.

Examples 27-32 and Comparative Examples 47-51

Using a conductive carbon material and a resin shown in Tables 10 and 11, a conductive separator was formed under the same conditions as those adopted in the foregoing Examples, which was cleaned using an ultrasonic cleaner under the conditions described in Tables 10 and 11.

Table 10

| Examples | | 27 | 28 | 29 | 30 | 31 | 32 |
|---|---|---|---|---|---|---|---|
| Materials | Conductive carbon material C (parts by weight) | 80 | 80 | 80 | 80 | 80 | 80 |
| | Resin B (parts by weight) | 20 | 20 | 20 | 20 | 20 | 20 |
| Cleaning conditions | Cleaning | Done | Done | Done | Done | Done | Done |
| | Cleaning medium | Pure $H_2O$ | Pure $H_2O$ | Pure $H_2O$ | $H_2SO_4$ | $H_2SO_4$ | $H_2SO_4$ |
| | Medium temperature (°C) | 80 | 80 | 100 | 80 | 80 | 95 |
| | Cleaning time (hr) | 1 | 2 | 1 | 1 | 2 | 1 |

Table 11

| Comparative Examples | | 47 | 48 | 49 | 50 | 51 |
|---|---|---|---|---|---|---|
| Materials | Conductive carbon material C (parts by weight) | 80 | 80 | 80 | 80 | 80 |
| | Resin B (parts by weight) | 20 | 20 | 20 | 20 | 20 |
| Cleaning conditions | Cleaning | Not done | Done | Done | Done | Done |
| | Cleaning medium | - | Pure $H_2O$ | Pure $H_2O$ | $H_2SO_4$ | $H_2SO_4$ |
| | Medium temperature (°C) | - | 95 | 60 | 95 | 60 |
| | Cleaning time (hr) | - | 0.5 | 2 | 0.5 | 2 |

The ultrasonic cleaner used was an acid resistant ultrasonic cleaner PUC-0715 manufactured by Tokyo Ultrasonic Engineering Co., Ltd. This ultrasonic cleaner was resistant to strong acids such as hydrofluoric acid, aqua regia, hydrochloric acid and sulfuric acid. The cleaner had a vibrating plate having high corrosion resistance and being made of a pure PVDF resin containing no additives. For these reasons, the cleaner was suitably used in the present invention.

In the cleaning operation, the separator was placed in the cleaner, the cleaning medium was poured into the cleaner so that the separator was completely submerged in the medium, and then the cleaner was turned on to operate for a desired period. Pure water used as the cleaning medium was the same as that used in the leaching test. Sulfuric acid used as the cleaning medium was diluted sulfuric acid of 1 mol/L prepared by adding commercially available concentrated sulfuric acid of reagent grade to the pure water. The temperature of the medium during the cleaning operation was controlled to either of 60°C, 80°C and 95°C by immersing in the cleaning medium a heater held in a quartz tube to prevent leaching of impurities. The cleaning time was set to either of 0.5 hours, an hour and 2 hours.

The cleaned separator was then subjected to the leaching test and the electric conductivity of the leaching test eluate was measured. Further, the cleaned separator was used to form a fuel cell under the same conditions as the above, which was subjected to the continuous power generation test in the same manner as the above. Table 12 shows the results.

Table 12

| | Leaching test | | | | | | Continuous Power generation test (V) | | |
|---|---|---|---|---|---|---|---|---|---|
| | Electric conductivity (µS/cm) | TOC (µg) | $NH_4^+$ (µg) | $F^-$ (µg) | $Cl^-$ (µg) | $Br^-$ (µg) | $SO_4^{2-}$ (µg) | V1 | V2 | V3 |
| Ex. 27 | 1679 | 295 | 48 | 28 | 46 | 19 | 9 | 68.8 | 61.9 | 6.9 |
| Ex. 28 | 1227 | 286 | 39 | 19 | 38 | 10 | ND | 68.4 | 61.5 | 6.8 |
| Ex. 29 | 1409 | 289 | 43 | 23 | 40 | 13 | 4 | 68.6 | 61.8 | 6.8 |
| Ex. 30 | 1617 | 293 | 47 | 27 | 44 | 19 | 8 | 69.0 | 61.8 | 7.1 |
| Ex. 31 | 1163 | 284 | 37 | 19 | 36 | 9 | ND | 69.1 | 62.1 | 7.0 |
| Ex. 32 | 1356 | 289 | 42 | 21 | 38 | 13 | 3 | 68.5 | 61.5 | 6.9 |
| Com. Ex. 47 | 5050 | 365 | 160 | 73 | 138 | 31 | 35 | 69.2 | Ceased | - |
| Com. Ex. 48 | 2507 | 328 | 75 | 37 | 68 | 25 | 18 | 68.9 | 13.2 | 55.7 |
| Com. Ex. 49 | 2872 | 341 | 82 | 42 | 85 | 28 | 21 | 68.2 | Ceased | - |
| Com. Ex. 50 | 2315 | 335 | 61 | 38 | 65 | 28 | 20 | 69.5 | 15.0 | 54.5 |
| Com. Ex. 51 | 2577 | 339 | 67 | 45 | 72 | 29 | 22 | 68.7 | Ceased | - |
| ND: Not Detected | | | | | | | | | | |

[Results]

The separator of Comparative Example 47 made of a combination of natural graphite and a novorak phenol resin leached all the components in amounts larger than the specified values as the criterion. Further, the fuel cell formed by using the separator showed a remarkably rapid decrease in voltage, causing polarity inversion in some unit cells in the continuous power generation test. Therefore, the test was abandoned before 10,000 hours was up. In a like manner, the fuel cells of Comparative Examples 49 and 51 also showed the rapid decrease in voltage and therefore the test was abandoned.

As to Examples 27-29 and Comparative Examples 48-49, the amounts of the leached components were reduced below the specified values as the criterion in the leaching test by controlling the cleaning medium temperature at 80°C or higher and the cleaning time to an hour or longer. By applying ultrasonic oscillation, the cleaning time became 10 times shorter than that required for cleaning the separator only by immersion in the cleaning medium.

Further, the results of Examples 30-32 and Comparative Examples 50-51 indicated that the fuel cell performance did not deteriorate even if an aqueous sulfuric acid was used as the cleaning medium.

Examples 33-35 and Comparative Examples 52-55

Using a conductive carbon material and a resin shown in Tables 13 and 14, a conductive separator was formed under the same conditions as those adopted in the foregoing Examples, which was cleaned by exposure to a humidified gas under the conditions described in Tables 13 and 14.

Table 13

| Examples | | 33 | 34 | 35 |
|---|---|---|---|---|
| Materials | Conductive carbon material C (parts by weight) | 80 | 80 | 80 |
| | Resin B (parts by weight) | 20 | 20 | 20 |

Table 13   (continued)

| Examples | | 33 | 34 | 35 |
|---|---|---|---|---|
| Cleaning conditions | Cleaning | Done | Done | Done |
| | Cleaning gas | Air | $CO_2$ | Air |
| | Gas temperature (°C) | 80 | 80 | 120 |
| | Cleaning time (hr) | 10 | 10 | 10 |

Table 14

| Comparative Examples | | 52 | 53 | 54 | 55 |
|---|---|---|---|---|---|
| Materials | Conductive carbon material C (parts by weight) | 80 | 80 | 80 | 80 |
| | Resin B (parts by weight) | 20 | 20 | 20 | 20 |
| Cleaning conditions | Cleaning | Done | Done | Done | Done |
| | Cleaning gas | Air | $CO_2$ | Air | $CO_2$ |
| | Gas Temperature (°C) | 60 | 60 | 120 | 120 |
| | Cleaning time (hr) | 15 | 15 | 5 | 5 |

In the cleaning operation, 10 ml of pure water and the separator were placed in a pressure-tight container of 15 cm in width, 5 cm in depth and 30 cm in height provided with two valves at the top and the bottom, respectively. Then, the container was sealed and left stand for 5, 10 or 15 hours in a thermostatic bath kept at 80°C or 120°C.

As a cleaning gas, air or carbon dioxide was used. When using carbon dioxide, air in the container was replaced with carbon dioxide by filling the container carrying the separator with pure water and then introducing carbon dioxide from the top valve while draining the pure water from the bottom valve.

The cleaned separator was subjected to the leaching test and the electric conductivity of the leaching test eluate was measured. Further, the cleaned separator was used to fabricate a fuel cell under the same conditions as the above, which was subjected to the continuous power generation test in the same manner as the above. Table 15 shows the results.

Table 15

| | Leaching test | | | | | | | Continuous Power test generation test (V) | | |
|---|---|---|---|---|---|---|---|---|---|---|
| | Electric conductivity (µS/cm) | TOC (µg) | $NH_4^+$ (µg) | $F^-$ (µg) | $Cl^-$ (µg) | $Br^-$ (µg) | $SO_3^{2-}$ (µg) | V1 | V2 | V3 |
| Ex. 33 | 1680 | 294 | 50 | 26 | 46 | 19 | 8 | 69.1 | 62.1 | 7.0 |
| Ex. 34 | 1646 | 292 | 47 | 27 | 44 | 18 | 9 | 68.7 | 61.7 | 7.0 |
| Ex. 35 | 1461 | 286 | 43 | 21 | 45 | 16 | 5 | 69.4 | 62.4 | 6.9 |
| Com. Ex. 52 | 2705 | 328 | 75 | 41 | 79 | 27 | 22 | 68.5 | Ceased | - |
| Com. Ex. 53 | 2451 | 331 | 62 | 42 | 73 | 26 | 21 | 68.5 | 11.9 | 56.6 |
| Com. Ex. 54 | 2341 | 318 | 65 | 38 | 65 | 25 | 18 | 69.7 | 23.5 | 46.2 |
| Com. Ex. 55 | 2276 | 321 | 60 | 40 | 62 | 24 | 20 | 68.4 | 22.2 | 46.2 |

[Results]

The results of Examples 33-35 indicated that the amounts of the leached components were reduced below the specified values as the criterion by exposing the separator to a humidified gas of a suitable temperature for a suitable period.

Examples 33 and 35 and Comparative Examples 52 and 54 proved that the gas temperature of 80°C or higher and the cleaning time of 10 hours or longer were required for the cleaning. Further, Example 34 and Comparative Examples 53 and 55 proved that an acidic gas such as a carbon dioxide gas was able to function as the cleaning gas without causing problems.

Examples 36-47 and Comparative Examples 56-69

Using a conductive carbon material and a resin shown in Tables 16 and 17, a conductive separator was formed under the same conditions as those adopted in the foregoing Examples, which was cleaned by electrolysis using the separator as an electrode in an electrolytic solution under the conditions described in Tables 16 and 17.

Table 16

| | Examples | 36 | 37 | 38 | 39 | 40 | 41 | 42 | 43 | 44 | 45 | 46 | 47 |
|---|---|---|---|---|---|---|---|---|---|---|---|---|---|
| Materials | Conductive carbon material C (parts by weight) | 80 | 80 | 80 | 80 | 80 | 80 | 80 | 80 | 80 | 80 | 80 | 80 |
| | Resin B (parts by weight) | 20 | 20 | 20 | 20 | 20 | 20 | 20 | 20 | 20 | 20 | 20 | 20 |
| Cleaning conditions | Cleaning | Done | Done | Done | Done | Done | Done | Done | Done | Done | Done | Done | Done |
| | Atmosphere | $H_2$ | $H_2$ | $H_2$ | Air | Air | Air | $H_2$ | $H_2$ | $H_2$ | Air | Air | Air |
| | Electrolytic solution | Pure $H_2O$ | Pure $H_2O$ | Pure $H_2O$ | Pure $H_2O$ | Pure $H_2O$ | Pure $H_2O$ | $H_2SO_4$ | $H_2SO_4$ | $H_2SO_4$ | $H_2SO_4$ | $H_2SO_4$ | $H_2SO_4$ |
| | pH | 7 | 7 | 7 | 7 | 7 | 7 | -0.3 | -0.3 | -0.3 | -0.3 | -0.3 | -0.3 |
| | Potential (V) | 0.2 | 0.05 | 0.2 | -0.5 | -0.1 | -0.5 | 0.2 | 0.05 | 0.2 | -0.5 | -0.1 | -0.5 |
| | Cleaning time (hr) | 0.5 | 0.5 | 1 | 0.5 | 0.5 | 1 | 0.5 | 0.5 | 1 | 0.5 | 0.5 | 1 |

Table 17

| | Comparative Examples | 56 | 57 | 58 | 59 | 60 | 61 | 62 | 63 | 64 | 65 | 66 | 67 | 68 | 69 |
|---|---|---|---|---|---|---|---|---|---|---|---|---|---|---|---|
| Materials | Conductive carbon material C (parts by weight) | 80 | 80 | 80 | 80 | 80 | 80 | 80 | 80 | 80 | 80 | 80 | 80 | 80 | 80 |
| | Resin B (parts by weight) | 20 | 20 | 20 | 20 | 20 | 20 | 20 | 20 | 20 | 20 | 20 | 20 | 20 | 20 |
| Cleaning conditions | Cleaning | Done | Done | Done | Done | Done | Done | Done | Done | Done | Done | Done | Done | Done | Done |
| | Atmosphere | $H_2$ | $H_2$ | $H_2$ | $H_2$ | Air | Air | Air | $H_2$ | $H_2$ | $H_2$ | Air | Air | Air | Air |
| | Electrolytic solution | Pure $H_2O$ | Pure $H_2O$ | Pure $H_2O$ | Pure $H_2O$ | Pure $H_2O$ | Pure $H_2O$ | Pure $H_2O$ | $H_2SO_4$ | $H_2SO_4$ | $H_2SO_4$ | $H_2SO_4$ | $H_2SO_4$ | $H_2SO_4$ | $H_2SO_4$ |
| | pH | 7 | 7 | 7 | 7 | 7 | 7 | 7 | -0.3 | -0.3 | -0.3 | -0.3 | -0.3 | -0.3 | -0.3 |
| | Potential (V) | 0.2 | 0.01 | 0.01 | 0.5 | -0.5 | -0.05 | -0.05 | 0.2 | 0.01 | 0.01 | 0.5 | -0.5 | -0.05 | -0.05 |
| | Cleaning time (hr) | 0.1 | 0.5 | 1 | 0.1 | 0.1 | 0.5 | 1 | 0.1 | 0.5 | 1 | 0.1 | 0.1 | 0.5 | 1 |

The electrolysis was performed by immersing the separator in an electrolytic solution contained in a reaction bath described below.

The separator to be cleaned was used as a working electrode and a platinum black mesh of 10 cm $\times$ 20 cm which had been platinized by passing electricity in an aqueous chloroplatinic acid was used as a counter electrode. Further, as a reference electrode, was used a 1 mm diameter platinum wire immersed in an aqueous solution of 0.5 M sulfuric acid in a test tube while bubbling hydrogen. The working electrode and the counter electrode were placed in a container of 30 cm in width, 5 cm in depth and 30 cm in height, in which pure water or diluted sulfuric acid prepared by adding sulfuric acid in the pure water was poured as an electrolytic solution such that the electrodes were completely submerged in the electrolytic solution. The working electrode and the counter electrode were fixed in parallel to each other with an interval of 5 mm. The reference electrode was so arranged to allow measurement of a difference relative to the potential near the working electrode surface via a salt bridge. During the electrolysis, air or hydrogen was bubbled in the electrolytic solution.

In the thus configured reaction bath, electrolysis was carried out while controlling the potential of the working electrode by a potentiostat. The potential of the working electrode during the electrolysis was controlled to either of - 0.5 V, -0.1 V, -0.05 V, 0.01 V, 0.2 V and 0.5 V with respect to the spontaneous potential and the electrolyzing time was set to 0.1 hours, 0.5 hours or an hour.

Then, the cleaned separator was subjected to the leaching test and the electric conductivity of the leaching test eluate was measured. Further, the cleaned separator was used to fabricate a fuel cell under the same conditions as the above, which was subjected to the continuous power generation test in the same manner as the above. Table 18 shows the results.

Table 18

| | Leaching test | | | | | | Continuous power generation test (V) | | |
|---|---|---|---|---|---|---|---|---|---|
| | Electric conductivity ($\mu$S/cm) | TOC ($\mu$g) | $NH_4^+$ ($\mu$g) | $F^-$ ($\mu$g) | $Cl^-$ ($\mu$g) | $Br^-$ ($\mu$g) | $SO_3^{2-}$ ($\mu$g) | V1 | V2 | V3 |
| Ex. 36 | 1447 | 290 | 30 | 33 | 46 | 16 | 8 | 68.7 | 61.6 | 7.1 |
| Ex. 37 | 848 | 294 | 25 | 10 | 36 | 6 | ND | 69.5 | 62.6 | 7.0 |
| Ex. 38 | 1250 | 285 | 50 | 16 | 24 | ND | 9 | 69.1 | 62.3 | 6.8 |
| Ex. 39 | 1370 | 286 | 38 | 21 | 41 | 4 | 15 | 68.5 | 61.5 | 7.0 |
| Ex. 40 | 993 | 289 | 35 | 5 | 38 | 12 | ND | 69.1 | 62.0 | 7.1 |
| Ex. 41 | 1212 | 279 | 40 | 24 | 36 | 10 | ND | 68.3 | 61.5 | 6.8 |
| Ex. 42 | 1539 | 287 | 46 | 27 | 48 | 10 | 1 | 69.4 | 62.4 | 7.0 |
| Ex. 43 | 1401 | 294 | 43 | 23 | 42 | 17 | ND | 69.0 | 62.1 | 6.9 |
| Ex. 44 | 1446 | 282 | 45 | 24 | 40 | 16 | 1 | 69.2 | 62.3 | 6.9 |
| Ex. 45 | 1250 | 284 | 20 | 33 | 51 | 16 | ND | 69.5 | 62.4 | 7.1 |
| Ex. 46 | 392 | 299 | 15 | 7 | 23 | ND | ND | 69.4 | 62.3 | 7.1 |
| Ex. 47 | 926 | 268 | 45 | 5 | 25 | ND | 1 | 69.3 | 62.3 | 7.0 |

Table 18 (continued)

| | Leaching test | | | | | | | Continuous power generation test (V) | | |
|---|---|---|---|---|---|---|---|---|---|---|
| | Electric conductivity ($\mu$S/cm) | TOC ($\mu$g) | $NH_4^+$ ($\mu$g) | $F^-$ ($\mu$g) | $Cl^-$ ($\mu$g) | $Br^-$ ($\mu$g) | $SO_3^{2-}$ ($\mu$g) | V1 | V2 | V3 |
| Com. Ex. 56 | 2716 | 332 | 76 | 51 | 71 | 23 | 19 | 68.1 | Ceased | - |
| Com. Ex. 57 | 3303 | 341 | 95 | 58 | 83 | 29 | 27 | 68.3 | Ceased | - |
| Com. Ex. 58 | 3086 | 338 | 91 | 54 | 75 | 26 | 25 | 69.9 | Ceased | - |
| Com. Ex. 59 | Test abandoned | | | | | | | | | |
| Com. 60 Ex. 60 | 2763 | 329 | 78 | 52 | 74 | 22 | 17 | 68.9 | 14.1 | 54.8 |
| Com. Ex. 61 | 3681 | 343 | 101 | 63 | 110 | 27 | 26 | 68.2 | Ceased | - |
| Com. Ex. 62 | 3407 | 331 | 94 | 58 | 102 | 26 | 23 | 69.3 | Ceased | - |
| Com. Ex. 63 | 2568 | 332 | 72 | 47 | 70 | 23 | 17 | 69.1 | 18.9 | 50.2 |
| Com. Ex. 64 | 3143 | 341 | 90 | 55 | 81 | 27 | 25 | 69.1 | Ceased | - |
| Com. Ex. 65 | 3009 | 333 | 91 | 52 | 72 | 24 | 25 | 69.5 | Ceased | - |
| Com. Ex. 66 | Test abandoned | | | | | | | | | |
| Com. Ex. 67 | 2613 | 328 | 75 | 48 | 74 | 18 | 13 | 68.0 | 25.1 | 42.9 |
| Com. Ex. 68 | 3567 | 339 | 100 | 60 | 109 | 24 | 23 | 68.7 | Ceased | - |
| Com. Ex. 69 | 3289 | 328 | 92 | 57 | 98 | 24 | 20 | 68.0 | Ceased | - |
| ND: Not Detected | | | | | | | | | | |

[Results]

Examples 36-47 proved that the amounts of the leached components in the leaching test were reduced below the specified values as the criterion by electrolyzing the separator at a suitable potential for a suitable period.

From the results of Examples 36-38 and Comparative Examples 56-58, it was proved that the required cleaning effect was exhibited by controlling the potential of the working electrode within the range of 0.05 to 0.2 V and the electrolyzing time to 0.5 hours or longer. On the other hand, in Comparative Example 59, gas generation occurred drastically at the initiation of the electrolysis, which made the electrolytic solution black and cloudy. Under these conditions, the separator varied in weight by about 5 % after the cleaning, which was not able to be subjected to the leaching test. For the same reason, it was impossible to carry out the leaching test in Comparative Example 66.

Examples 39-40 and Comparative Examples 60-62 proved that the required cleaning effect was exhibited by controlling the potential of the working electrode to -0.1 V or lower and the electrolyzing time to 0.5 hours or longer.

Further, according to Examples 42-47 and Comparative Examples 63-69, it was confirmed that the required cleaning effect was exhibited even if an aqueous sulfuric acid was used as the electrolytic solution under the same conditions. Examples 48-54 and Comparative Examples 70-77

Using a conductive carbon material and a resin shown in Tables 19 and 20, a conductive separator was formed under the same conditions as those adopted in the foregoing Examples. In these Examples, the conductive carbon material was sintered or cleaned under the conditions described in Tables 19 and 20 before being mixed with the resin.

Table 19

| Examples | | 48 | 49 | 50 | 51 | 52 | 53 | 54 |
|---|---|---|---|---|---|---|---|---|
| Materials | Conductive carbon material C (parts by weight) | 80 | 80 | 80 | 80 | 80 | 80 | 80 |
| | Resin D (parts by weight) | 20 | 20 | 20 | 20 | 20 | 20 | 20 |
| Cleaning conditions | Sintering | Done | Done | Not done | Not done | Not done | Not done | Not done |
| | Temperature (°C) | 500 | 550 | - | - | - | - | - |
| | Carbon material cleaning | Not done | Not done | Done | Done | Done | Done | Done |
| | Cleaning medium | - | - | Pure $H_2O$ | Pure $H_2O$ | Pure $H_2O$ | $H_2SO_4$ | Pure $H_2O$ |
| | $CO_2$ bubbling | - | - | Not done | Not done | Not done | Not done | Done |
| | Cleaning medium pH | - | - | 7 | 7 | 7 | -0.3 | 4 |
| | Medium temperature (°C) | - | - | 80 | 80 | 100 | 80 | 80 |
| | Cleaning time (hr) | - | - | 10 | 15 | 10 | 10 | 10 |

Table 20

| Comparative examples | | 70 | 71 | 72 | 73 | 74 | 75 | 76 | 77 |
|---|---|---|---|---|---|---|---|---|---|
| Materials | Conductive carbon material C (parts by weight) | 80 | 80 | 80 | 80 | 80 | 80 | 80 | 80 |
| | Resin D (parts by weight) | 20 | 20 | 20 | 20 | 20 | 20 | 20 | 20 |
| Cleaning conditions | Sintering | Done | Not done | Not done | Not done | Not done | Not done | Not done | Not done |
| | Temperature ($°C$) | 450 | - | - | - | - | - | - | - |
| | Carbon material Cleaning | Not done | Done | Done | Done | Done | Done | Done | Done |
| | Cleaning medium | - | Pure $H_2O$ | Pure $H_2O$ | Pure $H_2O$ | $H_2SO_4$ | $H_2SO_4$ | Pure $H_2O$ | Pure $H_2O$ |
| | $CO_2$ bubbling | - | Not done | Not done | Not done | Not done | Not done | Done | Done |
| | Cleaning medium pH | - | 7 | 7 | 7 | -0.3 | -0.3 | 4 | 4 |
| | Medium temperature ($°C$) | - | 80 | 60 | 100 | 60 | 100 | 60 | 100 |
| | Cleaning time (hr) | - | 5 | 15 | 5 | 15 | 5 | 10 | 5 |

In the sintering operation, natural graphite used as the conductive carbon material was placed in an electric furnace, which was sintered in an Ar atmosphere at 450°C, 500°C or 550°C for an hour. Then, the electric furnace was turned off and left stand until it cooled down to room temperature. At that time, the increase and decrease in temperature were not particularly controlled.

In the cleaning operation, natural graphite was placed in a cleaning medium in an acid- and heat-resistant container, which was heated with a heater placed outside the container to keep the cleaning medium at a desired temperature for a desired period. The cleaning solution used was pure water the same as the one used in the above-described leaching test or diluted sulfuric acid of 1 mol/L prepared by adding commercially available concentrated sulfuric acid of reagent grade to the pure water.

In the case of bubbling a gas containing carbon dioxide during the cleaning with pure water, a carbon dioxide gas was supplied from a liquefied carbon dioxide cylinder. The pH of the cleaning medium was adjusted to 7, -0.3 or 4 where pure water alone or pure water added with sulfuric acid or carbon dioxide was used as the cleaning medium. The medium temperature during the cleaning was controlled to 60°C, 80°C or 100°C and the cleaning time was set to 5 hours, 10 hours or 15 hours.

Then, the cleaned conductive carbon material was subjected to the leaching test and the electric conductivity of the leaching test eluate was measured. Further, the cleaned conductive carbon material was used to form a conductive separator under the same conditions as the above, which was also subjected to the leaching test and the electric conductivity of the leaching test eluate was measured. Moreover, the separator was used to fabricate a fuel cell, which was subjected to the continuous power generation test in the same manner as described above. Table 21 shows the results.

Table 21

| | Test specimen | Leaching test | | | | | | | Continuous power generation test (V) | | |
|---|---|---|---|---|---|---|---|---|---|---|---|
| | | Electric conductivity (µS/cm) | TOC (µg) | $NH_4^+$ (µg) | $F^-$ (µg) | $Cl^-$ (µg) | $Br^-$ (µg) | $SO_3^{2-}$ (µg) | V1 | V2 | V3 |
| Ex. 48 | Carbon material | 920 | 282 | 24 | 13 | 40 | ND | 2 | - | - | - |
| | Separator | 739 | 225 | 19 | 11 | 32 | ND | 2 | 69.8 | 62.7 | 7.1 |
| Ex. 49 | Carbon material | 925 | 273 | 39 | ND | 33 | 3 | ND | - | - | - |
| | Separator | 742 | 219 | 32 | ND | 26 | 2 | ND | 69.3 | 62.2 | 7.1 |
| Ex. 50 | Carbon material | 887 | 271 | 24 | 17 | 33 | ND | ND | - | - | - |
| | Separator | 712 | 217 | 20 | 14 | 26 | ND | ND | 68.1 | 60.8 | 7.2 |
| Ex. 51 | Carbon material | 1183 | 290 | 32 | 24 | 38 | 6 | 2 | - | - | - |
| | Separator | 948 | 232 | 25 | 19 | 31 | 5 | 2 | 69.1 | 61.9 | 7.1 |
| Ex. 52 | Carbon material | 858 | 282 | 27 | 5 | 32 | 17 | ND | - | - | - |
| | Separator | 689 | 226 | 21 | 4 | 26 | 14 | ND | 69.8 | 62.5 | 7.3 |
| Ex. 53 | Carbon material | 1054 | 282 | 14 | 12 | 37 | 13 | ND | - | - | - |
| | Separator | 846 | 226 | 12 | 10 | 29 | 11 | ND | 70.0 | 62.9 | 7.1 |
| Ex. 54 | Carbon material | 930 | 281 | 16 | 19 | 47 | 3 | ND | - | - | - |
| | Separator | 746 | 225 | 13 | 15 | 38 | 2 | ND | 68.9 | 61.7 | 7.2 |
| Com. Ex. 70 | Carbon material | 2314 | 325 | 59 | 47 | 63 | 25 | 15 | - | - | - |
| | Separator | 2689 | 313 | 55 | 90 | 57 | 23 | 14 | 68.5 | 43.3 | 25.3 |
| Com. Ex. 71 | Carbon material | 2351 | 325 | 62 | 38 | 68 | 25 | 21 | - | - | - |
| | Separator | 2722 | 313 | 58 | 82 | 61 | 23 | 19 | 68.4 | 29.4 | 39.0 |
| Com. Ex. 72 | Carbon material | 4209 | 338 | 121 | 68 | 124 | 26 | 31 | - | - | - |
| | Separator | 4396 | 324 | 111 | 109 | 112 | 23 | 28 | 70.0 | Ceased | - |
| Com. Ex. 73 | Carbon material | 2079 | 318 | 57 | 31 | 61 | 23 | 17 | - | - | - |
| | Separator | 2480 | 306 | 53 | 76 | 55 | 21 | 15 | 68.6 | 44.5 | 24.1 |
| Com. Ex. 74 | Carbon material | 2158 | 323 | 59 | 35 | 63 | 23 | 15 | - | - | - |
| | Separator | 2552 | 311 | 55 | 80 | 57 | 21 | 14 | 70.0 | 46.7 | 23.3 |

Table 21 (continued)

| | Test specimen | Leaching test | | | | | | | Continuous power generation test (V) | | |
|---|---|---|---|---|---|---|---|---|---|---|---|
| | | Electric conductivity (µS/cm) | TOC (µg) | $NH_4^+$ (µg) | $F^-$ (µg) | $Cl^-$ (µg) | $Br^-$ (µg) | $SO_3^{2-}$ (µg) | V1 | V2 | V3 |
| Com. Ex. 75 | Carbon material | 2038 | 318 | 56 | 34 | 58 | 23 | 13 | - | - | - |
| | Separator | 2442 | 306 | 52 | 79 | 52 | 21 | 12 | 69.9 | 54.3 | 15.6 |
| Com. Ex. 76 | Carbon material | 2208 | 324 | 60 | 36 | 64 | 23 | 16 | - | - | - |
| | Separator | 2594 | 312 | 56 | 81 | 58 | 21 | 15 | 68.7 | 42.1 | 26.6 |
| Com. Ex. 77 | Carbon material | 2081 | 318 | 57 | 35 | 58 | 24 | 15 | - | - | - |
| | Separator | 2479 | 306 | 53 | 79 | 53 | 21 | 13 | 69.0 | 49.1 | 19.9 |
| ND: Not Detected | | | | | | | | | | | |

[Results]

From a comparison between the leaching test results of the conductive carbon materials and the separators of Examples 48-54 and Comparative Examples 70-77, it was found that the amounts of the leached components from the separator were smaller than those leached from the conductive carbon material in every Example. These results indicated that the allowable amounts of the components leached from the conductive carbon material may be the same as the specified values as the criterion of the leached components from the separator.

From the results of Examples 48 and 49 and Comparative Example 70, it was ascertained that impurities in the conductive carbon material were reduced to the desired level by sintering the conductive carbon material at a temperature of 500°C or higher.

From the results of Examples 50-52 and Comparative Examples 71-73, it was proved that the amounts of the leached components were reduced below the specified values as the criterion by immersing the conductive carbon material in the cleaning medium of 80°C or higher for 10 hours or longer.

Further, the results of Examples 53-54 and Comparative Examples 74-77 proved that reduction in pH of the cleaning medium by adding sulfuric acid or carbon dioxide to the pure water allowed more effective extraction of ammonium ions, though the extraction of other components than the ammonium ions was not enhanced.

Examples 55-60 and Comparative Examples 78-81

Using a conductive carbon material and a resin shown in Tables 22 and 23, a conductive separator was formed under the same conditions as those adopted in the foregoing Examples except that the conductive carbon material was cleaned before being mixed with the resin using an ultrasonic cleaner under the conditions described in Tables 22 and 23.

Table 22

| Examples | | 55 | 56 | 57 | 58 | 59 | 60 |
|---|---|---|---|---|---|---|---|
| Materials | Conductive carbon material C (parts by weight) | 80 | 80 | 80 | 80 | 80 | 80 |
| | Resin D (parts by weight) | 20 | 20 | 20 | 20 | 20 | 20 |

Table 22   (continued)

| Examples | | 55 | 56 | 57 | 58 | 59 | 60 |
|---|---|---|---|---|---|---|---|
| Cleaning conditions | Carbon material cleaning | Done | Done | Done | Done | Done | Done |
| | Cleaning medium | Pure $H_2O$ | Pure $H_2O$ | Pure $H_2O$ | $H_2SO_4$ | $H_2SO_4$ | $H_2SO_4$ |
| | Medium temperature (°C) | 80 | 80 | 100 | 80 | 80 | 100 |
| | Cleaning time (hr) | 1 | 2 | 1 | 1 | 2 | 1 |

Table 23

| Comparative Examples | | 78 | 79 | 80 | 81 |
|---|---|---|---|---|---|
| Materials | Conductive Carbon material C (parts by weight) | 80 | 80 | 80 | 80 |
| | Resin D (parts by weight) | 20 | 20 | 20 | 20 |
| Cleaning conditions | Carbon material cleaning | Done | Done | Done | Done |
| | Cleaning medium | Pure $H_2O$ | Pure $H_2O$ | $H_2SO_4$ | $H_2SO_4$ |
| | Medium temperature (°C) | 100 | 60 | 100 | 60 |
| | Cleaning time (hr) | 0.5 | 2 | 0.5 | 2 |

For the reasons described in the foregoing Examples, the ultrasonic cleaner used was an acid resistant ultrasonic cleaner PUC-0715 manufactured by Tokyo Ultrasonic Engineering Co., Ltd.

In the cleaning operation, the natural graphite was placed in the cleaner, a cleaning medium was poured into the cleaner so that the natural graphite was completely submerged in the medium, and then the cleaner was turned on to operate for a desired period. The cleaning medium used was pure water same as the one used in the above-described leaching test or diluted sulfuric acid of 1 mol/L prepared by adding commercially available concentrated sulfuric acid of reagent grade to the pure water. The temperature of the medium during the cleaning operation was controlled to 60°C, 80°C or 100°C by immersing in the cleaning medium a heater contained in a quartz tube to prevent leaching of impurities. The cleaning time was set to 0.5 hours, an hour or 2 hours.

The cleaned conductive carbon material was then subjected to the leaching test and the electric conductivity of the leaching test eluate was measured. Further, the cleaned conductive carbon material was used to form a separator under the same conditions as those described above, which was also subjected to the leaching test and the electric conductivity of the leaching test eluate was measured. Moreover, the separator was used to fabricate a fuel cell, which was subjected to the continuous power generation test in the same manner as the above. Table 24 shows the results.

Table 24

| | Test specimen | Leaching test | | | | | | Continuous power generation test (V) | | |
|---|---|---|---|---|---|---|---|---|---|---|
| | | Electric conductivity ($\mu$S/cm) | TOC TOC ($\mu$g) | $NH_4^+$ ($\mu$g) | F- ($\mu$g) | Cl- ($\mu$g) | Br- ($\mu$g) | $SO_3^{2-}$ ($\mu$g) | V1 | V2 | V3 |
| Ex. 55 | Carbon material | 403 | 295 | 11 | ND | 24 | ND | ND | - | - | - |
| | Separator | 324 | 236 | 9 | ND | 19 | ND | ND | 70.0 | 62.9 | 7.1 |
| Ex. 56 | Carbon material | 651 | 260 | 33 | ND | 16 | ND | ND | - | - | - |
| | Separator | 523 | 208 | 26 | ND | 13 | ND | ND | 68.5 | 61.5 | 7.1 |

Table 24   (continued)

| | Test specimen | Leaching test | | | | | | | Continuous power generation test (V) | | |
|---|---|---|---|---|---|---|---|---|---|---|---|
| | | Electric conductivity ($\mu$S/cm) | TOC TOC ($\mu$g) | $NH_4^+$ ($\mu$g) | F- ($\mu$g) | Cl- ($\mu$g) | Br- ($\mu$g) | $SO_3^{2-}$ ($\mu$g) | V1 | V2 | V3 |
| Ex. 57 | Carbon material | 620 | 274 | 12 | 3 | 41 | ND | ND | - | - | - |
| | Separator | 498 | 219 | 10 | 3 | 33 | ND | ND | 69.8 | 62.8 | 7.0 |
| Ex. 58 | Carbon material | 858 | 265 | 33 | ND | 31 | 10 | ND | - | - | - |
| | Separator | 689 | 212 | 27 | ND | 25 | 8 | ND | 69.4 | 62.1 | 7.3 |
| Ex. 59 | Carbon material | 816 | 261 | 21 | 14 | 35 | ND | ND | - | - | - |
| | Separator | 655 | 209 | 16 | 11 | 28 | ND | ND | 69.4 | 62.2 | 7.3 |
| Ex. 60 | Carbon material | 961 | 295 | 27 | 13 | 37 | 5 | 3 | - | - | - |
| | Separator | 771 | 236 | 21 | 10 | 29 | 4 | 2 | 69.3 | 62.2 | 7.0 |
| Com. Ex. 78 | Carbon material | 2585 | 325 | 65 | 51 | 72 | 28 | 19 | - | - | - |
| | Separator | 2934 | 313 | 61 | 94 | 65 | 25 | 17 | 68.7 | 28.3 | 40.3 |
| Com. Ex. 79 | Carbon material | 3292 | 357 | 88 | 58 | 101 | 26 | 21 | - | - | - |
| | Separator | 3570 | 341 | 81 | 100 | 91 | 23 | 19 | 69.6 | Ceased | - |
| Com. Ex. 80 | Carbon material | 2458 | 322 | 63 | 47 | 68 | 27 | 17 | - | - | - |
| | Separator | 2819 | 310 | 59 | 90 | 61 | 25 | 15 | 69.8 | 35.6 | 34.2 |
| Com. Ex. 81 | Carbon material | 3190 | 354 | 84 | 56 | 100 | 25 | 20 | - | - | - |
| | Separator | 3479 | 338 | 78 | 99 | 90 | 23 | 18 | 69.7 | Ceased | - |
| ND: Not detected | | | | | | | | | | | |

[Results]

From the results of Examples 55-57 and Comparative Examples 78 and 79, it was confirmed that the amounts of the leached components were reduced below the specified values as the criterion by keeping the cleaning medium temperature at 80°C or higher and setting the cleaning time to an hour or longer. By applying ultrasonic oscillation, the cleaning time became 10 times shorter than that required for cleaning the conductive carbon material only by immersion in the cleaning medium.

Examples 61-63 and Comparative Examples 82-85

Using a conductive carbon material and a resin shown in Tables 25 and 26, a conductive separator was formed under the same conditions as those adopted in the foregoing Examples except that the conductive carbon material was cleaned before being mixed with the resin by exposure to a humidified gas under the conditions described in Tables 25 and 25.

Table 25

| Examples | | 61 | 62 | 63 |
|---|---|---|---|---|
| Materials | Conductive carbon material C (parts by weight) | 80 | 80 | 80 |
| | Resin B (parts by weight) | 20 | 20 | 20 |
| Cleaning conditions | Carbon material cleaning | Done | Done | Done |
| | Cleaning gas | Air | $CO_2$ | Air |
| | Gas temperature (°C) | 80 | 80 | 120 |
| | Cleaning time (hr) | 10 | 10 | 10 |

Table 26

| Comparative Examples | | 82 | 83 | 84 | 85 |
|---|---|---|---|---|---|
| Materials | Conductive carbon material C (parts by weight) | 80 | 80 | 80 | 80 |
| | Resin B (parts by weight) | 20 | 20 | 20 | 20 |
| Cleaning conditions | Carbon material cleaning | Done | Done | Done | Done |
| | Cleaning gas | Air | $CO_2$ | Air | $CO_2$ |
| | Gas temperature □°C□ | 60 | 60 | 120 | 120 |
| | Cleaning time (hr) | 15 | 15 | 5 | 5 |

In the cleaning operation, 10 ml of pure water and 100 g of the conductive carbon material were placed in a pressure-tight container of 15 cm in width, 5 cm in depth and 30 cm in height provided with two valves at the top and the bottom. Then, the container was sealed and left stand in a thermostatic bath kept at 80°C or 120°C for 5, 10 or 15 hours.

As a cleaning gas, air or carbon dioxide was used. When using carbon dioxide, air in the container was replaced with carbon dioxide by filling the container carrying the conductive carbon material with pure water and then introducing carbon dioxide from the top valve while draining the pure water from the bottom valve through a paper filter.

The cleaned conductive carbon material was then subjected to the leaching test and the electric conductivity of the leaching test eluate was measured. Further, the cleaned conductive carbon material was used to form a separator under the same conditions as those described above, which was also subjected to the leaching test and the electric conductivity of the leaching test eluate was measured. Moreover, the separator was used to fabricate a fuel cell, which was subjected to the continuous power generation test in the same manner as the above. Table 27 shows the results.

Table 27

| | Test specimen | Leaching test | | | | | | | Continuous power generation test (V) | | |
|---|---|---|---|---|---|---|---|---|---|---|---|
| | | Electric conductivity (μS/cm) | TOC (μg) | $NH_4^+$ (μg) | $F^-$ (μg) | $Cl^-$ (μg) | $Br^-$ (μg) | $SO_3^{2-}$ (μg) | V1 | V2 | V3 |
| Ex. 61 | Carbon material | 755 | 280 | 29 | ND | 27 | 9 | ND | - | - | - |
| | Separator | 606 | 224 | 24 | ND | 22 | 7 | ND | 69.0 | 61.9 | 7.1 |
| Ex. 62 | Carbon material | 774 | 273 | 29 | 3 | 24 | 12 | ND | - | - | - |
| | Separator | 621 | 219 | 23 | 2 | 19 | 10 | ND | 69.4 | 62.1 | 7.3 |
| Ex. 63 | Carbon material | 560 | 284 | 6 | 13 | 33 | ND | ND | - | - | - |
| | Separator | 450 | 227 | 5 | 11 | 26 | ND | ND | 69.1 | 62.1 | 7.0 |

Table 27   (continued)

| | Test specimen | Leaching test | | | | | | | Continuous power generation test (V) | | |
|---|---|---|---|---|---|---|---|---|---|---|---|
| | | Electric conductivity ($\mu$S/cm) | TOC ($\mu$g) | $NH_4^+$ ($\mu$g) | $F^-$ ($\mu$g) | $Cl^-$ ($\mu$g) | $Br^-$ ($\mu$g) | $SO_3^{2-}$ ($\mu$g) | V1 | V2 | V3 |
| Com. Ex. 82 | Carbon material | 4853 | 360 | 157 | 69 | 134 | 28 | 30 | - | - | - |
| | Separator | 4976 | 344 | 143 | 110 | 121 | 25 | 27 | 68.6 | Ceased | - |
| Com. Ex. 83 | Carbon material | 4809 | 359 | 156 | 68 | 133 | 27 | 28 | - | - | - |
| | Separator | 4935 | 343 | 142 | 110 | 120 | 24 | 25 | 68.8 | Ceased | - |
| Com. Ex. 84 | Carbon material | 2130 | 317 | 58 | 34 | 63 | 22 | 15 | - | - | - |
| | Separator | 2523 | 305 | 54 | 79 | 57 | 20 | 14 | 68.4 | 47.4 | 21.0 |
| Com. Ex. 85 | Carbon material | 1999 | 323 | 54 | 36 | 57 | 19 | 13 | - | - | - |
| | Separator | 2406 | 311 | 51 | 80 | 51 | 17 | 12 | 70.0 | 55.6 | 14.4 |
| ND: Not detected | | | | | | | | | | | |

[Results]

From the results of Examples 61-63, it was confirmed that the amounts of the leached components were reduced below the specified values as the criterion by exposing the conductive carbon material to a humidified gas of a suitable temperature for a suitable period.

Examples 61 and 63 and Comparative Examples 82 and 84 proved that the gas temperature of 80°C or higher and the cleaning time of 10 hours or longer were required for the cleaning method. Further, Example 62 and Comparative Examples 83 and 85 proved that an acidic gas such as a carbon dioxide gas was able to function as the cleaning gas without causing problems.

According to the present invention, the amounts of TOC, ammonium ions, chloride ions, bromide ions and sulfite ions leached out of the separator of the fuel cell are controlled not to exceed the specified values as the criterion, thereby inhibiting the deterioration in the fuel cell performance through long-term continuous operation.

Further, production of a separator capable of inhibiting the performance deterioration is allowed by: using as the separator materials a conductive carbon material and a resin that cause the leaching of the above-mentioned components in amounts below the specified values as the criterion; cleaning the separator materials; or cleaning the molded separator. Therefore, a separator can be formed using an inexpensive resin having excellent workability and formability, improving the productivity of the separator of the fuel cell.

From the separator of Comparative Example 82, 10 specimens of the same weight were cut and five of which were pulverized to have an average particle diameter of 95 $\mu$m, 98 $\mu$m, 105 $\mu$m, 113 $\mu$m and 120 $\mu$m, respectively. The 10 specimens (five of which were just cut out and the other five were pulverized) were immersed in pure water, which was kept at 90°C and had electric conductivity of 1 $\mu$S/cm or lower, to leach out soluble components. Then, the concentrations of the leached components in the eluate were measured every five hours. FIG. 10 shows a relationship between the testing time and the concentration of leached chloride ions.

According to FIG. 10, the leached components varied in amount after a while from the initiation of the leaching test. However, after 50 hours had passed, the variation in leached amounts was reduced irrespective of the surface areas (average particle diameter) and shapes of the specimens and then every specimen showed the leached amounts of a similar level.

Examples 64-68 and Comparative Examples 86-91

A conductive separator containing a trapping agent was formed.

Material mixtures composed as shown in Tables 28 and 29 (in the unit of parts by weight) were mixed in a kneader and formed into a pellet of 3 mm diameter $\times$ 5mm by extrusion molding. Using an injection molding machine provided with a mold for forming the separator, this pellet was injection-molded into a conductive separator under the following molding conditions. As to Example 68 and Comparative Example 90, the separator was formed by compression molding under the following conditions because fluidity of the pellet in the molten state was not enough to perform the injection molding.

[Molding conditions]

1) Injection molding

| Cylinder temperature | 90°C |
|---|---|
| Injection pressure | 180 MPa |
| Injection time | 10 sec. |
| Mold temperature | 180°C |
| Curing time | 60 sec. |

2) Compression molding

| Molding pressure | 190 MPa |
|---|---|
| Molding temperature | 180°C |
| Molding time | 300 sec. |

Table 28

| | | Ex. 64 | Ex. 65 | Ex. 66 | Ex. 67 | Ex. 68 |
|---|---|---|---|---|---|---|
| Conductive carbon | Artificial graphite | 80 | 80 | 80 | 80 | 80 |
| Binder resin | Cresol novorak type epoxy resin | 12 | 12 | 12 | 12 | - |
| | Novorak type phenol resin | - | - | - | - | 12 |
| Curing agent | Polycarbodiimide resin | 8 | 8 | 8 | 8 | - |
| | Hexamethylene tetramine | - | - | - | - | 8 |
| Accelerator | Dimethylbenzylamine | 0.2 | 0.2 | 0.2 | 0.2 | - |
| Trapping agent | Cation exchanger*1 | 1 | - | - | - | 1 |
| | Anion exchanger*2 | 1 | - | - | - | 1 |
| | Cation and anion Exchanger*3 | - | 2 | - | - | - |
| | Silica gel*4 particle diameter 1-5 μm | - | - | 2 | 0.2 | - |
| | Silica gel*5 Particle diameter 10-14 μm | - | - | - | - | - |

Table 29

| | | Com. Ex. 86 | Com. Ex. 87 | Com. Ex. 88 | Com. Ex. 89 | Com. Ex. 90 |
|---|---|---|---|---|---|---|
| Conductive carbon | Artificial graphite | 80 | 80 | 80 | 80 | 80 |

Table 29 (continued)

| | | Com. Ex. 86 | Com. Ex. 87 | Com. Ex. 88 | Com. Ex. 89 | Com. Ex. 90 |
|---|---|---|---|---|---|---|
| Binder resin | Cresol novorak type epoxy resin | 12 | 12 | 12 | 12 | - |
| | Novorak type phenol resin | - | - | - | - | 12 |
| Curing agent | Polycarbodiimide resin | 8 | 8 | 8 | 8 | - |
| | Hexamethylene tetramine | - | - | - | - | 8 |
| Accelerator | Dimethylbenzylamine | 0.2 | 0.2 | 0.2 | 0.2 | - |
| Trapping agent | Cation exchanger[*1] | - | 2 | 0.5 | - | - |
| | Anion exchanger[*2] | - | 2 | 0.5 | - | - |
| | Cation and anion exchanger[*3] | - | - | - | - | - |
| | Silica gel[*4] Particle diameter 0.4-1.0 μm | - | - | - | - | - |
| | Silica gel[*5] Particle diameter 8-18 μm | - | - | - | 2 | - |

In Tables 28 and 29, *1 is a zirconium based cation exchanger IXE-100 manufactured by TOAGOSEI CO., LTD., *2 is a zirconium based anion exchanger IXE-800 manufactured by TOAGOSEI CO., LTD., *3 is an antimony and bismuth based cation and anion exchanger IXE-600 manufactured by TOAGOSEI CO., LTD., *4 is SUNSPHERE® H-31 manufactured by ASAHI GLASS CO., LTD. classified through a mesh and *5 is SUNSPHERE® H-121 manufactured by ASAHI GLASS CO., LTD. classified through a mesh.

In the above-described manner, the conductive separator 20 shown in FIGs. 6 and 7 and the separator 41 having a cooling water flow channel as shown in FIG. 8 were formed. The separator 20 had a size of 10 cm × 20 cm and a thickness of 4 mm. The grooves 26 and 30 had a depth of 1.5 mm and the ribs 28 and 32 had a width of 1 mm. The gas flow channels 29 and 33 between the ribs had a width of 2 mm. The separator 41 was in the same size as the separator 20 and the groove 46 to be functioned as the cooling water flow channel had a depth of 1.5 mm.

Using the thus obtained separators and the MEA configured as described above, a fuel cell was fabricated in the same manner as the above.

On the other hand, a comparative separator which does not cause the leaching of ions was prepared by cutting a gas flow channel on a vitreous carbon plate having the same size and thickness as described above. Using the comparative separator, a fuel cell of Comparative Example 91 was fabricated.

With the thus fabricated polymer electrolyte fuel cells of Examples 64-68 and Comparative Examples 86-91 kept at 85°C, a hydrogen gas heated and humidified to have a dew point at 83°C was supplied to the anode, while air heated and humidified to have a dew point at 78°C was supplied to the cathode. As a result, open-circuit voltage of about 96 V was obtained in a nonloaded state where no current was output.

These cells were subjected to the continuous power generation test under the conditions of fuel utilization ratio of 80%, oxygen utilization ratio of 50% and current density of 0.7 A/cm$^2$. Average voltages after 24-hour power generation and 8,000-hour power generation were measured. Table 30 shows the results.

Table 30

| | Voltage after 24 hrs (V) | Voltage after 8000 hrs (V) | Change in voltage (V) |
|---|---|---|---|
| Ex. 64 | 69.2 | 62.4 | -6.8 |
| Ex. 65 | 69.1 | 62.2 | -6.9 |
| Ex. 66 | 69.3 | 62.4 | -6.9 |
| Ex. 67 | 69.6 | 62.8 | -6.8 |

Table 30   (continued)

|  | Voltage after 24 hrs (V) | Voltage after 8000 hrs (V) | Change in voltage (V) |
|---|---|---|---|
| Ex. 68 | 69.2 | 62.4 | -6.8 |
| Com. Ex. 86 | 69.6 | 58.6 | -11.0 |
| Com. Ex. 87 | 67.8 | 61.4 | -6.4 |
| Com. Ex. 88 | 69.5 | 58.9 | -10.6 |
| Com. Ex. 89 | 68.3 | 60.1 | -8.2 |
| Com. Ex. 90 | 69.6 | 59.4 | -10.2 |
| Com. Ex. 91 | 70.0 | 63.1 | -6.9 |

The change in voltage in the fuel cells of Examples 64-68 was smaller than that in the fuel cells of Comparative Examples 86-90, and equal to that in the fuel cell of Comparative Example 91. Thus, it was confirmed that the fuel cell performance was improved by the addition of a proper amount of a trapping agent having a suitable particle diameter.

Examples 69-70 and Comparative Examples 92-93

To the separator of Comparative Example 90, a dispersion of perfluorocarbon sulfonic acid powder in ethyl alcohol was applied as the trapping agent using a spray, which was dried in a thermostatic bath of 80°C for 30 minutes. This operation was performed several times to obtain separators coated with films comprising the trapping agent of various thicknesses as shown in Table 31.

Table 31

|  | Ex. 69 | Ex. 70 | Com. Ex. 92 | Com. Ex. 93 |
|---|---|---|---|---|
| Thickness of trapping agent film (µm) | 1 | 50 | 0.5 | 100 |

Then, using the obtained separators and the same MEAs as those in the above, fuel cells were fabricated in the same manner as the above. The thus obtained polymer electrolyte fuel cells of Examples 69-70 and Comparative Examples 92-93 were operated under the same conditions described in the foregoing Example. As a result, open-circuit voltage of about 96 V was obtained in a nonloaded state where no current was output. Further, these cells were subjected to the continuous power generation test to measure average voltages after 24-hour power generation and 8,000-hour power generation. Table 32 shows the results.

Table 32

|  | Voltage after 24 hrs (V) | Voltage after 8000 hrs (V) | Change in voltage (V) |
|---|---|---|---|
| Ex. 69 | 69.2 | 62.4 | -6.8 |
| Ex. 70 | 69.3 | 62.5 | -6.8 |
| Com. Ex. 92 | 69.3 | 59.4 | -9.9 |
| Com. Ex. 93 | 60.6 | 54.6 | -6.0 |

The change in voltage in the fuel cells of Examples 69-70 was smaller than that in the fuel cells of Comparative Examples 92-93, and equal to that in the fuel cell of Comparative Example 91 shown in Table 30. That is, it was confirmed that the fuel cell performance was improved by applying the trapping agent to have a suitable thickness.

As described above, the use of a trapping agent inhibits the deterioration in the fuel cell performance caused by the components leached out of the binder resin or the like through long-term operation. Therefore, the separator can be formed using an inexpensive resin having excellent workability and formability, improving the productivity of the separator of the fuel cell.

Examples 71-96 and Comparative Examples 94-138

(i) Manufacture of MEA

In the same manner as the foregoing Examples, an MEA was formed.

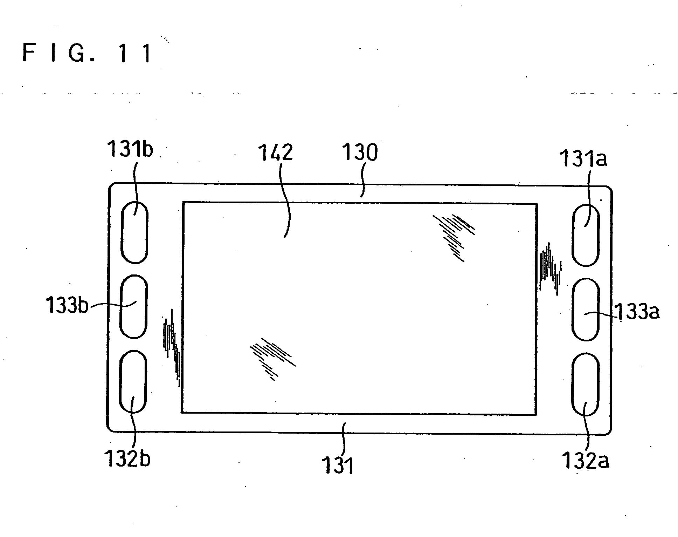

Then, in a hydrogen ion conductive polymer electrolyte membrane in the thus formed MEA, manifold holes for passing cooling water, a fuel gas and an oxidant gas were formed. FIG. 11 shows the MEA viewed from the anode side. Reference numeral 130 denotes the hydrogen ion conductive polymer electrolyte membrane. An anode 142 was bonded to one of the surfaces of the polymer electrolyte membrane 130. Further, the polymer electrolyte membrane 130 was provided with an oxidant gas inlet manifold hole 131a, an oxidant gas outlet manifold hole 131b, a fuel gas inlet manifold hole 132a, a fuel gas outlet manifold hole 132b, a cooling water inlet manifold hole 133a and a cooling water outlet manifold hole 133b.

(ii) Manufacture of separator

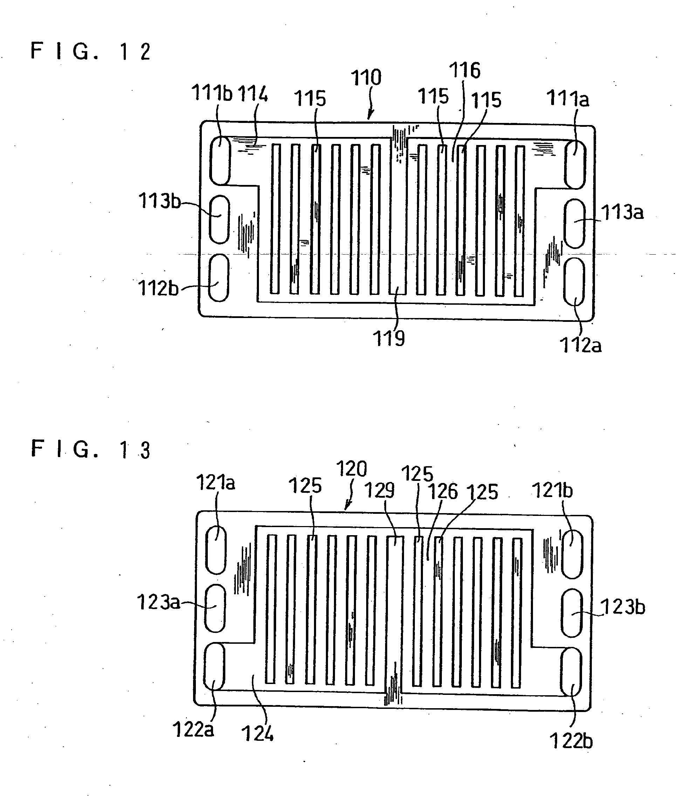

Vitreous carbon plates having a size of 10 cm x 20 cm and a thickness of 4 mm were cut to form gas flow channels, respectively, thereby obtaining a cathode-side separator 110 shown in FIG. 12 and an anode-side separator 120 shown in FIG. 13.

The cathode-side separator 110 was provided with an oxidant gas inlet manifold hole 111a, an oxidant gas outlet manifold hole 111b, a fuel gas inlet manifold hole 112a, a fuel gas outlet manifold hole 112b, a cooling water inlet manifold hole 113a and a cooling water outlet manifold hole 113b. On a surface of the separator 110 to be faced to the cathode, a recess 114 connecting the manifold holes 111a and 111b was formed. The recess 114 was divided in two connected parts by a partition 119, in each of which a plurality of parallel ribs 115 were formed to provide a gas flow channel 116.

In a like manner, the anode-side separator 120 was provided with an oxidant gas inlet manifold hole 121a, an oxidant gas outlet manifold hole 121b, a fuel gas inlet manifold hole 122a, a fuel gas outlet manifold hole 122b, a cooling water inlet manifold hole 123a and a cooling water outlet manifold hole 123b. On a surface of the separator 120 to be faced to the anode, a recess 124 connecting the manifold holes 122a and 122b was formed. The recess 124 was divided in two connected parts by a partition 129, in each of which a plurality of parallel ribs 125 were formed to provide a gas flow channel 126.

In the separators 110 and 120, the ribs 115 and 125 had a width of 1 mm. The gas flow channels 116 and 126 formed between the ribs had a width of 2 mm and a depth of 1.5 mm.

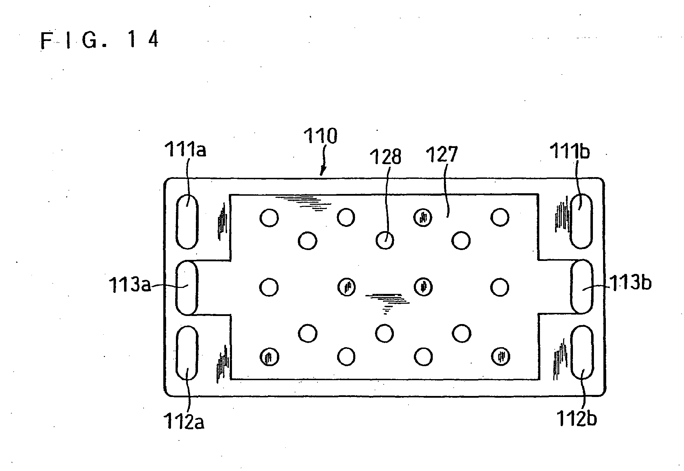

FIG. 14 is a view showing a rear surface of the cathode-side separator 110. On the rear surface of the separator 110, a recess 127 for forming a cooling water flow channel was formed, in which a plurality of ribs 128 were formed. The recess 127 had a depth of 1.5 mm. On the rear surface of the anode-side separator, a cooling water flow channel as the above was formed in the same manner as the above.

(iii) Manufacture of gasket

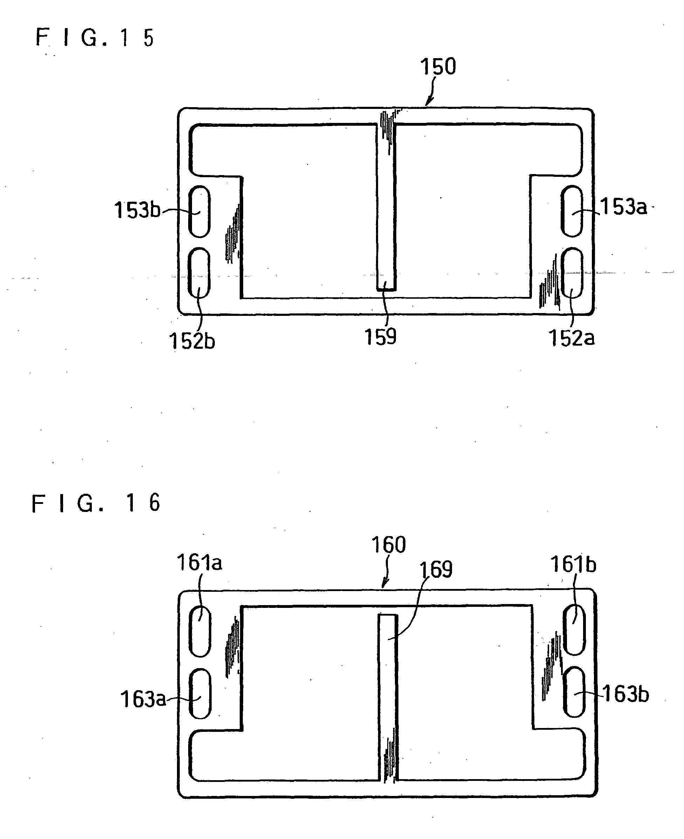

FIGs. 15 and 16 show a cathode-side gasket 150 and an anode-side gasket 160, respectively.

The cathode-side gasket 150 was the same in shape as the cathode-side separator 110 except that a portion corresponding to the recess 114 in the cathode-side separator 110 including the ribs 115 was cut away. The cathode-side gasket 150 was provided with fuel gas manifold holes 152a and 152b and cooling water manifold holes 153a and 153b.

In a like manner, the anode-side gasket 160 was also the same in shape as the anode-side separator 120 except that a portion corresponding to the recess 124 in the cathode-side separator 120 including the ribs 125 was cut away. The anode-side gasket 160 was provided with oxidant gas manifold holes 161a and 161b and cooling water manifold holes 163a and 163b.

(iv) Manufacture of polymer electrolyte fuel cell

The above-described MEA was sandwiched between the cathode-side separator 110 and the anode-side separator 120 with the intervention of the cathode-side gasket 150 and the anode-side gasket 160 to obtain a unit cell, which was stacked 100 times. Between adjacent unit cells, a cooling water flow channel was formed by the recesses formed on the rear surfaces of the cathode-side and anode-side separators 110 and 120.

In the following examples, the cooling section as described above was arranged between every two unit cells. Between adjacent cells where the cooling section was not provided, a single separator serving as the cathode-side separator of FIG. 12 on one surface and as the anode-side separator of FIG. 13 on the other surface was inserted in place of the combined separator formed of the above-described separators 110 and 120 having a cooling water flow channel.

Then, on each end of the cell stack, an end plate was arranged with the intervention of a current collector plate made of stainless steel and an insulating plate made of an insulating material. Then, they were secured with fastening rods at the both ends. The fastening pressure was 10 kgf/cm$^2$ per unit area of the separator.

(v) Leaching test for gasket

In this test, a specimen of 1 g was examined. If an object to be measured was a solid, such as a gasket, a cut piece of the molded gasket was used as a specimen. On the other hand, if an object to be measured was in a liquid state such as an adhesive, 1 g of the adhesive was applied to the surface of a heat resistant glass plate and dried to form a coating film, which was used as a specimen.

Pure water having electric conductivity of 0.6 to 0.8 μS/cm prepared by distilling ion exchange water was heated to 90°C in advance, 50 g of which was weighed and sealed in a hermetic container made of heat-resistant glass together with a desired specimen. Then, the hermetic container was heated in a water bath controlled at 95°C. After 50 hours of heating, the hermetic container was taken out of the water bath and left stand for 30 minutes. Then, with an ion chromatography method and a TOC measurement system, amounts of ion components and TOC in a supernatant were measured.

Using the materials shown in Tables 33-37, gaskets configured as shown in FIGs. 15 and 16 were formed. Details of the materials shown in Tables 33-37 were as follows.

Fluorocarbon rubber: Viton manufactured by DuPont
Butyl rubber: JSR BUTYL manufactured by JSR Corporation
Silicone rubber: KE600 manufactured by Shin-Etsu Chemical Co., Ltd.
Acrylic rubber: NOXTITE manufactured by NOK Corporation
EPDM (peroxide-vulcanized): JSR EP manufactured by JSR Corporation
Isoprene rubber (sulfur-vulcanized): JSR IR2200 manufactured by JSR Corporation

Some of the gaskets were cleaned by immersion in a cleaning medium under the following cleaning conditions.

A cleaning container having a width of 15 cm, a depth of 5 cm and a height of 30 cm was used to contain the gasket, in which the cleaning medium was poured such that the gasket was completely submerged in the cleaning medium. During the cleaning of the gasket, the cleaning medium was kept at a predetermined temperature for a predetermined period by heating with a heater placed outside the container.

The cleaning medium used was pure water prepared in the same manner as the one used in the leaching test or diluted sulfuric acid of 2 mol/L (pH = -0.6) or 1 mol/L (pH = -0.3) prepared by adding commercially available concentrated sulfuric acid of reagent grade to the pure water.

In the case of bubbling a gas containing carbon dioxide during the cleaning with pure water, a carbon dioxide gas was supplied from a liquefied carbon dioxide cylinder. The medium temperature during the cleaning was controlled to 60°C, 80°C or 100°C and the cleaning time was set to 5 hours, 10 hours or 15 hours.

The gaskets made of the materials shown in Tables 33 to 37 and cleaned under the conditions described in the same Tables were subjected to the leaching test. Then, the electron conductivities of the leaching test eluates were measured. Hereinafter, values shown in the following tables indicate a mixing ratio (weight ratio).

Table 33

| | Examples | 71 | 72 | 73 | 74 | 75 | 76 | 77 | 78 | 79 | 80 | 81 | 82 | 83 | 84 |
|---|---|---|---|---|---|---|---|---|---|---|---|---|---|---|---|
| Materials | Fluorocarbon rubber | 100 | 0 | 0 | 0 | 0 | 0 | 0 | 0 | 0 | 0 | 0 | 0 | 0 | 0 |
| | Butyl rubber | 0 | 100 | 0 | 0 | 0 | 0 | 100 | 0 | 0 | 0 | 0 | 100 | 0 | 0 |
| | Silicone rubber | 0 | 0 | 100 | 0 | 0 | 0 | 0 | 100 | 0 | 0 | 0 | 0 | 100 | 0 |
| | Acrylic rubber | 0 | 0 | 0 | 100 | 0 | 0 | 0 | 0 | 100 | 0 | 0 | 0 | 0 | 100 |
| | EPDM (peroxide-vulcanized) | 0 | 0 | 0 | 0 | 100 | 0 | 0 | 0 | 0 | 100 | 0 | 0 | 0 | 0 |
| | Isoprene rubber (sulfur-vulcanized) | 0 | 0 | 0 | 0 | 0 | 100 | 0 | 0 | 0 | 0 | 100 | 0 | 0 | 0 |
| Cleaning conditions | Cleaning | Not done | Done | Done | Done | Done | Done | Done | Done | Done | Done | Done | Done | Done | Done |
| | Cleaning medium | – | Pure $H_2O$ | Pure $H_2O$ | Pure $H_2O$ | Pure $H_2O$ | Pure $H_2O$ | Pure $H_2O$ | Pure $H_2O$ | Pure $H_2O$ | Pure $H_2O$ | Pure $H_2O$ | Pure $H_2O$ | Pure $H_2O$ | Pure $H_2O$ |
| | Gas bubbling | – | Not done | Not done | Not done | Not done | Not done | Not done | Not done | Not done | Not done | Not done | Not done | Not done | Not done |
| | Cleaning medium pH | – | 7 | 7 | 7 | 7 | 7 | 7 | 7 | 7 | 7 | 7 | 7 | 7 | 7 |
| | Medium temperature (°C) | – | 80 | 80 | 80 | 80 | 80 | 80 | 80 | 80 | 80 | 80 | 100 | 100 | 100 |
| | Cleaning time (hr) | – | 10 | 10 | 10 | 10 | 10 | 15 | 15 | 15 | 15 | 15 | 10 | 10 | 10 |

Table 34

| Examples | 85 | 86 | 87 | 88 | 89 | 90 | 91 | 92 | 93 | 94 | 95 | 96 |
|---|---|---|---|---|---|---|---|---|---|---|---|---|
| Fluorocarbon rubber | 0 | 0 | 0 | 0 | 0 | 0 | 0 | 0 | 0 | 0 | 0 | 0 |
| Butyl rubber | 0 | 0 | 100 | 0 | 0 | 0 | 0 | 100 | 0 | 0 | 0 | 0 |
| Silicone rubber | 0 | 0 | 0 | 100 | 0 | 0 | 0 | 0 | 100 | 0 | 0 | 0 |
| Acrylic rubber | 0 | 0 | 0 | 0 | 100 | 0 | 0 | 0 | 0 | 100 | 0 | 0 |
| EPDM (peroxide-vulcanized) | 100 | 0 | 0 | 0 | 0 | 100 | 0 | 0 | 0 | 0 | 100 | 0 |
| Isoprene rubber (sulfur-vulcanized) | 0 | 100 | 0 | 0 | 0 | 0 | 100 | 0 | 0 | 0 | 0 | 100 |
| Cleaning | Done | Done | Done | Done | Done | Done | Done | Done | Done | Done | Done | Done |
| Cleaning medium | Pure $H_2O$ | Pure $H_2O$ | $H_2SO_4$ | $H_2SO_4$ | $H_2SO_4$ | $H_2SO_4$ | $H_2SO_4$ | Pure $H_2O$ | Pure $H_2O$ | Pure $H_2O$ | Pure $H_2O$ | Pure $H_2O$ |
| Gas bubbling | Not done | Not done | Not done | Not done | Not done | Not done | Not done | Done | Done | Done | Done | Done |
| Cleaning medium pH | 7 | 7 | -0.3 | -0.3 | -0.3 | -0.3 | -0.3 | 4 | 4 | 4 | 4 | 4 |
| Medium temperature (°C) | 100 | 100 | 80 | 80 | 80 | 80 | 80 | 80 | 80 | 80 | 80 | 80 |
| Cleaning time (hr) | 10 | 10 | 10 | 10 | 10 | 10 | 10 | 10 | 10 | 10 | 10 | 10 |

Table 35

| Comparative Examples | | 94 | 95 | 96 | 97 | 98 | 99 | 100 | 101 | 102 | 103 | 104 | 105 | 106 | 107 | 108 |
|---|---|---|---|---|---|---|---|---|---|---|---|---|---|---|---|---|
| Materials | Fluorocarbon rubber | 0 | 0 | 0 | 0 | 0 | 0 | 0 | 0 | 0 | 0 | 0 | 0 | 0 | 0 | 0 |
| | Butyl rubber | 100 | 0 | 0 | 0 | 0 | 100 | 0 | 0 | 0 | 0 | 100 | 0 | 0 | 0 | 0 |
| | Silicone rubber | 0 | 100 | 0 | 0 | 0 | 0 | 100 | 0 | 0 | 0 | 0 | 100 | 0 | 0 | 0 |
| | Acrylic rubber | 0 | 0 | 100 | 0 | 0 | 0 | 0 | 100 | 0 | 0 | 0 | 0 | 100 | 0 | 0 |
| | EPDM (peroxide-vulcanized) | 0 | 0 | 0 | 100 | 0 | 0 | 0 | 0 | 100 | 0 | 0 | 0 | 0 | 100 | 0 |
| | Isoprene rubber (sulfur-vulcanized) | 0 | 0 | 0 | 0 | 100 | 0 | 0 | 0 | 0 | 100 | 0 | 0 | 0 | 0 | 100 |
| Cleaning conditions | Cleaning | Not done | Not done | Not done | Not done | Not done | Done | Done | Done | Done | Done | Done | Done | Done | Done | Done |
| | Cleaning medium | − | − | − | − | − | Pure $H_2O$ | Pure $H_2O$ | Pure $H_2O$ | Pure $H_2O$ | Pure $H_2O$ | Pure $H_2O$ | Pure $H_2O$ | Pure $H_2O$ | Pure $H_2O$ | Pure $H_2O$ |
| | Gas bubbling | − | − | − | − | − | Not done | Not done | Not done | Not done | Not done | Not done | Not done | Not done | Not done | Not done |
| | Cleaning medium pH | − | − | − | − | − | 7 | 7 | 7 | 7 | 7 | 7 | 7 | 7 | 7 | 7 |
| | Medium temperature (°C) | − | − | − | − | − | 80 | 80 | 80 | 80 | 80 | 60 | 60 | 60 | 60 | 60 |
| | Cleaning time (hr) | − | − | − | − | − | 5 | 5 | 5 | 5 | 5 | 5 | 5 | 5 | 5 | 5 |

Table 36

| Comparative Examples | | 109 | 110 | 111 | 112 | 113 | 114 | 115 | 116 | 117 | 118 | 119 | 120 | 121 | 122 | 123 |
|---|---|---|---|---|---|---|---|---|---|---|---|---|---|---|---|---|
| Materials | Fluorocarbon rubber | 0 | 0 | 0 | 0 | 0 | 0 | 0 | 0 | 0 | 0 | 0 | 0 | 0 | 0 | 0 |
| | Butyl rubber | 100 | 0 | 0 | 0 | 0 | 100 | 0 | 0 | 0 | 0 | 100 | 0 | 0 | 0 | 0 |
| | Silicone rubber | 0 | 100 | 0 | 0 | 0 | 0 | 100 | 0 | 0 | 0 | 0 | 100 | 0 | 0 | 0 |
| | Acrylic rubber | 0 | 0 | 100 | 0 | 0 | 0 | 0 | 100 | 0 | 0 | 0 | 0 | 100 | 0 | 0 |
| | EPDM (peroxide-vulcanized) | 0 | 0 | 0 | 100 | 0 | 0 | 0 | 0 | 100 | 0 | 0 | 0 | 0 | 100 | 0 |
| | Isoprene rubber (sulfur-vulcanized) | 0 | 0 | 0 | 0 | 100 | 0 | 0 | 0 | 0 | 100 | 0 | 0 | 0 | 0 | 100 |
| Cleaning conditions | Cleaning | Done | Done | Done | Done | Done | Done | Done | Done | Done | Done | Done | Done | Done | Done | Done |
| | Cleaning medium | Pure $H_2O$ | Pure $H_2O$ | Pure $H_2O$ | Pure $H_2O$ | Pure $H_2O$ | $H_2SO_4$ | $H_2SO_4$ | $H_2SO_4$ | $H_2SO_4$ | $H_2SO_4$ | $H_2SO_4$ | $H_2SO_4$ | $H_2SO_4$ | $H_2SO_4$ | $H_2SO_4$ |
| | Gas bubbling | Not done | Not done | Not done | Not done | Not done | Not done | Not done | Not done | Not done | Not done | Not done | Not done | Not done | Not done | Not done |
| | Cleaning medium pH | 7 | 7 | 7 | 7 | 7 | -0.6 | -0.6 | -0.6 | -0.6 | -0.6 | -0.3 | -0.3 | -0.3 | -0.3 | -0.3 |
| | Medium Temperature (°C) | 100 | 100 | 100 | 100 | 100 | 60 | 60 | 60 | 60 | 60 | 60 | 60 | 60 | 60 | 60 |
| | Cleaning time (hr) | 5 | 5 | 5 | 5 | 5 | 5 | 5 | 5 | 5 | 5 | 10 | 10 | 10 | 10 | 10 |

Table 37

| Comparative Examples | | 124 | 125 | 126 | 127 | 128 | 129 | 130 | 131 | 132 | 133 | 134 | 135 | 136 | 137 | 138 |
|---|---|---|---|---|---|---|---|---|---|---|---|---|---|---|---|---|
| Materials | Fluorocarbon rubber | 0 | 0 | 0 | 0 | 0 | 0 | 0 | 0 | 0 | 0 | 0 | 0 | 0 | 0 | 0 |
| | Butyl rubber | 100 | 0 | 0 | 0 | 0 | 100 | 0 | 0 | 0 | 0 | 100 | 0 | 0 | 0 | 0 |
| | Silicone rubber | 0 | 100 | 0 | 0 | 0 | 0 | 100 | 0 | 0 | 0 | 0 | 100 | 0 | 0 | 0 |
| | Acrylic rubber | 0 | 0 | 100 | 0 | 0 | 0 | 0 | 100 | 0 | 0 | 0 | 0 | 100 | 0 | 0 |
| | EPDM (peroxide-vulcanized) | 0 | 0 | 0 | 100 | 0 | 0 | 0 | 0 | 100 | 0 | 0 | 0 | 0 | 100 | 0 |
| | Isoprene rubber (sulfur-vulcanized) | 0 | 0 | 0 | 0 | 100 | 0 | 0 | 0 | 0 | 100 | 0 | 0 | 0 | 0 | 100 |
| Cleaning conditions | Cleaning | Done | Done | Done | Done | Done | Done | Done | Done | Done | Done | Done | Done | Done | Done | Done |
| | Cleaning medium | $H_2SO_4$ | $H_2SO_4$ | $H_2SO_4$ | $H_2SO_4$ | $H_2SO_4$ | Pure $H_2O$ | Pure $H_2O$ | Pure $H_2O$ | Pure $H_2O$ | Pure $H_2O$ | Pure $H_2O$ | Pure $H_2O$ | Pure $H_2O$ | Pure $H_2O$ | Pure $H_2O$ |
| | Gas bubbling | Not done | Not done | Not done | Not done | Not done | Done | Done | Done | Done | Done | Done | Done | Done | Done | Done |
| | Cleaning medium pH | -0.3 | -0.3 | -0.3 | -0.3 | -0.3 | 4 | 4 | 4 | 4 | 4 | 4 | 4 | 4 | 4 | 4 |
| | Medium Temperature (°C) | 100 | 100 | 100 | 100 | 100 | 60 | 60 | 60 | 60 | 60 | 100 | 100 | 100 | 100 | 100 |
| | Cleaning time (hr) | 5 | 5 | 5 | 5 | 5 | 10 | 10 | 10 | 10 | 10 | 5 | 5 | 5 | 5 | 5 |

Using the thus cleaned gaskets, polymer electrolyte fuel cells were fabricated, which were subjected to the continuous power generation test. More specifically, with the fuel cells kept at 85°C, a hydrogen gas heated and humidified to have a dew point at 83°C was supplied to one of the electrodes, while air heated and humidified to have a dew point at 78°C was supplied to the other electrode. As a result, open-circuit voltage of about 96 V was obtained in a nonloaded state where no current was output.

The cells were subjected to the continuous power generation test under the conditions of fuel utilization ratio of 85%, oxygen utilization ratio of 50% and current density of 0.7 A/cm$^2$. Average voltages after 24-hour power generation and 10,000-hour power generation were measured to calculate difference between the average voltages. Tables 38 to 40 show the results.

Table 38

| Ex. | Leaching test | | | | | | | Continuous power generation test | | |
|-----|---|---|---|---|---|---|---|---|---|---|
| | Electric conductivity μS/cm | TOC μg | NH$_4^+$ μg | F$^-$ μg | Cl$^-$ μg | Br$^-$ μg | SO$_3^{2-}$ μg | 24 hrs V | 10000 hrs V | Difference V |
| 71 | 892 | 258 | 15 | 53 | 2 | ND | ND | 69.0 | 62.0 | 7.1 |
| 72 | 11 | 291 | ND | ND | ND | ND | ND | 68.9 | 61.9 | 7.0 |
| 73 | 721 | 212 | 47 | ND | ND | ND | ND | 68.3 | 61.3 | 7.1 |
| 74 | 451 | 95 | ND | ND | 48 | ND | ND | 67.4 | 60.4 | 6.9 |
| 75 | 102 | 75 | ND | ND | ND | 17 | ND | 67.6 | 60.6 | 7.1 |
| 76 | 91 | 135 | ND | ND | ND | ND | 9 | 67.6 | 60.6 | 7.0 |
| 77 | 11 | 237 | ND | ND | ND | ND | ND | 67.8 | 60.8 | 7.0 |
| 78 | 509 | 182 | 33 | ND | ND | ND | ND | 68.1 | 61.1 | 6.8 |
| 79 | 249 | 95 | ND | ND | 26 | ND | ND | 67.3 | 60.3 | 6.9 |
| 80 | 80 | 75 | ND | ND | ND | 13 | ND | 67.1 | 60.1 | 7.0 |
| 81 | 65 | 145 | ND | ND | ND | ND | 6 | 68.0 | 61.0 | 6.8 |
| 82 | 11 | 273 | ND | ND | ND | ND | ND | 68.2 | 61.2 | 7.0 |
| 83 | 630 | 223 | 41 | ND | ND | ND | ND | 68.8 | 61.8 | 6.9 |
| 84 | 332 | 82 | ND | ND | 35 | ND | ND | 67.4 | 60.4 | 7.0 |
| 85 | 75 | 47 | ND | ND | ND | 12 | ND | 67.4 | 60.4 | 7.0 |
| 86 | 82 | 142 | ND | ND | ND | ND | 8 | 68.0 | 61.0 | 7.1 |
| 87 | 11 | 291 | ND | ND | ND | ND | ND | 68.4 | 61.4 | 7.0 |
| 88 | 449 | 213 | 29 | ND | ND | ND | ND | 67.4 | 60.4 | 6.9 |
| 89 | 442 | 79 | ND | ND | 47 | ND | ND | 68.8 | 61.8 | 7.0 |
| 90 | 102 | 91 | ND | ND | ND | 17 | ND | 68.1 | 61.1 | 6.9 |
| 91 | 91 | 163 | ND | ND | ND | ND | 9 | 68.9 | 61.9 | 7.0 |
| 92 | 11 | 291 | ND | ND | ND | ND | ND | 68.6 | 61.6 | 7.1 |
| 93 | 479 | 233 | 31 | ND | ND | ND | ND | 67.4 | 60.4 | 7.0 |
| 94 | 451 | 99 | ND | ND | 48 | ND | ND | 68.6 | 61.6 | 7.0 |
| 95 | 107 | 81 | ND | ND | ND | 18 | ND | 67.5 | 60.5 | 6.9 |
| 96 | 82 | 146 | ND | ND | ND | ND | 8 | 68.4 | 61.4 | 7.1 |
| ND: Not detected | | | | | | | | | | |

Table 39

| Com. Ex. | Leaching test | | | | | | | Continuous power generation test | | |
|---|---|---|---|---|---|---|---|---|---|---|
| | Electric conductivity µS/cm | TOC µg | NH₄⁺ µg | F⁻ µg | Cl⁻ µg | Br⁻ µg | SO₃²⁻ µg | 24 hrs V | 10000 hrs V | Difference V |
| 94 | 295 | 821 | 17 | ND | 3 | ND | ND | 67.5 | Ceased | - |
| 95 | 1129 | 289 | 71 | ND | 5 | ND | ND | 67.7 | 47.7 | 20.1 |
| 96 | 1062 | 253 | 18 | ND | 85 | ND | ND | 67.6 | 51.1 | 16.6 |
| 97 | 697 | 234 | 17 | ND | 3 | 75 | ND | 68.0 | 12.8 | 55.1 |
| 98 | 503 | 275 | 13 | ND | 2 | ND | 31 | 67.8 | 18.4 | 49.4 |
| 99 | 288 | 811 | 15 | ND | 4 | 1 | 1 | 67.3 | Ceased | - |
| 100 | 1137 | 314 | 71 | 1 | 4 | ND | ND | 68.9 | 45.1 | 23.8 |
| 101 | 1074 | 261 | 19 | ND | 84 | ND | ND | 68.8 | 52.5 | 16.3 |
| 102 | 717 | 241 | 16 | 1 | 4 | 75 | 1 | 68.8 | 13.3 | 55.5 |
| 103 | 477 | 264 | 10 | ND | 3 | ND | 31 | 68.4 | 19.5 | 48.9 |
| 104 | 301 | 814 | 15 | 1 | 4 | 1 | 1 | 67.4 | Ceased | - |
| 105 | 1143 | 322 | 72 | 1 | 4 | ND | ND | 67.6 | 41.6 | 25.9 |
| 106 | 1041 | 269 | 18 | ND | 83 | ND | 1 | 67.9 | 52.0 | 15.8 |
| 107 | 679 | 252 | 16 | ND | 2 | 75 | ND | 68.4 | 13.1 | 55.3 |
| 108 | 497 | 255 | 10 | 1 | 6 | ND | 30 | 67.0 | 19.1 | 48.0 |
| 109 | 335 | 819 | 16 | 1 | 5 | 1 | 2 | 68.8 | Ceased | - |
| 110 | 1142 | 305 | 72 | 1 | 3 | ND | ND | 67.7 | 45.6 | 22.1 |
| 111 | 1048 | 253 | 18 | 1 | 82 | ND | 1 | 68.8 | 53.1 | 15.6 |
| 112 | 654 | 262 | 13 | ND | 4 | 75 | ND | 67.8 | 12.5 | 55.2 |
| 113 | 509 | 254 | 10 | 3 | 4 | ND | 31 | 67.5 | 18.8 | 48.5 |
| 114 | Test abandoned due to increase in weight of the specimen by 1% or higher after cleaning | | | | | | | | | |
| 115 | | | | | | | | | | |
| 116 | | | | | | | | | | |
| 117 | | | | | | | | | | |
| 118 | | | | | | | | | | |
| 119 | 311 | 849 | 18 | 2 | 1 | ND | ND | 67.2 | Ceased | - |
| 120 | 1156 | 294 | 72 | ND | 6 | ND | ND | 68.8 | 48.1 | 20.8 |
| ND: Not detected | | | | | | | | | | |

Table 40

| Com. Ex. | Leaching test | | | | | | | Continuous power generation test | | |
|---|---|---|---|---|---|---|---|---|---|---|
| | Electric conductivity μS/cm | TOC μg | $NH_4^+$ μg | $F^-$ μg | $Cl^-$ μg | $Br^-$ μg | $SO_3^{2-}$ μg | 24 hrs V | 10000 hrs V | Difference V |
| 121 | 1061 | 260 | 18 | ND | 85 | ND | ND | 68.4 | 52.0 | 16.5 |
| 122 | 652 | 235 | 15 | ND | 2 | 75 | ND | 67.1 | 12.2 | 54.9 |
| 123 | 546 | 282 | 15 | 2 | 2 | ND | 31 | 68.4 | 19.9 | 48.6 |
| 124 | 327 | 827 | 19 | 2 | ND | ND | ND | 67.1 | Ceased | - |
| 125 | 1177 | 286 | 72 | 2 | 6 | ND | ND | 68.5 | 48.0 | 20.6 |
| 126 | 1048 | 266 | 18 | ND | 83 | ND | ND | 68.6 | 52.6 | 16.0 |
| 127 | 691 | 243 | 16 | ND | 4 | 75 | ND | 68.9 | 13.5 | 55.3 |
| 128 | 503 | 299 | 13 | ND | 1 | ND | 31 | 67.6 | 18.5 | 49.0 |
| 129 | 328 | 840 | 19 | ND | 2 | ND | ND | 67.7 | Ceased | - |
| 130 | 1220 | 280 | 73 | 3 | 6 | ND | 1 | 67.6 | 46.4 | 21.3 |
| 131 | 1045 | 275 | 17 | 2 | 83 | 1 | ND | 67.5 | 51.5 | 16.0 |
| 132 | 692 | 232 | 16 | ND | 4 | 75 | ND | 67.4 | 12.5 | 55.0 |
| 133 | 551 | 311 | 14 | 2 | 3 | ND | 31 | 67.9 | 15.6 | 52.4 |
| 134 | 331 | 841 | 19 | ND | 2 | ND | 1 | 68.4 | Ceased | - |
| 135 | 1242 | 284 | 72 | 5 | 8 | ND | 1 | 67.1 | 46.3 | 20.9 |
| 136 | 1070 | 291 | 16 | 3 | 84 | 1 | ND | 67.6 | 51.3 | 16.3 |
| 137 | 745 | 248 | 18 | 1 | 6 | 75 | ND | 68.5 | 13.3 | 55.1 |
| 138 | 541 | 309 | 14 | 2 | 2 | ND | 31 | 67.8 | 16.7 | 51.2 |
| ND: Not detected | | | | | | | | | | |

In Example 71, since the gasket was made of fluorocarbon rubber, the amounts of the organic substances and the ion species other than fluoride ions leached from the gasket were small. The change in voltage obtained from the fuel cell using the gasket in the continuous power generation test was 7.1 V. As shown in FIGs. 3 and 4, the fluoride ions did not deteriorate the performance of platinum used in the electrode. Accordingly, it was confirmed that the deterioration in the fuel cell performance due to other factors than the components leached out of the gasket was about 7.0 V.

In Comparative Examples 94-98, gaskets leaching a large amount of TOC, $NH_4^+$, $Cl^-$, $Br^-$ and $SO_3^{2-}$, respectively, were used to fabricate fuel cells, which were subjected to the continuous power generation test. As a result, voltage reduction of 16 V or more from the initial voltage was observed after 10,000 hours. In Comparative Example 94, the continuous power generation test was not performed for 10,000 hours due to the large voltage reduction. In view of these results, it was ascertained that the ions and the organic substance leached out of the gasket independently deteriorate the fuel cell performance.

As indicated by Example 71, the existence of the fluoride ions lowered a correlation between the electric conductivity of the leaching test eluate and the change in voltage of the fuel cell. Accordingly, the electric conductivity was not preferred as a criterion for judging the suitability of the gasket.

By cleaning the gaskets of Comparative Examples 94-98 under different cleaning conditions, gaskets of Examples 77-96 and Comparative Examples 99-138, which leached the components in different amounts, were obtained.

In comparison of the gaskets of Examples 71, 72, 77, 87 and 92 and Comparative Examples 94, 99, 104, 109, 114, 119, 124, 129 and 134 in terms of the amount of leached TOC, the fuel cell performance did not deteriorate when the amount of leached TOC was not more than 300 μg.

In comparison of the gaskets of Examples 71, 73, 78, 83, 88 and 93 and Comparative Examples 95, 100, 105, 115, 120, 125, 130 and 135 in terms of the amount of leached $NH_4^+$, the fuel cell performance did not deteriorate when the amount of leached $NH_4^+$ was not more than 50 μg.

In comparison of the gaskets of Examples 71, 74, 79, 84, 89 and 94 and Comparative Examples 96, 101, 106, 116, 121, 126, 131 and 136 in terms of the amount of leached $Cl^-$, the fuel cell performance did not deteriorate when the amount of leached $Cl^-$ was not more than 50 μg.

In comparison of the gaskets of Examples 71, 75, 80, 85, 90 and 95 and Comparative Examples 97, 102, 107, 117, 122, 127, 132 and 137 in terms of the amount of leached $Br^-$, the fuel cell performance did not deteriorate when the amount of leached $Br^-$ was not more than 20 μg.

In comparison of the gaskets of Examples 71, 76, 81, 86, 91 and 96 and Comparative Examples 98, 103, 108, 113, 118, 123, 128, 133 and 138 in terms of the amount of leached $SO_3^{2-}$, the fuel cell performance did not deteriorate when the amount of leached $SO_3^{2-}$ was not more than 10 μg.

From the above-described results, the allowable amounts of the ions and the organic substances were specified as the criterion. Further, the existence of TOC and fluoride ions lowered a correlation between the electric conductivity of the leaching test eluate and the change in voltage of the fuel cell. Accordingly, the electric conductivity was not preferred as a criterion for judging the suitability of the gasket.

From the results of Examples 72-96 and Comparative Examples 99-138, it was confirmed that the amounts of the leached components were controlled below the specified values as the criterion, respectively, by controlling the cleaning medium temperature at 80°C or higher and the cleaning time to 10 hours or longer.

It was also confirmed that the cleaning effect to the ammonium ions was enhanced by reducing pH of the cleaning medium by supplying sulfuric acid or carbon dioxide in pure water. Changes due to pH reduction were not observed as to the other leached components than the ammonium ions. However, in Comparative Examples 114-118 where the pH of the cleaning medium was reduced to -0.6, the gaskets varied in weight by 1 % or higher after the cleaning, i.e., chemical deterioration was caused in the gasket material. Therefore, the leaching test was not performed completely. From the above results, it was confirmed that the suitable pH of the cleaning medium was in the range of -0.3 to 7.0.

Examples 97-102 and Comparative Examples 139-143

Using materials shown in Tables 41 and 42, a gasket was formed under the same conditions as those adopted in the foregoing Examples, which was cleaned using an ultrasonic cleaner under the conditions described in Tables 41 and 42.

Table 41

| Examples | | 97 | 98 | 99 | 100 | 101 | 102 |
|---|---|---|---|---|---|---|---|
| Materials | EPDM (sulfur-vulcanized) | 100 | 100 | 100 | 100 | 100 | 100 |
| | Flame retardant A | 5 | 5 | 5 | 5 | 5 | 5 |
| Cleaning conditions | Cleaning | Done | Done | Done | Done | Done | Done |
| | Cleaning medium | Pure $H_2O$ | Pure $H_2O$ | Pure $H_2O$ | $H_2SO_4$ | $H_2SO_4$ | $H_2SO_4$ |
| | Medium temperature (°C) | 80 | 80 | 100 | 80 | 80 | 95 |
| | Cleaning time (hr) | 1 | 2 | 1 | 1 | 2 | 1 |

Table 42

| Comparative Examples | | 139 | 140 | 141 | 142 | 143 |
|---|---|---|---|---|---|---|
| Materials | EPDM (sulfur-vulcanized) | 100 | 100 | 100 | 100 | 100 |
| | Flame retardant A | 5 | 5 | 5 | 5 | 5 |
| | Cleaning | Not done | Done | Done | Done | Done |
| Cleaning conditions | Cleaning medium | - | Pure $H_2O$ | Pure $H_2O$ | $H_2SO_4$ | $H_2SO_4$ |
| | Medium temperature (°C) | - | 95 | 60 | 95 | 60 |
| | Cleaning time (hr) | - | 0.5 | 2 | 0.5 | 2 |

In Tables 41 and 42, the EPDM (sulfur-vulcanized) used was JSR EP manufactured by JSR Corporation and the flame retardant A (chlorinated paraffin) used was TOYOPARAX manufactured by Tosoh Corporation.

The ultrasonic cleaner used was an acid resistant ultrasonic cleaner PUC-0715 manufactured by Tokyo Ultrasonic Engineering Co., Ltd. This ultrasonic cleaner was resistant to strong acids such as hydrofluoric acid, aqua regia, hydrochloric acid and sulfuric acid. The cleaner had a vibrating plate having high corrosion resistance and being made of a pure PVDF resin containing no additives. For these reasons, the cleaner was suitably used in the present invention.

In the cleaning operation, the gasket was placed in the cleaner, the cleaning medium was poured into the cleaner so that the separator was completely submerged in the medium, and then the cleaner was turned on to operate for a desired period. The cleaning medium used was pure water the same as the one used in the above-described leaching test or diluted sulfuric acid of 1 mol/L prepared by adding commercially available concentrated sulfuric acid of reagent grade to the pure water. The temperature of the medium during the cleaning operation was controlled to 60°C, 80°C or 95°C by immersing in the cleaning medium a heater contained in a quartz tube to prevent leaching of impurities. The cleaning time was set to 0.5 hours, an hour or 2 hours.

The cleaned gasket was then subjected to the leaching test and the electric conductivity of the leaching test eluate was measured. Further, the cleaned gasket was used to form a fuel cell in the same manner as the above, which was subjected to the continuous power generation test under the same conditions as the above. Table 43 shows the results.

Table 43

| | Leaching test | | | | | | | Continuous power generation test | | |
|---|---|---|---|---|---|---|---|---|---|---|
| | Electric conductivity μS/cm | TOC μg | $NH_4^+$ μg | $F^-$ μg | $Cl^-$ μg | $Br^-$ μg | $SO_3^{2-}$ μg | 24 hrs V | 10000 hrs V | Difference V |
| Ex. 97 | 1538 | 289 | 45 | ND | 45 | 18 | 7 | 68.5 | 61.5 | 7.1 |
| Ex. 98 | 1095 | 268 | 35 | ND | 35 | 8 | ND | 68.0 | 61.0 | 7.0 |
| Ex. 99 | 1341 | 279 | 41 | ND | 38 | 15 | 2 | 67.3 | 60.3 | 6.9 |
| Ex. 100 | 1559 | 289 | 46 | ND | 43 | 18 | 7 | 68.4 | 61.4 | 6.9 |
| Ex. 101 | 1192 | 279 | 41 | ND | 33 | 8 | ND | 68.4 | 61.4 | 7.0 |
| Ex. 102 | 1375 | 295 | 45 | ND | 33 | 12 | 2 | 68.4 | 61.4 | 6.9 |
| Com. Ex. 139 | 4030 | 891 | 157 | ND | 129 | 35 | 31 | 67.5 | Ceased | - |
| Com. Ex. 140 | 3990 | 876 | 157 | ND | 126 | 34 | 30 | 67.9 | Ceased | - |
| Com. Ex. 141 | 3998 | 879 | 158 | ND | 126 | 34 | 30 | 68.0 | Ceased | - |
| Com. Ex. 142 | 4027 | 886 | 161 | ND | 124 | 34 | 30 | 67.7 | Ceased | - |
| Com. Ex. 143 | 4012 | 905 | 160 | ND | 123 | 35 | 29 | 68.2 | Ceased | - |

Table 43   (continued)

| | Leaching test | | | | | | | Continuous power generation test | | |
|---|---|---|---|---|---|---|---|---|---|---|
| | Electric conductivity µS/cm | TOC µg | $NH_4^+$ µg | $F^-$ µg | $Cl^-$ µg | $Br^-$ µg | $SO_3^{2-}$ µg | 24 hrs V | 10000 hrs V | Difference V |
| ND: Not detected | | | | | | | | | | |

In Comparative Example 139, all the components leached out of the gasket made of sulfur-vulcanized EPDM and chlorinated paraffin were over the specified values as the criterion. Further, the fuel cell fabricated using the gasket showed a remarkably rapid decrease in voltage, causing polarity inversion in some unit cells. Therefore, the test was abandoned before 10,000 hours was up.

From the results of Examples 97-99 and Comparative Examples 140-141, it was confirmed that the amounts of the leached components were controlled below the specified values as the criterion by cleaning the gasket in the cleaning medium of 80°C or higher for an hour or longer. Further, by applying ultrasonic oscillation, the extraction of the leached components was carried out 10 times faster than in the case of cleaning only by immersing the gasket in the cleaning medium.

Further, the results of Examples 100-102 and Comparative Examples 142-143 proved that the fuel cell performance did not deteriorate even if an aqueous sulfuric acid was used as the cleaning medium.

Examples 103-105 and Comparative Examples 146-147

Using materials described in Tables 44 and 45, a gasket was formed under the same conditions as those adopted in the foregoing Examples, which was cleaned by exposure to a humidified gas under the conditions described in Tables 44 and 45.

Table 44

| Examples | | 103 | 104 | 105 |
|---|---|---|---|---|
| Materials | EPDM (sulfur-vulcanized) | 100 | 100 | 100 |
| | Flame retardant A | 5 | 5 | 5 |
| Cleaning conditions | Cleaning | Done | Done | Done |
| | Cleaning gas | Air | $CO_2$ | Air |
| | Gas temperature (°C) | 80 | 80 | 120 |
| | Cleaning time (hr) | 10 | 10 | 10 |

Table 45

| Comparative examples | | 144 | 145 | 146 | 147 |
|---|---|---|---|---|---|
| Materials | EPDM (sulfur-vulcanized) | 100 | 100 | 100 | 100 |
| | Flame retardant A | 5 | 5 | 5 | 5 |
| Cleaning conditions | Cleaning | Done | Done | Done | Done |
| | Cleaning gas | Air | $CO_2$ | Air | $CO_2$ |
| | Gas temperature (°C) | 60 | 60 | 120 | 120 |
| | Cleaning time (hr) | 15 | 15 | 5 | 5 |

In Tables 44 and 45, the EPDM (sulfur-vulcanized) used was JSR EP manufactured by JSR Corporation and the flame retardant A (chlorinated paraffin) used was TOYOPARAX manufactured by Tosoh Corporation.

In the cleaning operation, 10 ml of pure water and the gasket were placed in a pressure-tight container of 15 cm in width, 5 cm in depth and 30 cm in height provided with two valves at the top and the bottom. Then, the container was sealed and left stand in a thermostatic bath kept at 80°C or 120°C for 5, 10 or 15 hours.

As a cleaning gas, carbon dioxide was used. Gas in the container was replaced with carbon dioxide by filling the container carrying the gasket with pure water and then introducing carbon dioxide from the top valve while draining the pure water from the bottom valve.

The cleaned gasket was subjected to the leaching test and the electric conductivity of the leaching test eluate was measured. Further, the cleaned gasket was used to fabricate a fuel cell in the same manner as the above, which was subjected to the continuous power generation test under the same conditions as described above. Table 46 shows the results.

Table 46

| | Leaching test | | | | | | | Continuous power generation test | | |
|---|---|---|---|---|---|---|---|---|---|---|
| | Electric conductivity μS/cm | TOC μg | $NH_4^+$ μg | $F^-$ μg | $Cl^-$ μg | $Br^-$ μg | $SO_3^{2-}$ μg | 24 hrs V | 10000 hrs V | Difference V |
| Ex. 103 | 1617 | 289 | 49 | 23 | 45 | 18 | 9 | 67.3 | 60.3 | 6.9 |
| Ex. 104 | 1540 | 291 | 46 | 23 | 42 | 18 | 9 | 68.3 | 61.3 | 7.0 |
| Ex. 105 | 1485 | 289 | 44 | 22 | 46 | 13 | 6 | 68.9 | 61.9 | 7.1 |
| Com. Ex. 144 | 3998 | 905 | 160 | ND | 123 | 36 | 29 | 68.8 | Ceased | - |
| Com. Ex. 145 | 4035 | 885 | 163 | ND | 122 | 36 | 28 | 67.5 | Ceased | - |
| Com. Ex. 146 | 4038 | 889 | 163 | ND | 121 | 37 | 29 | 67.8 | Ceased | - |
| Com. Ex. 147 | 3996 | 871 | 159 | ND | 122 | 36 | 30 | 67.3 | Ceased | - |
| ND: Not detected | | | | | | | | | | |

From the results of Examples 103-105, it was ascertained that the exposure of the gasket to the humidified gas of a suitable temperature for a suitable period allows reducing the amounts of the leached components below the specified values as the criterion.

Examples 103 and 105 and Comparative Examples 144 and 146 proved that the gas temperature of 80°C or higher and the cleaning time of 10 hours or longer were required to reduce the amounts of the leached components below the specified values. Further, the results of Example 104 and Comparative Examples 145 and 147 proved that an acidic gas such as a carbon dioxide gas was able to function as the cleaning gas without causing problems.

Examples 106-114 and Comparative Examples 148-156

Using a polymer material and an additive shown in Tables 47 and 48 in combination, a gasket was formed under the same conditions as those adopted in the foregoing Examples. As to liquid material such as liquid silicone rubber, the material was applied to the surface of the separator of FIG. 12 or 13 to form a coating film, which was used to form a gasket configured as shown in FIG. 15 or 16. The gasket was cleaned in the same manner as in Example 76 by immersing the gasket in pure water of 80°C for 10 hours. In use of a gas seal in a liquid state, it was applied to the separator surface to form a gasket integrally with the separator, which was submerged in the cleaning medium for the cleaning.

Table 47

| | Examples | 106 | 107 | 108 | 109 | 110 | 111 | 112 | 113 | 114 |
|---|---|---|---|---|---|---|---|---|---|---|
| Materials | EPDM (sulfur-vulcanized) | 100 | 0 | 0 | 0 | 0 | 0 | 0 | 0 | 0 |
| | Thermoplastic elastomer | 0 | 100 | 0 | 0 | 0 | 0 | 0 | 0 | 0 |
| | Butadiene rubber latex | 0 | 0 | 100 | 0 | 0 | 0 | 0 | 0 | 0 |
| | Liquid silicone rubber | 0 | 0 | 0 | 100 | 0 | 0 | 0 | 0 | 0 |
| | Liquid fluorocarbon rubber | 0 | 0 | 0 | 0 | 100 | 0 | 0 | 0 | 0 |
| | Fluorocarbon rubber | 0 | 0 | 0 | 0 | 0 | 100 | 100 | 100 | 100 |
| | Flame retardant A (chlorinated paraffin) | 0 | 0 | 0 | 0 | 0 | 5 | 0 | 0 | 0 |
| | Flame retardant B (tetrabromophthalic acid anhydride) | 0 | 0 | 0 | 0 | 0 | 0 | 5 | 0 | 0 |
| | Plasticizer A (phthalic acid ester) | 0 | 0 | 0 | 0 | 0 | 0 | 0 | 5 | 0 |
| | Plasticizer B (pyromellitic acid ester) | 0 | 0 | 0 | 0 | 0 | 0 | 0 | 0 | 5 |
| | Cleaning | Done | Done | Done | Done | Done | Done | Done | Done | Done |

Table 48

| | Comparative Examples | 148 | 149 | 150 | 151 | 152 | 153 | 154 | 155 | 156 |
|---|---|---|---|---|---|---|---|---|---|---|
| Materials | EPDM (sulfur-vulcanized) | 100 | 0 | 0 | 0 | 0 | 0 | 0 | 0 | 0 |
| | Thermoplastic elastomer | 0 | 100 | 0 | 0 | 0 | 0 | 0 | 0 | 0 |
| | Butadiene rubber latex | 0 | 0 | 100 | 0 | 0 | 0 | 0 | 0 | 0 |
| | Liquid silicone rubber | 0 | 0 | 0 | 100 | 0 | 0 | 0 | 0 | 0 |
| | Liquid fluorocarbon rubber | 0 | 0 | 0 | 0 | 100 | 0 | 0 | 0 | 0 |
| | Fluorocarbon rubber | 0 | 0 | 0 | 0 | 0 | 100 | 100 | 100 | 100 |
| | Flame retardant A (chlorinated paraffin) | 0 | 0 | 0 | 0 | 0 | 5 | 0 | 0 | 0 |
| | Flame retardant B (tetrabromophthalic acid anhydride) | 0 | 0 | 0 | 0 | 0 | 0 | 5 | 0 | 0 |
| | Plasticizer A (phthalic acid ester) | 0 | 0 | 0 | 0 | 0 | 0 | 0 | 5 | 0 |
| | Plasticizer B (pyromellitic acid ester) | 0 | 0 | 0 | 0 | 0 | 0 | 0 | 0 | 5 |
| | Cleaning | Not done | Not done | Not done | Not done | Not done | Not done | Not done | Not done | Not done |

Details of the materials shown in Tables 47 and 48 were as follows.

Fluorocarbon rubber: Viton manufactured by DuPont
EPDM (sulfur-vulcanized): JSR EP manufactured by JSR Corporation
Thermoplastic elastomer: Grilax A manufactured by Dainippon Ink and Chemicals, Incorporated
Butadiene rubber latex: JSR0700 manufactured by JSR Corporation
Liquid silicone rubber: KE manufactured by Shin-Etsu Chemical Co., Ltd.
Liquid fluorocarbon rubber: DAISEL G manufactured by DAIKIN INDUSTRIES, LTD.
Flame retardant A (chlorinated paraffin): TOYOPARAX manufactured by Tosoh Corporation
Flame retardant B (tetrabromophthalic acid anhydride): FM200 manufactured by Great Lakes Chemical Corporation Plasticizer A (phthalic acid ester): DOP manufactured by J-PLUS Co., Ltd.
Plasticizer B (pyromellitic acid ester): Trimex manufactured by Kao Corporation

The cleaned gasket was subjected to the leaching test and the electric conductivity of the leaching test eluate was measured. Further, the cleaned gasket was used to fabricate a fuel cell in the same manner as described above, which was subjected to the continuous power generation test under the same conditions as described above. Table 49 shows the results.

Table 49

| | Leaching test | | | | | | | Continuous power generation test | | |
|---|---|---|---|---|---|---|---|---|---|---|
| | Electric conductivity μS/cm | TOC μg | $NH_4^+$ μg | $F^-$ μg | $Cl^-$ μg | $Br^-$ μg | $SO_3^{2-}$ μg | 24 hrs V | 10000 hrs V | Difference V |
| Ex. 106 | 912 | 288 | 48 | ND | ND | 19 | 8 | 67.7 | 60.7 | 7.0 |
| Ex. 107 | 41 | 289 | 2 | ND | ND | ND | ND | 68.4 | 61.4 | 7.0 |
| Ex. 108 | 65 | 292 | 3 | ND | 1 | ND | ND | 67.0 | 60.0 | 7.1 |
| Ex. 109 | 630 | 279 | 41 | ND | ND | ND | ND | 68.1 | 61.1 | 6.9 |
| Ex. 110 | 647 | 289 | ND | 53 | ND | ND | ND | 67.4 | 60.4 | 7.0 |
| Ex. 111 | 891 | 192 | 1 | 43 | 38 | ND | ND | 68.5 | 61.5 | 7.0 |
| Ex. 112 | 546 | 188 | ND | 41 | ND | 8 | ND | 68.4 | 61.4 | 7.0 |
| Ex. 113 | 551 | 282 | ND | 45 | ND | ND | ND | 68.5 | 61.5 | 7.1 |
| Ex. 114 | 455 | 279 | ND | 37 | ND | ND | ND | 68.4 | 61.4 | 7.0 |
| Com. Ex. 148 | 2848 | 849 | 158 | ND | ND | 36 | 29 | 68.9 | Ceased | - |
| Com. Ex. 149 | 385 | 472 | 12 | ND | 21 | ND | ND | 68.4 | 18.5 | 49.9 |
| Com. Ex. 150 | 29 | 457 | ND | ND | 2 | ND | ND | 67.4 | 21.2 | 46.2 |

Table 49   (continued)

| | Leaching test | | | | | | | Continuous power generation test | | |
|---|---|---|---|---|---|---|---|---|---|---|
| | Electric conductivity µS/cm | TOC µg | NH$_4^+$ µg | F$^-$ µg | Cl$^-$ µg | Br$^-$ µg | SO$_3^{2-}$ µg | 24 hrs V | 10000 hrs V | Difference V |
| Com. Ex. 151 | 1249 | 792 | 82 | ND | ND | ND | ND | 67.5 | Ceased | - |
| Com. Ex. 152 | 1007 | 853 | ND | 83 | ND | ND | ND | 67.4 | Ceased | - |
| Com. Ex. 153 | 1482 | 289 | ND | 53 | 91 | ND | ND | 67.8 | 49.8 | 18.1 |
| Com. Ex. 154 | 984 | 278 | ND | 61 | ND | 45 | ND | 67.2 | 38.1 | 29.3 |
| Com. Ex. 155 | 659 | 453 | ND | 54 | ND | ND | ND | 67.5 | 22.4 | 45.1 |
| Com. Ex. 156 | 707 | 442 | ND | 58 | ND | ND | ND | 68.0 | 25.6 | 42.5 |
| ND: Not detected | | | | | | | | | | |

With use of the gaskets of Comparative Examples 148-156, which had not been cleaned, the fuel cell performance was drastically deteriorated by the leached components. On the other hand, the gaskets of Examples 106-114, which had been cleaned, showed reduction in amounts of the leached components, restraining the deterioration of the fuel cell performance to about 7 V.

As described above, according to the present invention, the amounts of TOC, ammonium ions, chloride ions, bromide ions and sulfite ions leached out of the gasket of the fuel cell are controlled below the predetermined specified values as the criterion. Therefore, the deterioration of the fuel cell performance through long-term continuous operation is inhibited.

Further, production of a gasket capable of inhibiting the performance deterioration is allowed by: using gasket materials that leach the above-mentioned components in amounts below the specified values as the criterion; cleaning the materials; or cleaning the gasket after the production thereof. Accordingly, the gasket can be formed using an inexpensive resin having excellent workability and formability, improving the productivity of the gasket of the fuel cell.

Although the present invention has been described in terms of the presently preferred embodiments, it is to be understood that such disclosure is not to be interpreted as limiting. various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

**Claims**

1. A polymer electrolyte fuel cell comprising: a hydrogen ion conductive polymer electrolyte membrane; a pair of electrodes sandwiching said membrane; a pair of conductive separators each having a gas flow channel means, one of which supplies a fuel gas to one of said electrodes and the other supplies an oxidant gas to the other electrode; and gaskets, each of which is sandwiched between said conductive separator and said hydrogen ion conductive polymer electrolyte membrane to surround the periphery of said electrode and said gas flow channel means, **characterized in that**

the material of the conductive separator and/or the gasket is selected such that a weight unit of one gram of said material under the condition that during a time period of not more than 50 hours, within which the material, the separator, the gasket or its or their semifinished product(s) are kept immersed in water of 80 to 100 °C, leaches into said water not more than 300 μg of TOC, not more than 50 μg of ammonium ions, not more than 50 μg of chloride ions, not more than 20 μg of bromide ions and not more than 10 μg of sulfite ions.

2. The polymer electrolyte fuel cell in accordance with claim 1, wherein said conductive separator or said gasket has been subjected to:

(1) immersion in water kept at 80°C or higher or an aqueous solution having pH of -0.3 or higher for 10 hours or longer;
(2) immersion in water kept at 80°C or higher while bubbling therein a gas containing carbon dioxide for 10 hours or longer;
(3) ultrasonic cleaning in water kept at 80°C or higher or an aqueous solution having pH of -0.3 or higher for an hour or longer; or
(4) exposure to a gas having a temperature of 80°C or higher and a relative humidity of 100% for 10 hours or longer.

3. The polymer electrolyte fuel cell in accordance with claim 1 or 2, wherein said conductive separator is used as an anode for electrolysis, said electrolysis being carried out in water or an aqueous solution having pH of -0.3 or higher in a hydrogen atmosphere for 0.5 hours or longer while applying to said anode a potential of +0.05 to +0.2 V relative to a spontaneous potential.

4. The polymer electrolyte fuel cell in accordance with claim 1 or 2, wherein said conductive separator is used as a cathode for electrolysis, said electrolysis being carried out in water or an aqueous solution having pH of -0.3 or higher for 0.5 hours or longer while applying to said cathode a potential of -0.1 V or lower relative to a spontaneous potential.

5. The polymer electrolyte fuel cell in accordance with any one of claims 1 to 4, wherein said conductive separator comprises a conductive carbon material and a binder resin, and a gram of said conductive carbon material, which is kept immersed in water of 80 to 100°C for 50 hours, leaches into said water not more than 300 μg of TOC, not more than 50 μ g of ammonium ions, not more than 50 μg of chloride ions, not more than 20 μg of bromide ions and not more than 10 μg of sulfite ions.

6. The polymer electrolyte fuel cell in accordance with claim 5, wherein said conductive carbon material has been subjected to:

(1) sintering in an inert gas atmosphere or a vacuum atmosphere of $10^{-1}$ Pa or lower at a temperature of 500°C or higher;
(2) immersion in water kept at 80°C or higher or an aqueous solution having pH of -0.3 or higher for 10 hours or longer;
(3) immersion in water kept at 80°C or higher while bubbling therein a gas containing carbon dioxide for 10 hours or longer;
(4) ultrasonic cleaning in water kept at 80°C or higher or an aqueous solution having pH of -0.3 or higher for an hour or longer; or
(5) exposure to a gas having a temperature of 80°C or higher and a relative humidity of 100% for 10 hours or longer.

7. The polymer electrolyte fuel cell in accordance with any one of claims 1 to 4, wherein said conductive separator comprises a conductive material and a binder resin, and a gram of said resin, which is kept immersed in water of 80 to 100°C for 50 hours, leaches into said water not more than 300 μg of TOC, not more than 50 μg of ammonium ions, not more than 50 μg of chloride ions, not more than 20 μg of bromide ions and not more than 10 μg of sulfite ions.

8. The polymer electrolyte fuel cell in accordance with any one of claims 1 to 7, wherein said gasket and said conductive separator are integrated in one piece.

9. The polymer electrolyte fuel cell in accordance with any one of claims 1 to 8, wherein said conductive separator comprises a conductive carbon material and a binder resin, and further contains a trapping agent capable of trapping at least either an anion or a cation.

10. The polymer electrolyte fuel cell in accordance with any one of claims 1 to 9, wherein said gasket comprises a trapping agent capable of trapping at least either an anion or a cation.

11. The polymer electrolyte fuel cell in accordance with claim 9, wherein said trapping agent comprises an organic ion exchanger, an inorganic ion exchanger, an organic adsorbent or an inorganic adsorbent and has a particle size distribution in which particles having a particle diameter of 0.1 to 10 μm account for 50 % or higher on the numeric basis.

12. The polymer electrolyte fuel cell in accordance with claim 9, 10 or 11, wherein said conductive separator contains 1 to 10 parts by weight of said trapping agent with respect to 100 parts by weight of said binder resin.

13. The polymer electrolyte fuel cell in accordance with any one of claims 9 to 12, wherein said trapping agent forms a coating film on the surface of said conductive separator.

14. The polymer electrolyte fuel cell in accordance with claim 13, wherein said coating film has a thickness of 1 to 50 μm.

15. Semifinished product of a polymer electrolyte fuel cell comprising: a hydrogen ion conductive polymer electrolyte membrane; a pair of electrodes sandwiching said membrane; a pair of conductive separators each having a gas flow channel means, one of which supplies a fuel gas to one of said electrodes and the other supplies an oxidant gas to the other electrode; and gaskets, each of which is sandwiched between said conductive separator and said hydrogen ion conductive polymer electrolyte membrane to surround the periphery of said electrode and said gas flow channel means, said semifinished product including said conductive separator and/or said gasket or semifinished components of said separator or said gasket, wherein
the material of the conductive separator and/or the gasket is selected such that a weight unit of one gram of said material under the condition that during a time period of not more than 50 hours, within which the material, the separator, the gasket or its or their semifinished product(s) are kept immersed in water of 80 to 100 °C, leaches into said water not more than 300 μg of TOC, not more than 50 μg of ammonium ions, not more than 50 μg of chloride ions, not more than 20 μg of bromide ions and not more than 10 μg of sulfite ions.

16. The semifinished product in accordance with claim 15, wherein said conductive separator or said gasket has been subjected to:

(1) immersion in water kept at 80°C or higher or an aqueous solution having pH of -0.3 or higher for 10 hours or longer;
(2) immersion in water kept at 80°C or higher while bubbling therein a gas containing carbon dioxide for 10 hours or longer;
(3) ultrasonic cleaning in water kept at 80°C or higher or an aqueous solution having pH of -0.3 or higher for an hour or longer; or
(4) exposure to a gas having a temperature of 80°C or higher and a relative humidity of 100% for 10 hours or longer.

17. The semifinished product in accordance with claim 15 or 16, wherein said conductive separator is used as an anode for electrolysis, said electrolysis being carried out in water or an aqueous solution having pH of -0.3 or higher in a hydrogen atmosphere for 0.5 hours or longer while applying to said anode a potential of +0.05 to +0.2 V relative to a spontaneous potential.

18. The semifinished product in accordance with claim 15 or 16, wherein said conductive separator is used as a cathode for electrolysis, said electrolysis being carried out in water or an aqueous solution having pH of -0.3 or higher for 0.5 hours or longer while applying to said cathode a potential of -0.1 V or lower relative to a spontaneous potential.

19. The semifinished product in accordance with any one of claims 15 to 18, wherein said conductive separator comprises a conductive carbon material and a binder resin, and a gram of said conductive carbon material, which is kept immersed in water of 80 to 100°C for 50 hours, leaches into said water not more than 300 μg of TOC, not more than 50 μg of ammonium ions, not more than 50 μg of chloride ions, not more than 20 μg of bromide ions

and not more than 10 µg of sulfite ions.

20. The semifinished product in accordance with claim 19, wherein said conductive carbon material has been subjected to:

(1) sintering in an inert gas atmosphere or a vacuum atmosphere of $10^{-1}$ Pa or lower at a temperature of 500°C or higher;
(2) immersion in water kept at 80°C or higher or an aqueous solution having pH of -0.3 or higher for 10 hours or longer;
(3) immersion in water kept at 80°C or higher while bubbling therein a gas containing carbon dioxide for 10 hours or longer;
(4) ultrasonic cleaning in water kept at 80°C or higher or an aqueous solution having pH of -0.3 or higher for an hour or longer; or
(5) exposure to a gas having a temperature of 80°C or higher and a relative humidity of 100% for 10 hours or longer.

21. The semifinished product in accordance with any one of claims 15 to 18, wherein said conductive separator comprises a conductive material and a binder resin, and a gram of said resin, which is kept immersed in water of 80 to 100°C for 50 hours, leaches into said water not more than 300 µg of TOC, not more than 50 µg of ammonium ions, not more than 50 µg of chloride ions, not more than 20 µg of bromide ions and not more than 10 µg of sulfite ions.

22. The semifinished product in accordance with any one of claims 15 to 21, wherein said gasket and said conductive separator are integrated in one piece.

23. The semifinished product in accordance with any one of claims 15 to 22, wherein said conductive separator comprises a conductive carbon material and a binder resin, and further contains a trapping agent capable of trapping at least either an anion or a cation.

24. The semifinished product in accordance with any one of claims 15 to 23, wherein said gasket comprises a trapping agent capable of trapping at least either an anion or a cation.

25. The semifinished product in accordance with claim 23, wherein said trapping agent comprises an organic ion exchanger, an inorganic ion exchanger, an organic adsorbent or an inorganic adsorbent and has a particle size distribution in which particles having a particle diameter of 0.1 to 10 µm account for 50 % or higher on the numeric basis.

26. The semifinished product in accordance with claims 23, 24 or 25, wherein said conductive separator contains 1 to 10 parts by weight of said trapping agent with respect to 100 parts by weight of said binder resin.

27. The semifinished product in accordance with any one of claims 23 to 26, wherein said trapping agent forms a coating film on the surface of said conductive separator.

28. The semifinished product in accordance with claim 27, wherein said coating film has a thickness of 1 to 50 µm.

29. A polymer electrolyte fuel cell comprising: a hydrogen ion conductive polymer electrolyte membrane; a pair of electrodes sandwiching said membrane; a pair of conductive separators each having a gas flow channel means, one of which supplies a fuel gas to one of said electrodes and the other supplies an oxidant gas to the other electrode; and gaskets, each of which is sandwiched between said conductive separator and said hydrogen ion conductive polymer electrolyte membrane to surround the periphery of said electrode and said gas flow channel means, **characterized in that**
said conductive separator comprises a conductive carbon material and a binder resin, and further contains a trapping agent capable of trapping at least either an anion or a cation, and/or
said gasket comprises a trapping agent capable of trapping at least either an anion or a cation.

30. The polymer electrolyte fuel cell in accordance with claim 29, wherein said trapping agent comprises an organic ion exchanger, an inorganic ion exchanger, an organic adsorbent or an inorganic adsorbent and has a particle size distribution in which particles having a particle diameter of 0.1 to 10 µm account for 50 % or higher on the numeric basis.

31. The polymer electrolyte fuel cell in accordance with claim 29 or 30, wherein said conductive separator contains 1 to 10 parts by weight of said trapping agent with respect to 100 parts by weight of said binder resin.

32. The polymer electrolyte fuel cell in accordance with claims 29, 30 or 31, wherein said trapping agent forms a coating film on the surface of said conductive separator.

33. The polymer electrolyte fuel cell in accordance with claim 32, wherein said coating film has a thickness of 1 to 50 μm.

34. A method for manufacturing the polymer electrolyte fuel cell of claim 12 to 14 and 29 to 33, comprising the steps of mixing a conductive carbon material, a binder resin and a trapping agent capable of trapping at least either an anion or a cation and molding the obtained mixture into a conductive separator by compression molding, injection molding or transfer molding.

F I G. 1

F I G. 2

FIG. 3

FIG. 4

F I G. 5

F I G. 6

F I G. 7

F I G. 8

F I G. 9

F I G. 1 0

FIG. 11

EP 1 453 127 A2

FIG. 12

FIG. 13

73

F I G. 1 4

F I G. 1 5

150

153b

153a

152b

159

152a

F I G. 1 6

161a

160

169

161b

163a

163b